(19) Europäisches Patentamt / European Patent Office / Office européen des brevets

(11) **EP 1 880 917 A1**

(12) **EUROPEAN PATENT APPLICATION**
published in accordance with Art. 153(4) EPC

(43) Date of publication:
**23.01.2008 Bulletin 2008/04**

(21) Application number: **07715022.5**

(22) Date of filing: **27.02.2007**

(51) Int Cl.:
**B62D 1/18** *(2006.01)*

(86) International application number:
**PCT/JP2007/053687**

(87) International publication number:
**WO 2007/102348 (13.09.2007 Gazette 2007/37)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **03.03.2006 JP 2006058385
13.07.2006 JP 2006193412
21.09.2006 JP 2006255515
29.09.2006 JP 2006266467
20.11.2006 JP 2006312348**

(71) Applicant: **NSK Ltd.
Shinagawa-ku
Tokyo (JP)**

(72) Inventors:
• **IWAKAWA, Masato**
  c/o NSK Ltd.,
  **Gunma 371-8528 (JP)**
• **CHIKARAISHI, Kazuo**
  c/o NSK Ltd.,
  **Gunma 371-8528 (JP)**
• **TATEWAKI, Osamu**
  c/o NSK Ltd.,
  **Gunma 371-8528 (JP)**

(74) Representative: **Grünecker, Kinkeldey,
Stockmair & Schwanhäusser
Anwaltssozietät
Maximilianstrasse 58
80538 München (DE)**

(54) **STEERING DEVICE**

(57)    Both ends of a screw shaft 35 are supported on a vehicle body side bracket 19 so that only rotation is allowed. The screw shaft 35 is rotated by an electric motor 28. A nut member 44 is threadedly engaged with an intermediate portion of the screw shaft 35. The nut member 44 is held on inside of a nut holder 43. The nut holder 43 and nut member 44 are allowed to be shifted each other in longitudinal direction of the nut holder 43 which is perpendicular to both the shaft portion extending parallel to oscillation center axis of a steering column 4a and the axial direction of the screw shaft 35. The nut holder 43 is supported on the steering column 4a so as to be rotated about the shaft portion of the nut holder 43 relative to the steering column 4a.

FIG. 7

**Description**

TECHNICAL FIELD

The present invention relates to a steering apparatus which can adjust the tilt position and/or telescopic position of a steering wheel using an electric motor as a power source.

BACKGROUNG ART

It is necessary to adjust the tilt position and/or telescopic position of a steering wheel using an electric motor as a power source according to the build and driving position of a driver. There is known a steering apparatus structured such that, by rotating an electric motor, a feed screw shaft is rotated to linearly move a feed nut threadedly engaged with the feed screw shaft, thereby adjusting the tilt position and/or telescopic position of a steering wheel.

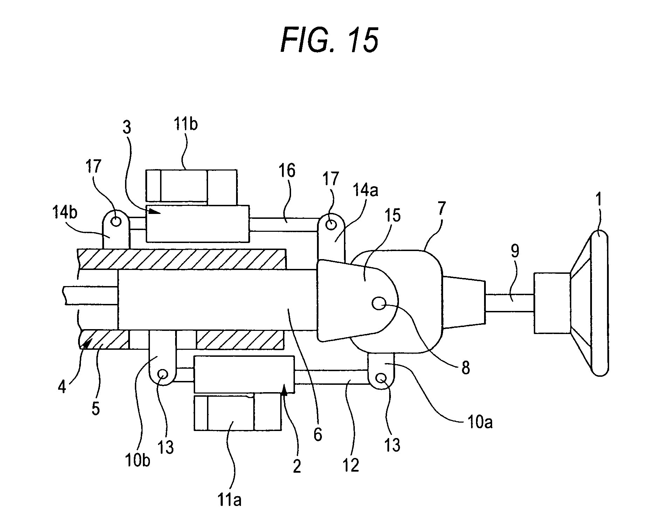

There is also conventionally known a tilt type electric steering column apparatus which adjusts the height position of a steering apparatus by driving an electric motor based on a switch operation. For example, Fig. 15 shows a tilt type electric steering apparatus disclosed in the patent reference 1. This steering apparatus includes an electric telescopic mechanism which can adjust the front and rear positions as well as height position of a steering wheel 1 using first and second electric actuators 2 and 3.

In a structure disclosed in the patent reference 1, a steering column 4 is composed of a lower column 5, an intermediate column 6 and an upper column 7, while the intermediate column 6 is inserted into the inside of the lower column 5. On the rear end portion (in Fig. 15, the right end portion) of the intermediate column 6, there is supported the upper column 7 in such a manner that it can be oscillated and shifted about a horizontally extending horizontal axis 8. Into the inside of the intermediate column 6, there is inserted a steering shaft 9; and, inside the upper column 7, there is stored the universal joint (not shown) of a steering shaft 9.

To the upper column 7 and the inserted portion of the intermediate column 6 into the inside of the lower column 5, there are fixed brackets 10a and 10b, respectively. The first electric actuator 2 is interposed between these two brackets 10a and 10b. The first electric actuator 2, when it is driven by an electric motor 11a, can adjust the expansion and contraction amount of an expansion rod 12. Also, the two end portions of the expansion rod 12 are pivotally supported respectively by their associated pins 13 and 13 on the pair of brackets 10a and 10b respectively fixed to the upper column 7 and intermediate column 6.

Also, to a fork portion 15 formed in the rear end portion of the intermediate column 6 and lower column 5, there are fixed second brackets 14a and 14b, respectively, while the second electric actuator 3 is interposed between these two second brackets 14a and 14b. The second electric actuator 3 also, similarly to the first electric actuator 2, when it is driven by its associated electric motor 11b, can adjust the expansion and contraction amount of an expansion rod 16. Also, the two end portions of the expansion rod 16 are pivotally supported by their associated pins 17 and 17 respectively on the fork portion 15, which is formed in the projecting portion of the intermediate column 6 from the lower column 5, and a pair of second brackets 14a and 14b fixed to the lower column 5.

In the above-structured conventional tilt type electric steering apparatus disclosed in the patent reference 1, to adjust the height position of the steering wheel 1, by driving the electric motor 11 a of the first electric actuator 2, the expansion rod 12 may be expanded and contracted (moved in the axial direction). As a result of this, the upper column 7 is oscillated about a horizontal axis 8, whereby the height of the steering wheel 1 is caused to change. Also, to adjust the back-and-forth position of the steering wheel 1, by driving the electric motor 11b of the second electric actuator 3, the expansion rod 16 may be expanded and contracted (moved in the axial direction). As a result of this, the distance between the upper column 7 and lower column 5 is caused to vary, whereby the back-and-forth position of the steering wheel 1 is caused to vary.

However, in the above-mentioned conventional structure disclosed in the patent reference 1, there are found the following problems to be solved. That is, in this conventional structure, when adjusting the height position of the steering wheel 1, the upper column 7 is oscillated about the horizontal axis 8 and the rear end portion of the upper column 7 is moved while drawing an arc. For this reason, the conventional structure employs a structure using two or more link mechanisms in which the brackets 10a and 10b are respectively fixed to the upper and intermediate columns 7 and 6 formed separately from each other, and the end portions of the expansion rod 12 are pivotally supported on the two brackets 10a and 10b by pins 13 and 13, respectively. Accordingly, in the above-mentioned conventional structure, there is found a problem that the number of parts increases, the rigidity of the expansion rod 12 functioning as a composing part to constitute an oscillation shift mechanism for oscillate the steering column 4 is lowered, and the size of the tilt type electric steering column apparatus tends to increase.

On the other hand, there can also be expected a structure in which the case of an electric motor is fixed to the intermediate column 6 and, between the rotation shaft of the electric motor and upper column 7, there is interposed a feed screw mechanism composed of a screw shaft and a nut member. However, in this structure, there is raised another problem. That is, while the moving direction of the nut member with respect to the screw shaft is a linear direction, the moving direction of the rear end portion of the upper column 7 provides an arc direction about the horizontal axis 8, whereby these two directions shift from each other. Therefore, an unreasonable force is applied to the oscillation shift mechanism of the steering column and, in a bad case, the oscillation shift mechanism is unable to function properly. Also, in this structure, there is a possibility that, in order to reduce the working cost of the screw shaft, the male screw portion of the screw shaft can be formed as a rolled thread. However, this makes it difficult to enhance the working precision of the male screw portion and, as a result of this, the nut member tends to shift with respect to the screw shaft while oscillating. This raises a problem that, when the tilt type electric steering apparatus is in operation, a noise offensive to the ear called a groaning sound is easy to occur in the threadedly engaged portion of the screw shaft and nut member.

Also, in the above-mentioned conventional structure, when the expansion rod 12 of the first electric actuator is supported in a cantilevered manner with respect to the upper column 7 and thus a bending load is applied to the expansion rod 12, there is a possibility that resistance acting on the expansion and contraction portion of the expansion rod 12 can vary and, when the first electric actuator 2 is in operation, a noise offensive to the ear called a groaning noise can occur.

Conventionally, as the electric steering apparatus, there is also known an electric steering apparatus which is disclosed in the patent reference 2. In the conventional electric steering apparatus disclosed in the patent reference 2, since a feed screw shaft for tilt driving is composed of one feed screw shaft, the feed screw shaft is disposed on the right or left side with respect to the center axis of a column. Therefore, in the tilt position adjusting operation, moment of rotation is applied to the column about the center axis of the column due to the thrust force of a feed nut which is engaged with the side surface of the column on one side thereof.

When such moment of rotation is applied to the column, tilt sliding surface between the column and a vehicle body mounting bracket as well as on the feed nut are caused to wear partially. As a result of this, not only the tilt position adjustment cannot be carried out smoothly but also the durability of the tilt sliding surface and tilt drive mechanism is lowered.

Also, conventionally, as a steering apparatus including a feed screw mechanism which adjusts the tilt position of the steering apparatus using the rotation of an electric motor, there are known steering apparatus which are disclosed in the patent reference 3 and patent reference 1 respectively. According to the feed screw mechanism of the steering apparatus disclosed in the patent reference 3, since, while a feed nut moves linearly, a column moves while drawing an arc shape with a tilt center shaft as a fulcrum, these two movements shift from each other in the axial direction of the column.

To solve this problem, there is provided a method in which, for smooth execution of the tilt position adjustment, a nut holder is connected to a feed nut in such a manner that it can be slided with respect to the feed nut in the center axial direction of the column, and the feed nut is connected to the column through the nut holder. According to this method, since the position, where the feed nut is connected to the column, and the center position of the feed nut can be shifted from each other in the axial direction of the column, there can be absorbed the shift between the movements of the feed nut and column in the axis direction of the column.

However, in order that the feed nut and nut holder can be slided smoothly with respect to each other in the axial direction of the column, there is necessary a proper clearance between the relative sliding surfaces of the feed nut and nut holder. Also, when the feed nut and nut holder are different in material from each other, in some cases, with a difference between their dimensional variations caused by temperature variations taken into consideration, in a room temperature state, there is provided a certain degree of clearance between the sliding surfaces of the feed nut and nut holder.

However, when there exists a clearance between the sliding surfaces of the feed nut and nut holder, a driver feels a backlash in the steering apparatus when driving a vehicle while holding the steering wheel of the steering apparatus, a feeling of the rigidity of the steering apparatus is lowered to thereby worsen the steering feeling.

Also, in this type of electric steering apparatus, in order not only to secure the rigidity of the steering apparatus but also to attain the smooth tilt position adjustment, there is removed a backlash between the tilt sliding portions of the column and vehicle body mounting bracket.

In the patent reference 2, there is disclosed an electric steering apparatus which can adjust a clearance between the tilt sliding portions of the column and vehicle body mounting upper bracket. That is, according to the electric steering apparatus disclosed in the patent reference 2, a spacer is inserted into a clearance between the tilt sliding portions of the column and vehicle body mounting upper bracket, and the spacer is pressed against the column using an adjusting screw, thereby removing a backlash in the clearance between the tilt sliding portions.

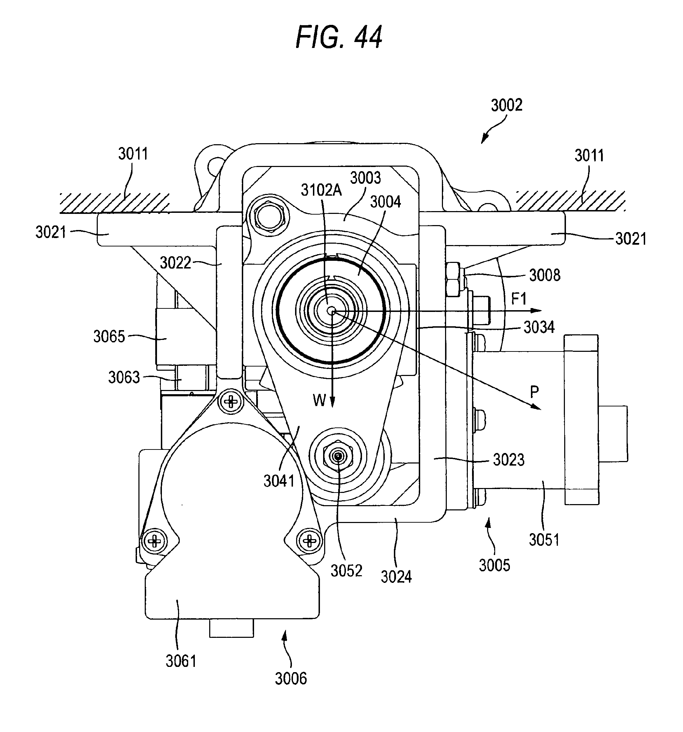

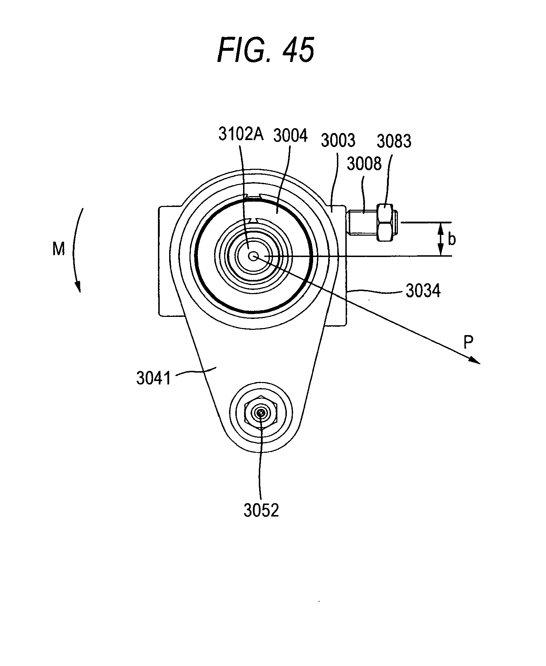

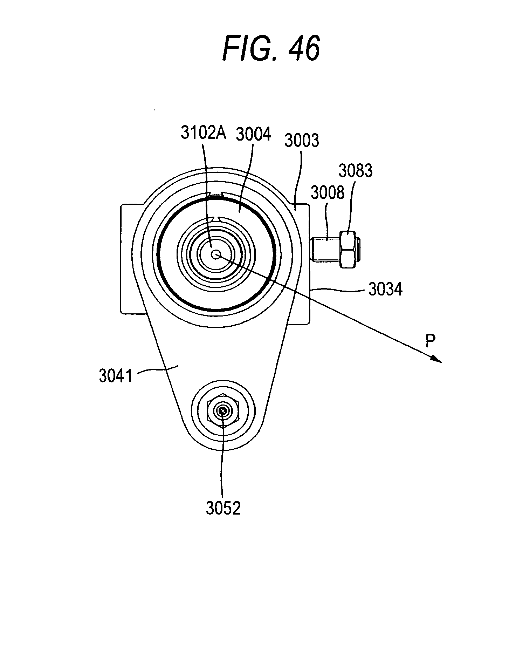

Now, Fig. 44 is a side view of a conventional electric steering apparatus which uses a single adjusting screw for backlash removal. Fig. 45 is an explanatory view of the conventional electric steering apparatus, in which only the column and adjusting screw are taken out from Fig. 44. Fig. 46 is an explanatory view of the conventional electric steering apparatus, showing a state in which the axis of the adjusting screw and the axis of the column are aligned with each other, corresponding to Fig. 45.

As shown in Figs. 44 to 46, a vehicle body mounting upper bracket 3002, which is provided on the rear side of a vehicle body 3011, includes an upper plate 3021, while the upper plate 3021 is fixed to the vehicle body 3011. The vehicle body front side of a lower column 3003 is supported through a tilt center shaft (not shown) on the vehicle body 3011 in such a manner that the tilt position thereof can be adjusted (that is, it can be oscillated in a plane which intersects at right angles to the sheet surface of Fig. 44 and extends in a direction parallel to the vertical direction of Fig. 44).

With the inner periphery of the lower column 3003, there is fitted an upper column 3004 in such a manner that it can be adjusted in its telescopic position (that is, it can be slid in a direction perpendicular to the sheet surface of Fig. 44). On the upper column 3004, there is rotatably supported an upper steering shaft 3102A; and, to the vehicle body rear side (in the sheet surface of Fig. 44, this side) end portion of the upper steering shaft 3102A, there is fixed a steering wheel (not shown).

On the lower column 3003, there is rotatably supported a lower steering shaft (not shown), while the lower steering shaft is spline fitted with the upper steering shaft 3102A. Therefore, regardless of the telescopic position of the upper column 3004, the rotation of the upper steering shaft 3102A is transmitted to the lower steering shaft and is then connected through an intermediate shaft (not shown) to a steering gear, thereby being able to change the steering angle of a wheel.

On the upper plate 3021 of the vehicle body mounting upper bracket 3002, there are provided a left side plate 3022 and a right side plate 3023 which are parallel to each other and respectively extend downward from the upper plate 3021. By and between the respective inner surfaces of the left side and right side plates 3022 and 3023, there are held the right and left side surfaces of the lower column 3003 in such a manner that the lower column 3003 can be tilt slided.

Into the right side plate 3023 of the vehicle body mounting upper bracket 3002, there is screwed an adjusting screw 3008; and, the leading end of the adjusting screw 3008 is pressed against the right side surface 3034 of the lower column 3003 to thereby remove a backlash in a clearance between the tilt sliding portions of the upper bracket 3002 and lower column 3003. Also, the lower ends of the left side and right side plates 3022 and 3023 are connected together by a lower plate 3024, whereby the upper plate 3021, left side plate 3022, right side plate 3023 and lower plate 3024 cooperate together in forming a closed rectangular shape.

On the outer periphery of the lower surface of the lower column 3003, there is mounted a telescopic drive mechanism 3005 which is used to carry out a telescopic position adjustment. Also, downwardly of the left side and right side plates 3022 and 3023 of the vehicle mounting upper bracket 3002, there is mounted a tilt drive mechanism 3006 which is used to execute a tilt position adjustment.

A worm mounted on the output shaft of a tilting motor 3061 for the tilt drive mechanism 3006 is in meshing engagement with a worm wheel mounted on the lower portion of a feed screw shaft 3063 to thereby transmit the rotation of the tilting motor 3061 to the feed screw shaft 3063.

With a male screw provided on the outer periphery of the feed screw shaft 3063, there is threadedly engaged a feed nut 3065. On the feed nut 3065, there is integrally provided a tilt drive force transmission projection (not shown), while the leading end portion of the tilt drive force transmission projection is fitted into an engaging hole formed in the lower column 3003.

As the feed screw shaft 3063 is rotated, the feed nut 3065 and tilt drive force transmission projection respectively move linearly in the vertical direction in Fig. 44. And, with the tilt center shaft as a fulcrum, the lower column 3003 oscillates along an arc-shaped locus in the tilt position adjusting operation.

On the outer periphery of the lower surface of the lower column 3003, there is mounted a telescoping motor 3051. To the outer periphery of the lower surface of the lower column 3003, there is fixed a feed screw shaft 3052 parallel to the center axis of the lower column 3003, while the vehicle body rear end (that is, this side on the sheet surface of Fig. 44) of the feed screw shaft 3052 is connected to the lower end of a flange 3041 which is fixed to the vehicle body rear end of the upper column 3004.

The rotation of a worm mounted on the output shaft (not shown) of the telescoping motor 3051 is transmitted to a worm wheel (not shown) to thereby rotate a feed nut (not shown) which is in threaded engagement with the feed screw shaft 3052. As the feed nut rotates, the feed screw shaft 3052 moves reciprocatingly (that is, it moves in a direction perpendicular to the sheet surface of Fig. 44) to thereby adjust the telescopic position of the upper column 3004.

While a driver is driving a vehicle, if the vehicle turns the curve, as shown in Figs. 44 and 45, gravity W due to the mass of the electric steering apparatus acts downward in the sheet surfaces of these figures. Also, centrifugal force F1 acting on the driver is applied in the horizontal direction in the sheet surfaces of these figures through the hands of the driver holding the steering wheel. A resultant force P of the gravity W and centrifugal force F1 acts obliquely downward in the sheet surface of these figures.

Owing to the resultant force P, moment M (see Fig. 45), which is proportional to a distance b between the axes of the adjusting screw 3008 and lower column 3003, acts onto the lower column 3003 to thereby shift the lower column 3003, which results in the worsened steering feeling.

As shown in Fig. 46, at a position where the axis of the lower column 3003 is consistent with the axis of the adjusting screw 3008, no bending moment acts on the lower column 3003; and, the position, where no bending moment acts, is limited to only one portion of a tilt position adjusting stroke.

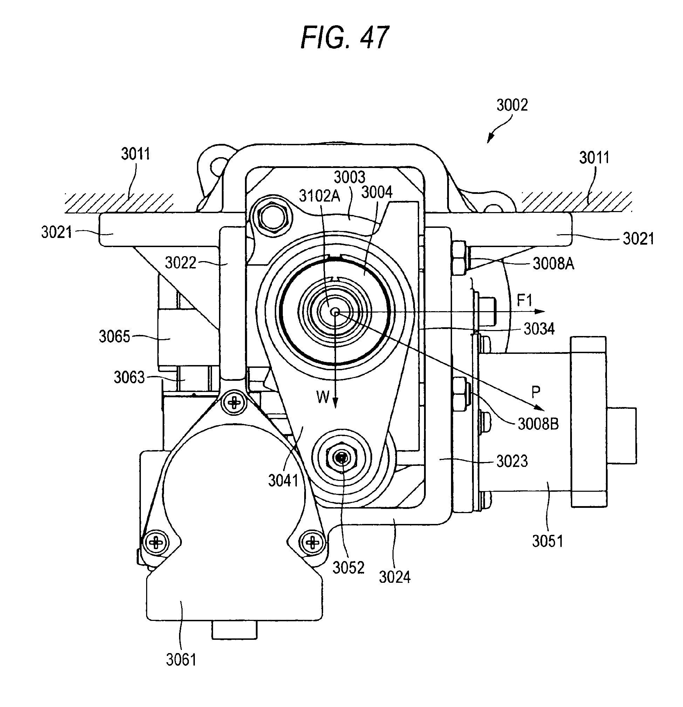

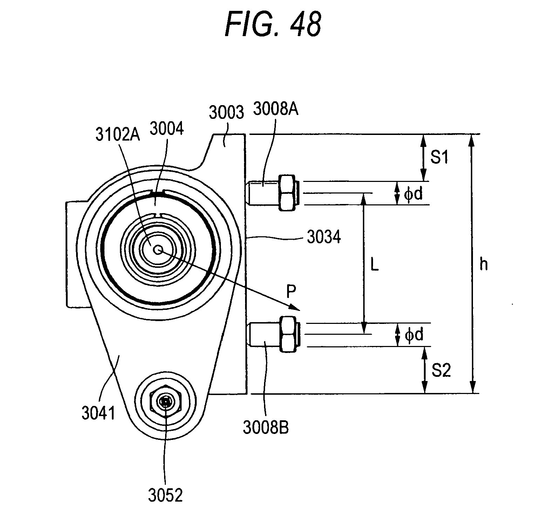

In Figs. 47 and 48, there is shown an example in which, in order to solve the problems found in the conventional electric steering apparatus shown in Figs. 44 to 46, there are used two adjusting screws, and the distance between the two adjusting screws in the vertical direction is set wide, thereby preventing the moment of bending M from acting on the lower column 3003. Here, Fig. 47 is a side view of a conventional electric steering apparatus which uses two adjusting screws for removing a backlash, and Fig. 48 is an explanatory view of this conventional electric steering apparatus, in which a column and adjusting screws are taken out from Fig. 47.

As shown in Figs. 47 and 48, where the height of the right side surface 3034 of a lower column 3003 (the contact range thereof with adjusting screws 3008A and 3008B) is expressed as h, the stroke of the tilt rising side of the lower column 3003 is expressed as S1, the stroke of the tilt lowering side of the lower column 3003 is expressed as S2, the distance between the two adjusting screws 3008A and 3008B in the vertical direction (in the tilt position adjusting direction) is expressed as L, and the diameter of each of the adjusting screws 3008A and 3008B is expressed as d, there can be obtained the following equation: that is, h > L + d + S1 + S2.

That is, in order that the resultant force P of the gravity W and centrifugal force F1 can be made to act between the upper side adjusting screw 3008A and the lower side adjusting screw 3008B, the height h of the right side surface 3034 of the lower column 3003 must be set high, which results in the increased weight of the lower column 3003.

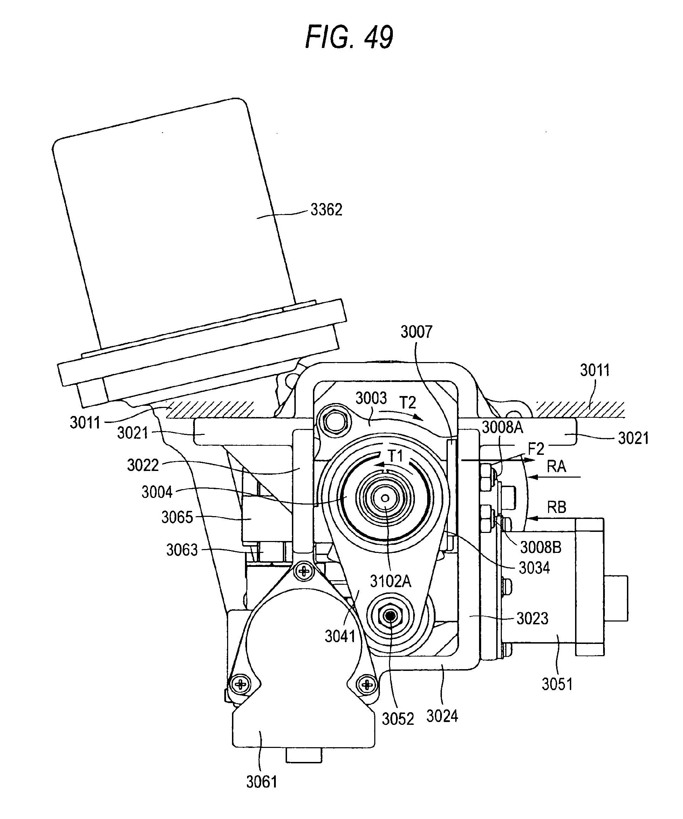

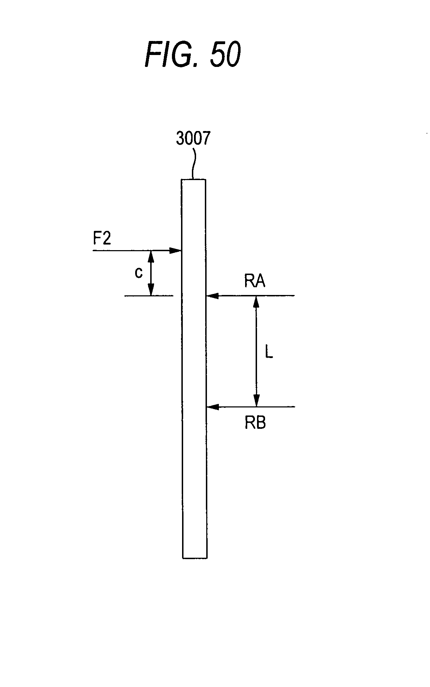

In Figs. 49 and 50, there is shown another conventional electric steering apparatus including a steering auxiliary mechanism for applying a given steering auxiliary force to a steering shaft through a reduction mechanism using the drive force of a steering auxiliary motor, in which a spacer 3007 is interposed between the right side surface 3034 of the lower column 3003 and the right side plate 3023 of the vehicle body mounting upper bracket 3002. Here, Fig. 49 is a side view of the conventional electric steering apparatus using a spacer for removing a backlash, and Fig. 50 is an explanatory view of a load which is applied to the spacer shown in Fig. 49.

In the electric steering apparatus shown in Figs. 49 and 50, when an electric motor 3362 is driven to apply steering auxiliary torque T1 onto the steering shaft, torque T2 as the reactive force of the torque T1 is applied to the lower column 3003, with the result that a load F2 is applied to the spacer 3007 from the lower column 3003.

As shown in Fig. 50, load F2 is, the distance between the adjusting screws 3008A and 3008B in the vertical direction (in the tilt position adjusting direction) is expressed as L, the distance between the upper side adjusting screw 3008A and load F2 is expressed as C, a reactive force acting on the upper side adjusting screw 3008A is expressed as RA, and a reactive force acting on the lower side adjusting screw 3008B is expressed as RB.

Since the distance between the adjusting screws 3008A and 3008B in the vertical direction is smaller than the range of the right side surface 3034 of the lower column 3003 in contact with the spacer 3007, there can be obtained the following equations: that is,

$$RA = F2 \cdot (L + C)/L$$

$$RB = -F2 \cdot C/L$$

Thus, the reactive force RA is positive and the reactive force RB is negative.

Therefore, there is generated a clearance between the lower column 3003 and spacer 3007 to thereby worsen the steering feeling. In order to prevent the worsened steering feeling, it is necessary to apply a preload to the lower side adjusting screw 3008B. However, application of the preload to the lower side adjusting screw 3008 increases the sliding resistance of the tilt sliding portion and thus increases the sizes of the tilt drive motor and the reduction gear of the tilt drive mechanism, thereby increasing the weight of the steering apparatus as well as increasing the manufacturing cost thereof

Patent Reference 1: Japanese Patent Publication 2000-238647

Patent Reference 2: Japanese Patent Publication 2002-2503

Patent Reference 3: Japanese Patent Publication Hei-6-37172

[Disclosure of the Invention]

[Problems that the Invention is to Solve]

In view of the above problems, the tilt type electric steering apparatus of the present invention is achieved for realizing at least reduction of the number of parts and miniaturization; and also sufficiently enhance the rigidity of the composing members of a steering column oscillation shift mechanism, and further sufficiently preventing the occurrence of a strange noise offensive to the ear.

Also, the present invention provides a steering apparatus which can reduce the partial wear of not only tilt sliding surfaces between a column and a vehicle mounting bracket but also a feed nut, can enhance the durability of the tilt sliding surfaces and a tilt drive mechanism, and can attain a smooth tilt position adjustment.

In addition, the present invention provides a steering apparatus which, in a tilt position adjusting operation, even when a feed nut and a nut holder are slided with respect to each other in the axial direction of a column, can prevent a backlash from occurring in the steering apparatus to thereby enhance the feeling of the rigidity of the steering apparatus, and thus can prevent the steering feeling of a driver from being worsened. Further, the present invention provides a steering apparatus which is small in weight and size, can reduce the manufacturing cost thereof, and can provide an excellent steering feeling over the whole stroke of a tilt position adjusting range.

Means for Solving the Problems

According to a first aspect of the invention, there is provided a steering apparatus, including:

a vehicle body side bracket to be fixed to a vehicle body;
a steering column which rotatably supports a steering shaft on an inside thereof, and is capable of oscillating and shifting about a tilt pivot shaft extending perpendicularly to a direction parallel to or coincident with a center axis of the steering shaft; and
an electric actuator including:

a screw shaft or a fixed member supported on one of the vehicle body side bracket and steering column;
a moving member supported on the other of the vehicle body side bracket and steering column; and
an electric motor, wherein
the electric actuator being capable of moving the moving member with respect to the screw shaft or the fixed member by driving the electric motor to thereby oscillate the steering column about the tilt pivot shaft,
wherein the moving member is composed of:
a first element disposed on the steering column side; and
a second element disposed on the vehicle body side bracket side,

a connecting element portion is fixed to one of the first or second element and the steering column or vehicle body side bracket,
the connecting element portion is supported to be rotatable about a rotation center axis, which is parallel to the tilt pivot shaft, with respect to the other of the first or second element and the steering column or vehicle body side bracket, and
the first and second element is capable of being shifted with respect to each other in a direction perpendicular to both of a rotation center axis of the connecting element portion and a longitudinal direction of the screw shaft or fixed member.

Also, according to a second aspect of the invention, in a steering apparatus as set forth in the first aspect of the invention,

the electric actuator includes:

a screw shaft rotatable by driving the electric motor;
one of the first and second elements is a nut holder;
the other of the first and second elements is a nut member;
the nut holder is supported to be rotatable about the rotation center axis of the connecting element portion with respect to the steering column or vehicle body side bracket and,
the nut member is held in an inside of the nut holder in such a manner that the nut member is allowed to be slid in a direction perpendicular to both of the rotation center axis of the connecting element portion and the longitudinal direction of the screw shaft.

Also, according to a third aspect of the invention, in a steering apparatus as set forth in the second aspect of the invention,
the nut member includes a cylindrical-shaped outer peripheral surface of which center axis perpendicular to both of the rotation center axis of the connecting element portion and the longitudinal direction of the screw shaft, a part of the inner surface of the nut holder is formed as a cylindrical-shaped portion having the same center axis as the outer peripheral surface of the nut member, and the outer peripheral surface of the nut member is slidably engaged with the part of the inner surface of the nut holder in a circumferential direction of the outer peripheral surface.

Also, according to a fourth aspect of the invention, in a steering apparatus as set forth in the second aspect of the invention,
both end portions of the nut holder are rotatably supported with respect to the steering column.

Also, according to a fifth aspect of the invention, in a steering apparatus as set forth in the first aspect of the invention,
a male screw portion is formed on the outer peripheral surface of the screw shaft by rolling process.

Also, according to a sixth aspect of the invention, in a steering apparatus as set forth in the first aspect of the invention,
among a pair of surfaces of the first element of the moving member disposed on the steering column side and the second element of the moving member disposed on the vehicle body side bracket side, the pair of the surfaces slidingly contacted with each other, a groove portion for holding grease is formed on at least in one of the surfaces.

Also, according to a seventh aspect of the invention, in a steering apparatus as set forth in the first aspect of the invention,
right and left side surfaces tilt-slidably held between right and left side plates of the vehicle body mounting bracket mountable on the vehicle body,
the right and left side surfaces are formed such that one of a distance from the center axis of the steering column to the left side tilt sliding surface and the distance from the center axis of the steering column to the right side tilt sliding surface is set longer than the other, and

the steering apparatus includes a tilt drive mechanism which is engaged with side surface of the steering column more distant from the center axis of the steering column to apply a tilt driving thrust force to the steering column.

Also, according to an eighth aspect of the invention, in a steering apparatus as set forth in the first aspect of the invention,

a frictional coefficient of the tilt sliding surface less distant from the center axis of the steering column is set smaller than a frictional coefficient of the tilt sliding surface more distant from the center axis of the steering column.

Also, according to a ninth aspect of the invention, in a steering apparatus as set forth in the eighth aspect of the invention,

a spacer is disposed between the side surface of the steering column less distant from the center axis of the steering column and the side plate of the vehicle body mounting bracket, and

at least one of the inner surface of the spacer and the column side surface is coated with a solid lubricant.

Also, according to a tenth aspect of the invention, in a steering apparatus as set forth in the ninth aspect of the invention,

the solid lubricant is one of molybdenum disulfide, tetrafluoro-ethylene, graphite, graphite fluoride, boron nitride, tungsten disulfide, and melamine cyanurate.

Also, according to an eleventh aspect of the invention, there is provided a steering apparatus as set forth in the second aspect of the invention, further including

an elastic member mounted in a fitting clearance between the nut and nut holder for tightening the outer periphery of the nut with elastic force thereof

Also, according to a twelfth aspect of the invention, in a steering apparatus as set forth in the eleventh aspect of the invention,

the elastic member is formed in a ring-like shape having a circular section.

Also, according to a thirteenth aspect of the invention, in a steering apparatus as set forth in the twelfth aspect of the invention,

the elastic member is made of synthetic rubber or synthetic resin.

Also, according to a fourteenth aspect of the invention, there is provided a steering apparatus as set forth in the first aspect of the invention, further including:

a vehicle body mounting lower bracket which supports a lower side of the steering column on the vehicle body so as to be pivotable about a tilt center shaft as a fulcrum thereof;

a vehicle body mounting upper bracket which holds an upper side column side surface of the steering column between right and left side plates thereof in a tilt-slidable manner;

a spacer inserted between one of the right and left side plates and the column side surface; and,

adjusting screws respectively provided on the side plates of the upper bracket for pressing the spacer toward the column side surface at a position higher than an upper end of a contact surface between the spacer and column side surface in a tilt rising end of the steering column and

at a position lower than a lower end of the contact surface between the spacer and column side surface in a tilt lowering end of the steering column.

Also, according to a fifteenth aspect of the invention, there is provided a steering apparatus as set forth in the first aspect of the invention, further including:

a vehicle body mounting lower bracket mountable which supports a lower side of the steering column on the vehicle body so as to be pivotable around a tilt center shaft as a fulcrum thereof;

a vehicle body mounting upper bracket which holds an upper side column side surface of the steering column between right and left side plates thereof in a tilt-slidable manner;

a spacer inserted between one of the right and left side plates and the column side surface; and

adjusting screws respectively provided on a tilt rising end side of the side plates and on a tilt lowering end of the side plates for pressing the spacer toward the column side surface,

wherein a range defined by connecting together the tilt center shaft and the centers of the respective adjusting screws contains therein the upper end of a contact surface between the spacer and column side surface in the tilt rising end of the steering column and the lower end of the contact surface between the spacer and column side surface in the tilt lowering end of the steering column.

Also, according to a sixteenth aspect of the invention, in a steering apparatus as set forth in the fourteenth aspect of the invention,

the spacer and column side surface respectively includes a recessed portion and a projecting portion respectively formed in an arc-like shape having the same radius with the tilt center shaft of the column as a center thereof, and the recessed portion and projecting portion is allowed to engage with each other.

Also, according to a seventeenth aspect of the invention, in a steering apparatus as set forth in the fifteenth aspect of the invention,

the spacer and column side surface respectively includes a recessed portion and a projecting portion respectively formed in an arc-like shape having the same radius with the tilt center shaft of the column as a center thereof, and the recessed portion and projecting portion is allowed to engage with each other.

Also, according to an eighteenth aspect of the invention, in a steering apparatus as set forth in the fourteenth aspect of the invention,

the adjusting screw includes a shaft portion, of which diameter is smaller than a male screw formed on an outer periphery of the adjusting screw, in a leading end portion thereof

the shaft portion is fitted into a through hole formed in the spacer and the spacer is pressed by a stepped surface formed between the shaft portion and the male screw.

Also, according to a nineteenth aspect of the invention, in a steering apparatus as set forth in the fifteenth aspect of the invention,

the adjusting screw includes a shaft portion, of which diameter is smaller than a male screw formed on an outer periphery of the adjusting screw, in a leading end portion thereof

the shaft portion is fitted into a through hole formed in the spacer and the spacer is pressed by a stepped surface formed between the shaft portion and the male screw.

Effects of the Invention

According to the above-structured tilt type electric steering apparatus of the invention, the number of parts and the size of the apparatus can be reduced, the rigidity of the composing members of a steering column oscillation shift mechanism can be enhanced sufficiently, and the generation of a strange noise offensive to the ear can be prevented sufficiently.

That is, according to the invention, one of the first and second elements, which cooperate together in constituting the moving member of the electric actuator, can be rotated about a rotation center axis parallel to the tilt pivot shaft with respect to the steering column or vehicle body side bracket, and the first and second elements can be shifted with respect to each other in a direction perpendicular both to the rotation center axis of the connecting element portion and to the longitudinal direction of the screw shaft or fixed member. Therefore, without using two or more link mechanisms, the linear movement caused by the electric actuator can be converted to the arc-shaped movement (oscillation) of the steering column, thereby being able to reduce the number of parts and size of the present electric steering apparatus. Also, it is possible to enhance sufficiently the rigidity of the composing members constituting the oscillation shift mechanism which is used to oscillate and shift the steering column. Further, it is possible to allow the oscillation shift mechanism to fulfill its normal function stably and also to prevent an unreasonable force from being applied to the oscillation shift mechanism.

Also, according to the invention, the two end portions of the screw shaft or fixed member can be supported not through two or more separate members which are oscillated and shifted with respect to each other. Owing to this, regardless of the oscillation shift of the steering column, application of a large bending load from the moving member to the screw shaft or fixed member can be prevented. Therefore, the power of the electric motor can be converted to the oscillatory motion of the steering column with high efficiency, which makes it possible not only to effectively prevent a strange noise offensive to the ear called a groaning noise from being generated but also to effectively prevent the lowered rigidity of the composing members of the oscillation shift mechanism.

Also, the nut member can be slided with respect to the nut holder in a direction perpendicular both to the rotation center axis of the connecting element portion and to the longitudinal direction of the screw shaft.

Especially, even when a rotation direction force is applied to the nut holder or nut member from the steering column, this force can be absorbed by the relative rotation of the nut member and nut holder (the transmission of the rotation direction force between the nut member and nut holder can be prevented). This prevents the nut member and screw shaft from butting against each other in part, thereby being able to prevent the screw hole of the nut member or the male screw portion of the screw shaft from wearing partially.

And, the nut holder can be supported in such a manner that it can be rotated with respect to the steering column about a rotation center axis parallel to the tilt pivot shaft. Thanks to this, when the male screw portion of the screw shaft is formed by a rolling operation which is easy to reduce the working cost of the male screw portion, although the nut member is easy to shift in the axial direction thereof while it is oscillating with respect to the screw shaft, it is possible to prevent a large force from being applied from the screw hole of the nut member to the male screw portion of the screw shaft.

This makes it easy to employ a structure in which the male screw portion is formed by the low-cost rolling operation. Not only the tilt type electric steering apparatus can be manufactured at a low cost but also, even when the tilt type electric steering apparatus is in operation, it is possible to sufficiently prevent generation of a strange noise offensive to the ear called a groaning noise.

Also, it is easy to hold a large amount of grease in the groove portion, while the first and second elements constituting the moving member can be slided more smoothly, thereby being able to eliminate or reduce a catch between these two elements more effectively. Therefore, not only the operation of the tilt type electric steering apparatus can be carried out more smoothly but also, even when the tilt type electric steering apparatus is in operation, it is possible to sufficiently prevent generation of a strange noise offensive to the ear.

In a steering apparatus according to the seventh aspect of the invention, one of the distance from the center axis of the column to the left side tilt sliding surface and the distance from the center axis of the column to the right side tilt sliding surface is set longer than the other, and there is provided a tilt drive mechanism engageable with the column side surface more distant from the center axis of the steering column to apply a tilt driving thrust force to the steering column. Therefore, owing to the tilt driving thrust force, to the tilt sliding surface, there is applied the moment of rotation in a direction to cancel the moment of rotation acting on the column.

This can reduce the partial wear of not only the tilt sliding surfaces between the column and vehicle body mounting bracket but also the tilt drive mechanism, thereby being able to carry out the tilt position adjustment smoothly and to enhance the durability of the tilt drive mechanism.

Also, in a steering apparatus according to the eleventh aspect of the invention, the tilt drive mechanism can be driven by the electric actuator and carries out the tilt movement of the column using the relative movements of the feed screw shaft and feed nut threadedly engaged with each other. And the tilt drive mechanism includes a nut holder, which is fitted with the outer surface of the outer periphery of the feed nut in such a manner that it can be slided substantially parallel to the center axis of the column and also which is connected to the column; and an elastic member which is mounted in a fitting clearance formed between the feed nut and nut holder for tightening the outer periphery of the feed nut with its elastic force.

Therefore, in the tilt position adjusting operation, even when the feed nut and nut holder are slided with respect to each other in the axial direction of the column, the elastic member tightens the outer periphery of the feed nut with its elastic force. This can prevent a driver from feeling a backlash in the steering apparatus, thereby being able to enhance the rigid feeling of the steering apparatus and thus prevent the steering feeling from worsening.

In a steering apparatus according to the fourteenth and fifteenth aspects of the invention, there are included a spacer inserted between one of the right and left side plates of the vehicle body mounting upper bracket and the side surface of the column; and adjusting screws respectively for pressing the spacer toward the column side surface at a position higher than the upper end of a contact surface between the spacer and column side surface in the tilt rising end of the steering column and at a position higher than the upper end of the contact surface between the spacer and column side surface in the tilt lowering end of the steering column.

Accordingly, since a load acting on the column while a driver is driving the vehicle is applied between the upper and lower adjusting screws, the shift of the column can be controlled to a small amount, which makes it possible not only to maintain the steering feeling at a good level but also to set the height of the contact surface of the column at a low height level. Therefore, the column can be manufactured such that the weight and size thereof are small, and thus the manufacturing cost of the column can be reduced to a minimum.

Brief Description of the Drawings

[Fig. 1] It is a schematic view, omitted in part, of a tilt type electric steering apparatus according to an embodiment 1 of the invention.

[Fig. 2] It is a section view taken along the II-II line shown in Fig. 1.

[Fig. 3] It is a partially enlarged section view of Fig. 2.

[Fig. 4] It is a partially omitted section view taken along the IV-IV shown in Fig. 3.

[Fig. 5] It is a section view taken along the V-V line shown in Fig. 3.

[Fig. 6] It is a section view taken along the VI-VI line shown in Fig. 3.

[Fig. 7] It is an enlarged view of the right half part of Fig. 1, explaining a state in which a steering column is oscillated.

[Fig. 8] It is a section view of a tilt type electric steering apparatus according to an embodiment 2 of the invention, similar to Fig. 3.

[Fig. 9] It is a section view of a tilt type electric steering apparatus according to an embodiment 3 of the invention, corresponding to the IX-IX line section shown in Fig. 3.

[Fig. 10] It is a section view of a tilt type electric steering apparatus according to an embodiment 4 of the invention, similar to Fig. 3.

[Fig. 11] It is a partial section view of a tilt type electric steering apparatus according to an embodiment 5 of the invention.

[Fig. 12] It is a partial section view of a tilt type electric steering apparatus according to an embodiment 6 of the invention, corresponding to the enlarged section view of the F portion shown in Fig. 5.

[Fig. 13] It is a partial section view, omitted in part, of a tilt type electric steering apparatus according to an embodiment 7 of the invention, corresponding to an enlarged section view taken along the IX-IX line shown in Fig. 3.

[Fig. 14] It is a partially enlarged section view of a tilt type electric steering apparatus according to an embodiment 8 of the invention, similar to Fig. 3.

[Fig. 15] It is a schematic section view of an example of a conventionally known tilt type electric steering apparatus including a telescopic mechanism.

[Fig. 16] It is a perspective view of the whole of an electric steering apparatus 1101 according to the invention, showing a state in which it is mounted on a vehicle.

[Fig. 17] It is a front view of the main portions of an electric steering apparatus 1101 according to an embodiment 9 of the invention.

[Fig. 18] It is a section view taken along the XVIII-XVIII line shown in Fig. 17, showing a tilt sliding portion between a vehicle mounting upper bracket and a column.

[Fig. 19] It is a section view taken along the XIX-XIX line shown in Fig. 17, showing the main portions of a tilt drive mechanism.

[Fig. 20] It is a front view of the main portions of an electric steering apparatus 1101 according to an embodiment 10 of the invention.

[Fig. 21] It is a section view taken along the XXI-XXI line shown in Fig. 20, showing a tilt portion between a vehicle body mounting upper bracket and a column.

[Fig. 22] It is a section view taken along the XXII-XXII line shown in Fig. 20, showing the main portions of the tilt drive mechanism.

[Fig. 23] It is a front view of the main portions of a tilt/telescopic type electric steering apparatus according to an embodiment 11 of the invention.

[Fig. 24] It is a section view taken along the XXIV-XXIV line shown in Fig. 23, showing the main portions of the tilt drive mechanism.

[Fig. 25] It is a section view taken along the XXV-XXV line shown in Fig. 24, showing the main portions of the engaged portion of a feed nut and a nut holder included in the tilt drive mechanism.

[Fig. 26] It is a section view taken along the XXVI-XXVI line shown in Fig. 24.

[Fig. 27] It is a diagram of the rigidity of the engaged portion of the feed nut and nut holder shown in Fig. 25.

[Fig. 28] It is a front view of the main portions of a tilt/telescopic type electric steering apparatus according to an embodiment 12 of the invention.

[Fig. 29] It is a section view taken along the XXIX-XXIX line shown in Fig. 28, showing the main portions of its tilt drive mechanism.

[Fig. 30] It is an enlarged section view of the main portions of the tilt drive mechanism shown in Fig. 29.

[Fig. 31] It is a section view taken along the XXXI-XXXI line shown in Fig. 30, showing the main portions of the engaged portion of a feed nut and a nut holder included in the tilt drive mechanism.

[Fig. 32] It is a partially omitted section view taken along the XXXII-XXXII line shown in Fig. 30, showing the main portions of the engaged portion of a feed nut and a nut holder included in the tilt drive mechanism.

[Fig. 33] It is a front view of the main portions of an electric steering apparatus 3101 according to an embodiment 13 of the invention.

[Fig. 34] It is a section view taken along the XXIV-XXIV line shown in Fig. 33, showing the main portions of its tilt drive mechanism.

[Fig. 35] It is a section view taken along the XXV-XXV line shown in Fig. 34, showing a titling motor and a worm included in the tilt drive mechanism.

[Fig. 36] It is a section view taken along the XXIVI-XXIVI line shown in Fig. 33, showing a tilt sliding portion between a vehicle body mounting upper bracket and a column included in the embodiment 13 of the invention.

[Fig. 37] It is a section view taken along the XXXVII-XXXVII line shown in Fig. 36.

[Fig. 38] It is an explanatory view of a tilt position adjusting operation to be executed by the embodiment 13 of the invention.

[Fig. 39] It is a right side view of an electric steering apparatus 3101, when viewed from the arrow mark P shown in Fig. 33.

[Fig. 40] It is an explanatory view of a column, a spacer and adjusting screws respectively taken out from Fig. 39.

[Fig. 41] It is a front view of the main portions of an electric steering apparatus 3101 according to an embodiment 14 of the invention.

[Fig. 42] It is a view taken along from the arrow mark Q shown in Fig. 41.

[Fig. 43] It is an explanatory view of a load to be applied to the spacer used in the embodiment 14 of the invention.

[Fig. 44] It is a side view of a conventional electric steering apparatus using a single adjusting screw for removing a backlash.

[Fig. 45] It is an explanatory view of a column and an adjusting screw respectively taken out from Fig. 44.

[Fig. 46] It is an explanatory view of the column and adjusting screw, corresponding to Fig. 45 and showing a state where the axes of the adjusting screw and column are consistent with each other.

[Fig. 47] It is a side view of another conventional electric steering apparatus using two adjusting screws for removing a backlash.

[Fig. 48] It is an explanatory view of a column and two adjusting screws respectively taken out from Fig. 47.

[Fig. 49] It is a side view of another conventional electric steering apparatus using a spacer for removing a backlash.

[Fig. 50] It is an explanatory view of a load to be applied to the spacer shown in Fig. 49.

Description of Reference Numerals and Signs

| 1: | Steering wheel |
|---|---|
| 2: | First electric actuator |
| 3: | Second electric actuator |
| 4, 4a, 4b: | Steering column |
| 5: | Lower column |
| 6: | Intermediate column |
| 7: | Upper column |
| 8: | Horizontal axis |
| 9, 9a: | Steering shaft |
| 10a, 10b: | Bracket |
| 11a, 11b: | Electric motor |
| 12: | Expansion rod |
| 13: | Pin |
| 14a, 14b: | Second bracket |
| 15: | Fork portion |
| 16: | Expansion rod |

| | |
|---|---|
| 17: | Pin |
| 18: | Tilt pivot shaft |
| 19, 19a: | Vehicle body side bracket |
| 20: | Mounting plate portion |
| 21: | First column support plate portion |
| 22: | Second column support plate portion |
| 23: | Plane portion |
| 24: | Bottom plate portion |
| 25: | Housing portion |
| 26: | Third column support plate portion |
| 27: | Electric motor support plate portion |
| 28: | Electric motor |
| 29: | Case |
| 30: | Recessed hole |
| 31: | Worm reduction gear |
| 32: | Worm shaft |
| 33: | Rotation shaft |
| 34: | Feed screw mechanism |
| 35: | Screw shaft |
| 36a, 36b: | Ball bearing |
| 37: | Hold member |
| 38: | Worm wheel |
| 39: | Through hole |
| 40: | Cylindrical member |
| 41: | Lip |
| 42: | Moving member |
| 43, 43a: | Nut holder |
| 44, 44a, 44b: | Nut member |
| 45: | Screw hole |
| 46: | Male screw portion |
| 47, 47a: | Side wall portion |
| 48: | Top plate portion |
| 49: | Bottom plate portion |
| 50: | Elongated hole |
| 51: | Plane portion |
| 52: | Plane portion |
| 53, 53a: | Shaft portion |
| 54: | Support hole |
| 55: | Arm portion |
| 56: | Support hole |
| 57: | Column member |
| 58: | Shaft support bracket |
| 59: | Flat plate portion |
| 60: | Connecting portion |
| 61: | Bolt |
| 62: | Support hole |
| 63: | Outer race |
| 64: | Housing portion |
| 65a, 65b: | Support plate portion |
| 66: | Support hole |
| 67: | Recessed hole |
| 68: | Top plate portion |
| 69: | Groove portion |
| 70: | Groove portion |
| 71: | Outer column |
| 72: | Inner column |
| 73: | Expansion rod |
| 74: | Outer peripheral surface |
| 75: | Cylindrical surface |
| 1101: | Electric steering apparatus |
| 1102: | Steering shaft |
| 1102A: | Upper steering shaft |
| 1102B: | Lower steering shaft |
| 1103: | Steering wheel |
| 1104: | Universal joint |
| 1105: | Intermediate shaft |
| 1106: | Universal joint |
| 1107: | Steering gear |
| 1108: | Tie rod |
| 1011: | Vehicle body |
| 1012: | Vehicle body mounting lower bracket |
| 1002: | Vehicle body mounting upper bracket |
| 1021: | Upper plate |
| 1022: | Left side plate |
| 1221: | Inner surface |
| 1023: | Right side plate |
| 1231: | Inner surface |
| 1024: | Lower plate |
| 1025: | Female screw |
| 1003: | Lower column |
| 1031: | Bracket |
| 1032: | Tilt center shaft |
| 1033: | Left side surface |
| 1034: | Right side surface |
| 1036: | Center axis |
| 1037: | Steering auxiliary portion (electric assist mechanism) |
| 1371: | Housing |
| 1372: | Electric motor |
| 1373: | Reduction gear box portion |
| 13 74: | Output shaft |
| 1375: | Lower vehicle body mounting bracket |
| 1376: | Tilt center shaft |
| 1038: | Arm portion |
| 1381: | Base end portion |
| 1382: | Rear extension portion |
| 1383: | Engaging hole |
| 1004: | Upper column |
| 1041: | Flange |
| 1005: | Telescopic drive mechanism |
| 1051: | Telescoping motor |
| 1052: | Feed screw shaft |
| 1006: | Tilt drive mechanism |
| 1061: | Tilting motor |
| 1062: | Worm |
| 1063: | Feed screw shaft |
| 1631, 1632: | Bearing |
| 1064: | Worm wheel |
| 1065: | Feed nut |
| 1066: | Engaging hole |
| 1067: | Nut holder |
| 1671: | Rectangular hole |
| 1672: | Elongated hole |
| 1673: | Tilt drive force transmission projection |
| 1674: | Tilt drive force transmission projec- |

tion

| | |
|---|---|
| 1068: | Left tilt sliding surface |
| 1069: | Left tilt sliding surface |
| 1007: | Spacer |
| 1072: | Through hole |
| 1073: | Outer surface |
| 1074: | Inner surface |
| 1008: | Adjusting screw |
| 1081: | Male screw |
| 1082: | Shaft portion |
| 1083: | Lock nut |
| 2101: | Electric steering apparatus |
| 2102: | Steering shaft |
| 2102A: | Upper steering shaft |
| 2102B: | Lower steering shaft |
| 2103: | Steering wheel |
| 2105: | Intermediate shaft |
| 2107: | Steering gear |
| 2011: | Vehicle body |
| 2002: | Vehicle body mounting bracket |
| 2021: | Upper plate |
| 2022: | Side plate |
| 2003: | Lower column |
| 2031: | Bracket |
| 2032: | Tilt center shaft |
| 2033: | Right side surface |
| 2034: | Circular hole |
| 2035: | Steering auxiliary portion |
| 2351: | Housing |
| 2352: | Electric motor |
| 2353: | Reduction gear box |
| 2354: | Output shaft |
| 2036: | Arm portion |
| 2361: | Base end portion |
| 2362: | Rear extension portion |
| 2363: | Inner surface |
| 2364: | Circular hole |
| 2004: | Upper column |
| 2041: | Flange |
| 2005: | Telescopic drive mechanism |
| 2051: | Telescoping motor |
| 2053: | Feed screw shaft |
| 2006: | Tilt drive mechanism |
| 2061: | Tilting motor |
| 2062: | Worm |
| 2063: | Feed screw shaft |
| 2064: | Worm wheel |
| 2065: | Feed nut |
| 2651: | Outer periphery |
| 2652: | Female screw |
| 2066: | Output shaft |
| 2671, 2672: | Bearing |
| 2681,2682: | Bearing |
| 2069: | Feed nut |
| 2691: | Outer periphery |
| 2692: | Female screw |
| 2071: | Nut holder |
| 2711: | Cylindrical hole |

| | |
|---|---|
| 2712, 2713: | Connecting pin |
| 2714: | Left side surface |
| 2715: | Right side surface |
| 2716: | Upper surface |
| 2717: | Lower surface |
| 2072: | Elongated hole |
| 2721: | Closed end |
| 2073: | Ring groove |
| 2074: | Elastic body |
| 2075: | Nut holder |
| 2751: | Rectangular hole |
| 2752: | Connecting pin |
| 2754: | Left side surface |
| 2755: | Right side surface |
| 2756: | Upper surface |
| 2757: | Lower surface |
| 2076: | Ring groove |
| 2077: | Elastic body |
| 3101: | Electric steering apparatus |
| 3102: | Steering shaft |
| 3102A: | Upper steering shaft |
| 3102B: | Lower steering shaft |
| 3103: | Steering wheel |
| 3104: | Universal joint |
| 3107: | Steering gear |
| 3011: | Vehicle body |
| 3012: | Vehicle body mounting lower bracket |
| 3002: | Vehicle body mounting upper bracket |
| 3021: | Upper plate |
| 3022: | Left side plate |
| 3221: | Inner surface |
| 3023: | Right side plate |
| 3231: | Inner surface |
| 3024: | Lower plate |
| 3025A, 3025B: | Female screw |
| 3026: | Arc-shaped projecting portion |
| 3003: | Lower column |
| 3031: | Bracket |
| 3032: | Tilt center shaft |
| 3033: | Left side surface |
| 3034: | Right side surface |
| 3035: | Arc-shaped recessed portion |
| 3035A, 3035B: | Arc-shaped step portion |
| 3035C: | Contact surface upper end |
| 3035C, 3035D: | Contact surface lower end |
| 3036: | Steering auxiliary portion |
| 3361: | Housing |
| 3362: | Electric motor |
| 3363: | Reduction gear box |
| 3364: | Output shaft |
| 3365: | Lower vehicle body mounting bracket |
| 3366: | Tilt center shaft |
| 3004: | Upper column |
| 3041: | Flange |
| 3005: | Telescopic drive mechanism |
| 3051: | Telescoping motor |
| 3052: | Feed screw shaft |
| 3006: | Tilt drive mechanism |

23       **EP 1 880 917 A1**       24

| 3061: | Tilting motor |
| 3062: | Worm |
| 3063: | Feed screw shaft |
| 3631, 3632: | Bearing |
| 3064: | Worm wheel |
| 3065: | Feed nut |
| 3651: | Tilt drive force transmission projection |
| 3066: | Engaging hole |
| 3067: | Output shaft |
| 3671, 3672: | Bearing |
| 3007: | Spacer |
| 3071A, 3071B: | Arch-shaped projecting portion |
| 3072A, 3072B: | Through hole |
| 3073: | Outer surface |
| 3074: | Inner surface |
| 3008A, 3008B: | Adjusting screw |
| 3081A, 3081B: | Male screw |
| 3082A, 3082B: | Shaft portion |
| 3083A, 3083B: | Lock nut |

Best Mode for Carrying Out the Invention

[Embodiment 1]

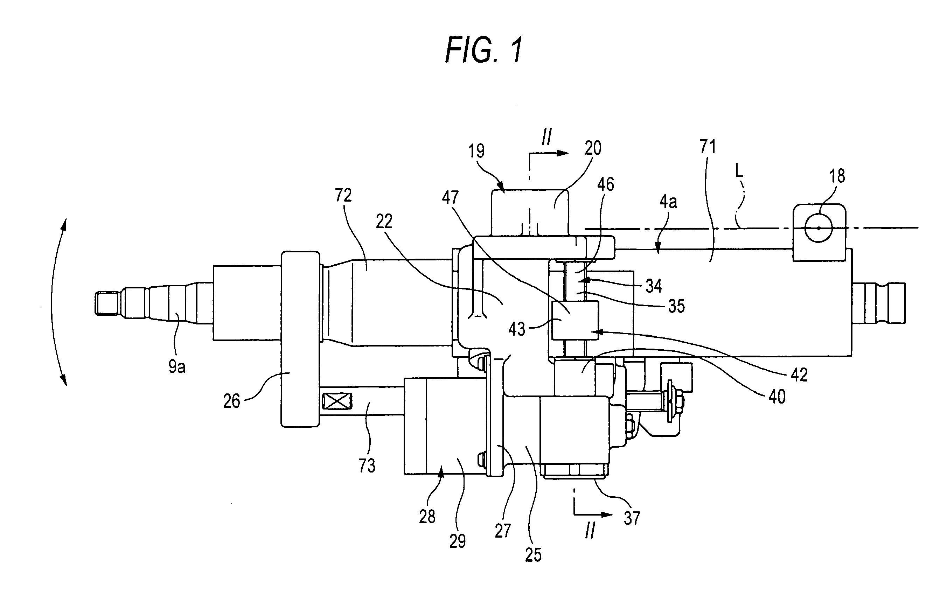

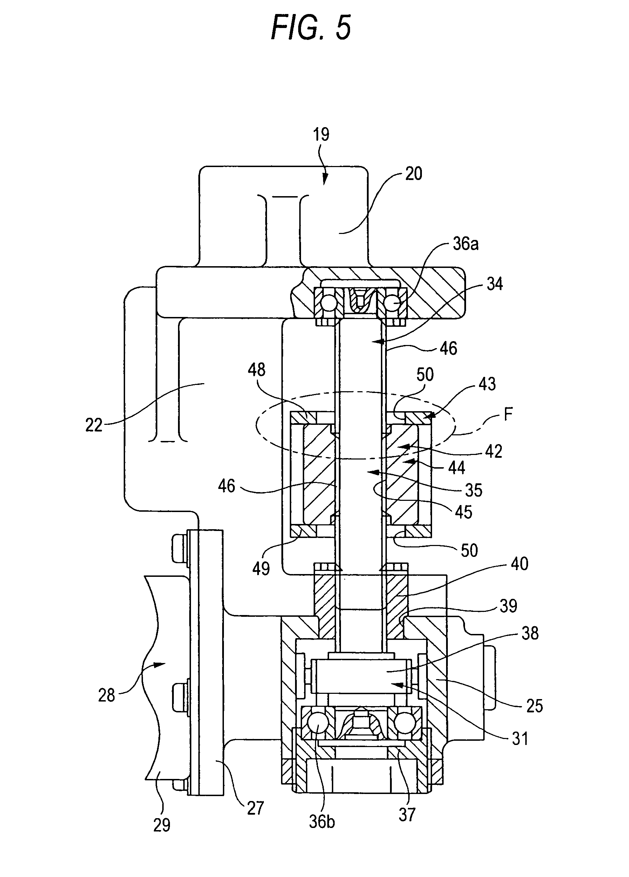

Figs. 1 to 7 respectively show a tilt type electric steering apparatus according to an embodiment 1 of the invention, which corresponds to the first, second and fifth aspects of the invention. By the way, in Figs. 1, 5 to 7, the front and rear sides of a vehicle body are reversed when compared with the structure shown in Fig. 15. That is, in Figs. 1, 5 to 7, the right side of these figures shows the front side of the vehicle body, whereas the left side thereof shows the rear side of the vehicle body. In the present embodiment, the tilt type electric steering apparatus is structured such that, as shown in Fig. 1, a steering shaft 9a with a steering wheel 1 (see Fig. 15) fixed to its rear end portion (in Fig. 1, the left end portion) is rotatably supported on the inside of a steering column 4a which is supported on the vehicle body. The front end portion (in Fig. 1, the right end portion) of this steering shaft 9a is connected through a universal joint and an intermediate shaft (neither of which are shown) to the input shaft of a steering gear (not shown either) in such a manner that power can be transmitted. To this input shaft, there is fixed a pinion (not shown), while this pinion is also meshingly engaged with a rack (not shown). These pinion and rack cooperate together in constituting a rack-pinion mechanism. According to this structure, when the steering shaft 9a is rotated, a tie rod (not shown) is pushed and pulled through the rack to thereby apply a desired steering angle to a steering wheel.

The front end portion (in Fig. 1, the right end portion) of the steering column 4a is supported on a vehicle body (not shown) in such a manner that it can be oscillated with respect to the vehicle body. That is, a horizontally extending tilt pivot shaft 18 is supported on the vehicle body, while the front end portion of the steering column 4a is supported on the vehicle body in such a manner that it can be oscillated about the tilt pivot shaft 18. Also, the tilt pivot shaft 18 is arranged to be perpendicular to an axis L (Fig. 1) extending parallel to the center axis of the steering shaft 9a. By the way, the steering column 4a may also be supported on the vehicle body in such a manner that it can be oscillated and shifted about an axis perpendicular to the center axis of the steering shaft 9a.

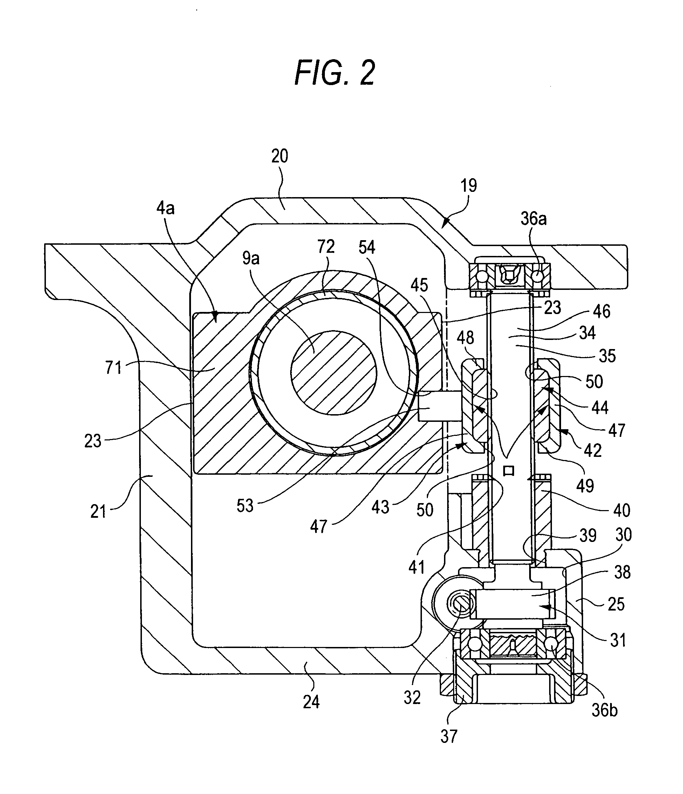

Also, the rear end portion (in Fig. 1, the left end portion) and intermediate portion of the steering column 4a are respectively supported on the vehicle body by a vehicle body side bracket 19 fixed to the vehicle body. The vehicle side bracket 19 includes a mounting plate portion 20 to be mounted onto the vehicle body, a first column support plate portion 21 extending downward from the width-direction one end portion (in Fig. 2, the left end portion) of the mounting plate portion 20, and a second support plate portion 22 similarly extending downward from the near-to-rear-end portion (in Figs. 1, 5 and 7, the near-to-left-end portion) of the width-direction other end portion (in Figs. 1, 5 and 7, the front-side end portion) of the mounting plate portion 20. The inner surfaces of these first and second column support plate portions 21 and 22 are arranged parallel to each other and are disposed opposed to a pair of plane portions 23 and 23 respectively provided in the width-direction (in Fig. 2, the right and left direction) two side portions of the outer peripheral surface of the intermediate portion of the steering column 4a, whereby these inner surfaces function as a guide to change the height of the steering column 4a. Also, the respective lower end portions of the first and second column support plate portions 21 an 22 are connected together by a bottom plate portion 24 (Fig. 2). By the way, to structure the steering column 4a, an inner column 72 may be fitted into the inside of an outer column 71 in such a manner that the inner column 72 can be slided in the axial direction. To the intermediate portion of the inner column 72, as shown in the left portion of Fig. 1, there is fixed a third column support plate portion 26. To the third column support plate portion 26, there is fixed the leading end portion of an expansion rod 73 which, when it is driven by an actuator (not shown), can be expanded and contacted in the axial direction of the inner column 72. And, the expansion rod 73 can be expanded and contracted (in the axial direction) by driving the actuator to thereby be able to expand and contract the inner column 72 in the axial direction with respect to the outer column 71. Thus, when the steering shaft 9a rotatably supported on the inside of the inner column 72 is expanded and contracted in the axial direction together with the inner column 72, the position, which is in the axial direction of the steering column 4a, of the steering wheel 1 fixed to the rear end portion of the steering shaft 9a can be adjusted.

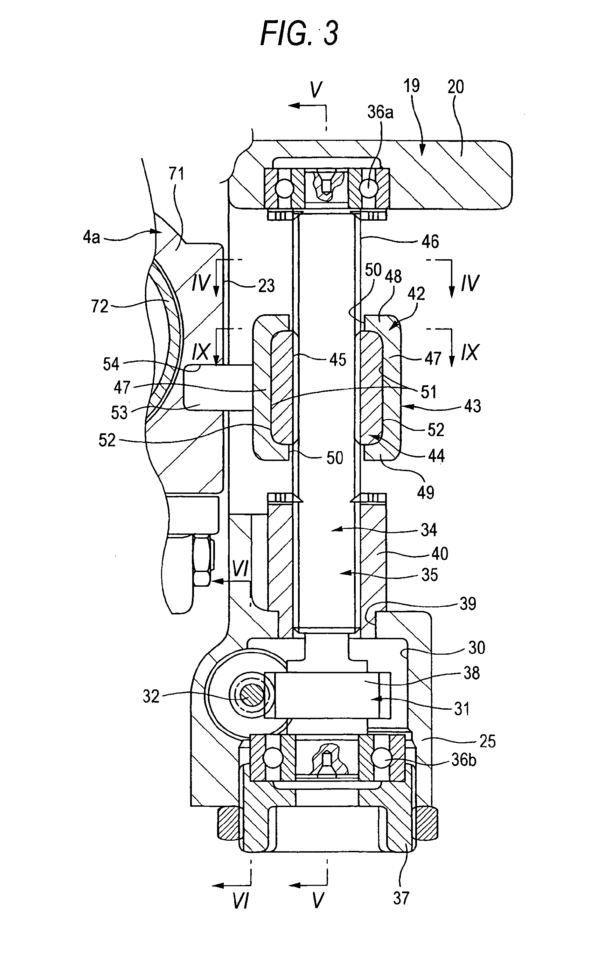

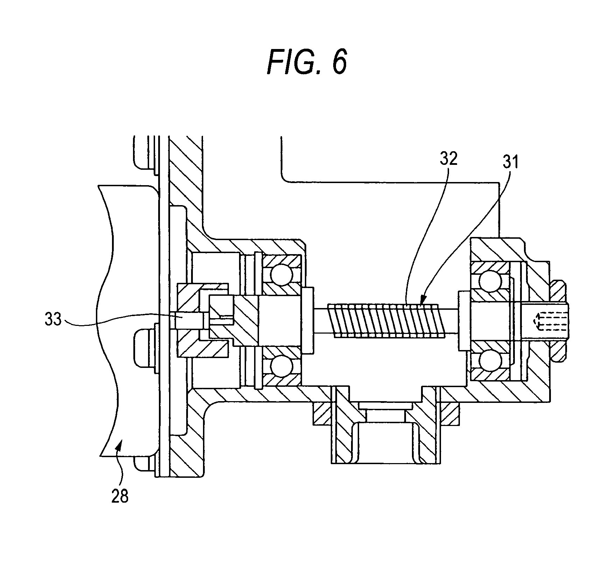

Also, in the lower end portion of the second column support plate portion 22, there is formed an electric motor support plate portion 27 which projects out on one side (in Fig. 1, on the front side) in the width direction, while a case 29 for an electric motor 28 is fixed to the electric motor support plate portion 27. And, on the front side (in Figs. 1 and 6, on the right side) of the electric motor support plate portion 27, there is provided a housing portion 25, while the width-direction one end portion (in Figs. 1, 5 and 6, the rear side end portion; in Figs. 2 and 3, the left end portion) of the housing portion 25 is connected to the near-to-front-end width-direction one side (in Fig. 1, the front side; in Fig. 2, the right side) of the bottom plate portion 24. In the housing portion 25, there is formed a recessed hole 30 opened downward and, within the recessed hole 30, there is rotatably supported a worm shaft 32 which constitutes a worm reduction gear 31. One end portion (in Fig. 6, the left end portion) of the worm shaft 32 and the end portion of the rotation shaft 33 of the electric motor 28 are connected with each other through spline engagement or the like in such a manner that power can be transmitted between them.

Also, on the width-direction other end portion (in Fig. 2, the right end portion) of the mounting plate portion 20 constituting the vehicle body side bracket 19 and on the housing portion 25, there are supported the two end portions of a screw shaft 35 by a pair of ball bearings 36a and 36b respectively in such a manner that they are allowed to rotate only. Of these two ball bearings 36a and 36b, the lower ball bearing 36b is disposed within the recessed hole 30 of the housing portion 25 and is held by a hold member 37 which is screw connected to the opening end portion of the recessed hole 30, thereby preventing the ball bearing 36b from moving or shifting in the axial direction.

Also, a worm wheel 38 constituting the worm reduction gear 31 is fitted with and fixed to such portion of the lower end portion of the screw shaft 35 that is situated upwardly of the portion of the screw shaft 35 lower end portion with the outer surface of which the lower ball bearing 36b is fitted. This worm wheel 38 is meshingly engaged with the worm of the worm shaft 32. The intermediate portion of the screw shaft 35 projects outwardly of the housing 25 through a through hole 39 formed in the upper end portion of the housing portion 25. To the inner surface of the through hole 39, there is fitted and fixed the lower end portion of a cylindrical member 40 made of synthetic resin, while the cylindrical member 40 projects upwardly of the housing portion 25. And, the near-to-lower-end portion of the screw shaft 35 is inserted into the cylindrical member 40, while the leading end edge of a lip 41, which is provided in the inner peripheral surface of the upper end portion of the cylindrical member 40 in such a manner that it project in the diameter direction thereof, is slidingly contacted with the outer peripheral surface of the near-to-lower-end portion of the screw shaft 35. This lip 41 is made of synthetic resin such as polyurethane having large elasticity which is called iron rubber (a registered trade mark).

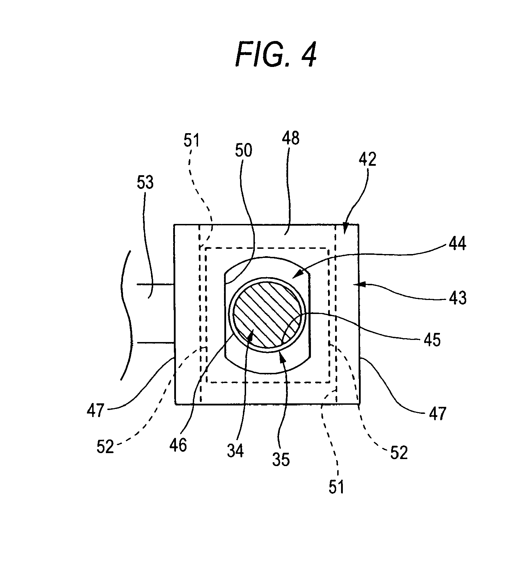

A moving member 42 is fitted with the outer surface of the portion of the intermediate portion of the screw shaft 35 that exists upwardly of the cylindrical member 40. This moving member 42 is composed of a nut holder 43 functioning as a first element and a nut member 44 functioning as a second element. The nut holder 43 includes a pair of side wall portions 47 and 47 respectively formed in the width-direction (in Figs. 1, 5 and 7, in the front and back direction; in Figs. 2 to 4, in the right and left direction) two end portions thereof, while the upper and lower end portions of these two side wall portions 47 and 47 are connected with each other through a top plate portion 48 and a bottom plate portion 49 respectively. In the width-direction central portions of the top and bottom plate portions 48 and 49, there are formed elongated holes 50 and 50 which are long in the longitudinal direction (in Figs. 1, 5 and 7, in the right and left direction; in Figs. 2 and 3, in the front and back direction; in Fig. 4, in the vertical direction) thereof, while the intermediate portion of the screw shaft 35 is inserted into the nut holder 43 through these elongated holes 50 and 50.

The nut member 44 is structured such that, as shown by a broken line in Fig. 4, its outer peripheral surface has a rectangular shape when viewed in the axial direction (in Fig. 4, in the front and back direction) thereof and, in the central portion thereof, there is formed a screw hole 45 penetrating through the central portion in the axial direction thereof The thus structured nut member 44 is inserted into the nut holder 43 from either side of the nut holder 43 in the longitudinal direction (in Figs. 1, 5 and 7; in the right and left direction; in Figs. 2 and 3, in the front and back direction; in Fig. 4, in the vertical direction) thereof, while the screw hole 45 of the nut member 44 is threadedly engaged with a male screw portion 46 formed in the screw shaft 35 which is inserted into the nut holder 43 through the elongated holes 50 and 50. In the present embodiment, the male screw portion 46 is formed by rolling. Also, the inner surfaces of the respective side wall portions 47 and 47 of the nut holder 43 are formed as plane portions 51 and 51 which are parallel to the above-mentioned longitudinal direction; and, plane portions 52 and 52, which are formed in the width-direction (in Fig. 2, in the right and left direction) two side surfaces of the nut member 44 and are parallel to each other, are adjacently disposed opposed to the plane portions 51 and 51 in contact with each other or through a small clearance between them. Further, the axial-direction (in Figs. 2 and 3, in the vertical direction) two end faces of the nut member 44 can be slidingly contacted with the inner surfaces of the top and bottom plate portions 48 and 49 of the nut holder 43, respectively. As a result of this, the nut member 44 is held inside the nut holder 43 in such a manner that it can be slided in the longitudinal direction of the nut holder 43 which is perpendicular to both of the center axis of a shaft portion 53 (which will be discussed later) and the longitudinal direction (axial direction) of the screw shaft 35.

Also, of the pair of side wall portions 47 and 47 which constitute the nut holder 43, to the outer surface of one (in Figs. 2 and 3, the left) side wall portion 47, there is fixed the base end portion (in Figs. 2 and 3, the right end portion) of the shaft portion 53 functioning as a connecting element portion. And, the near-to-leading-end portion (in Figs. 2 and 3, the near-to-left-end portion) of the shaft portion 53 is inserted and supported into a circular-shaped support hole 54 formed in the width-direction other side surface (in Figs. 2 and 3, the right side surface) of the steering column 4a in such a manner that it can be rotated about the center axis of the shaft portion 53 which is a rotation center axis within the support hole 54. The center axis of the shaft portion 53 is parallel to the tilt pivot shaft 18 which provides the center of oscillation of the steering column 4a. Therefore, the nut holder 43 including the shaft portion 53 is supported such that it can be rotated with respect to the steering column 4a about the center axis of the shaft portion 53 which is a center axis of rotation parallel to the tilt pivot shaft 18. By the way, the outer peripheral surface of the shaft portion 53 or the inner peripheral surface of the support hole 54 may also be coated with low friction material, and, between the outer peripheral surface of the shaft portion 53 and the inner peripheral surface of the support hole 54, there may also be interposed an easy-to-slide bush made of elastic material such as polyamide resin.

In the present embodiment, the screw shaft 35 supported on the vehicle body side bracket 19, the above-mentioned electric motor 28, moving member 42 supported on the steering column 4a, and worm reduction gear 31 interposed between the screw shaft 35 and electric motor 28 cooperate together in constituting an electric actuator. This electric actuator, as it is driven by the electric motor 28, moves the nut member 44 with respect to the screw shaft 35 in the axial direction of the screw shaft 35. Also, the nut member 44 and screw shaft 35 cooperate together in constituting a feed screw mechanism 34.

In the above structured tilt type electric steering apparatus according to the present embodiment, when moving the steering wheel 1 to a desired position in the height direction thereof, by operating a switch (not shown), the electric motor 28 is electrically energized and the rotation shaft 33 of the electric motor 28 is rotated in one of forward and reverse directions. And, the worm wheel 38, which is connected to the rotation shaft 33 in a power transmittable manner, is rotated to thereby rotate the worm wheel 38 which is in meshing engagement with the worm of the worm shaft 32. This rotates the screw shaft 35 the lower end portion of which is fixed to the worm wheel 38, whereby the nut member 44 can be moved in either upward or downward direction along the screw shaft 35.

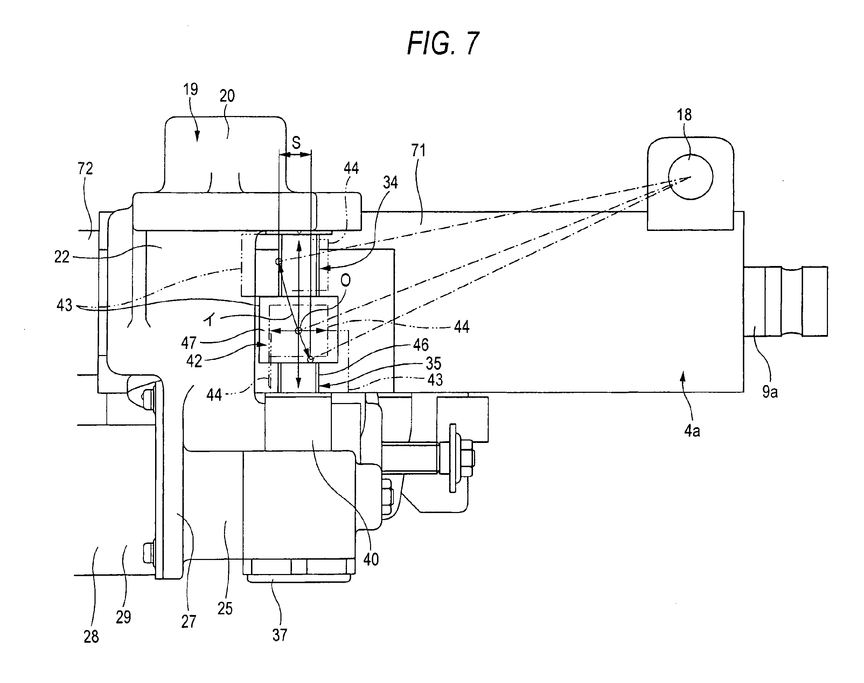

For example, when the nut member 44 is moved downward (or upward) along the screw shaft 35 from a state shown in Fig. 7, the nut holder 43, with the outer surface of which is fitted with the nut holder 44, is also moved downward (or upward). However, since the steering column 4a and the nut holder 43 supported on the steering column 4a are going to move downward (or upward) along an arc direction shown by the arrow mark A in Fig. 7 with the tilt pivot shaft 18 as the center thereof, this nut holder 43 and the above-mentioned nut member 44 are shifted with respect to each other in the longitudinal direction (in Fig. 7, in the right and left direction) of the nut holder 43 which is a direction perpendicular not only to the center axis of the shaft portion 53 (see Figs. 2 and 3) of the nut holder 43 but also to the axial direction of the screw shaft 35. Also, in this case, because the nut holder 43 is rotated with respect to the steering column 4a with the shaft portion 53 as a center thereof, the relative shift between the nut holder 43 and nut member 44 can be carried out smoothly. That is, in the feed screw mechanism 34 which is composed of the nut member 44 and screw shaft 35, the nut member 44 moves linearly only in the vertical direction in Fig. 7 with respect to the screw shaft 35, whereas the steering column 4a moves in an arc manner (oscillates) with the tilt pivot shaft 18 as a center thereof, thereby causing the directions of the movements of these two members to differ. On the other hand, according to the present embodiment, this difference can be absorbed by the relative shift of the nut member 44 and nut holder 43 in the longitudinal direction of the nut holder 43 as well as by the rotation of the nut holder 43 with respect to the steering column 4a. As a result of this, as the electric motor 28 is driven, the steering column 4a is oscillated smoothly with the tilt pivot shaft 18 as a center thereof, so that the height position of the steering wheel 1 fixed to the rear end portion of the steering shaft 9a can easily be adjusted as desired. By the way, the center of rotation O (Fig. 7) of the nut holder 43 with respect to the steering column 4a shifts in the longitudinal direction of the nut holder 43 within the range of a size shown by an arrow mark S in Fig. 7.

According to the tilt type electric steering apparatus of the present embodiment structured in the above-mentioned manner and capable of adjusting the height position of the steering wheel 1 in the above-mentioned manner, the number of parts used in the apparatus and the size of the apparatus can be reduced, the rigidity of the parts of the apparatus such as the screw shaft 35 constituting the oscillation shift mechanism for oscillating the steering column 4a can be enhanced sufficiently, and the occurrence of a strange noise offensive to the ear can be reduced sufficiently. That is, according to the present embodiment, the nut holder 43 constituting the moving member 42 of the electric actuator is free to rotate with respect to the steering column 4a about the center axis of the shaft portion 53 parallel to the tilt pivot shaft 18, while the nut holder 43 and nut member 44 are allowed to shift with respect to each other in a direction perpendicular not only to the center axis of the shaft portion 53 but also to the axial direction of the screw shaft 35. Thanks to this, without using two or more link mechanisms, the linear movement due to the electric actuator can be converted to the arc movement (oscillation) of the steering column 4a, thereby being able to reduce the number of parts used in the apparatus as well as the size of the apparatus. Also, the rigidity of parts constituting the above-mentioned oscillation shift mechanism can be enhanced sufficiently. Further, the present embodiment not only makes it possible for the present oscillation shift mechanism to fulfill its proper function stably but also can prevent an unreasonable force from being applied to the oscillation shift mechanism.

Also, according to the present embodiment, the two end portions of the screw shaft 35 not only can be supported on the vehicle body side bracket 19 but also can be supported not through two or more separately provided parts which oscillate and shift with respect to each other. Owing to this, regardless of the oscillation shift of the steering column 4a, it is possible to prevent a large bending load from being applied to the screw shaft 35 from the nut member 44. Therefore, the power of the electric motor 28 can be converted to the oscillatory movement of the steering column 4a with high efficiency, a strange noise offensive to the each called a groaning noise can be effectively prevented against occurrence, and it is possible to effectively prevent the lowered rigidity of the composing parts of the oscillation shift mechanism.

Also, according to the present embodiment, the nut member 44 can be slided with respect to the nut holder 43 in the longitudinal direction of the nut holder 43 which is a direction perpendicular not only to the center axis of the shaft portion 53 of the nut holder 43 but also to the axial direction of the screw shaft 35. Further, the nut holder 43 is supported on the steering column 4a in such a manner that it can be rotated about the center axis of the shaft portion 53 which is parallel to the tilt pivot shaft 18. For this reason, when, as in the present embodiment, the male screw portion 46 of the screw shaft 35 is formed by a rolling operation which is easy to reduce the working cost of the male screw portion 46, although the nut member 44 is easy to shift in the axial direction while oscillating with respect to the screw shaft 35, it is possible to prevent a large force from being applied to the male screw portion 46 locally from the screw hole 45 of the nut member 44. This, as in the present embodiment, makes it easy to employ a structure in which the male screw portion 46 is formed by rolling at a low cost. And, with employment of such structure, there can be realized a structure which is low in cost and, even when the tilt type electric steering apparatus is in operation, can sufficiently prevent a strange noise offensive to the ear called a groaning noise against occurrence.

And, the structure according to the present embodiment can also be combined with a steering apparatus including an electric telescopic mechanism which can adjust the back-and-forth position of a steering wheel by driving an electric motor. Also, the male screw portion 46 to be formed in the screw shaft 35 and the female screw portion to be formed in the screw hole 45 of the nut member 44 can also employ various shapes of screw structures such as a triangular-shaped screw structure and a trapezoidal-shaped screw structure. As described above, the screw shaft 35 and nut member 44 cooperate together in forming the feed screw mechanism 34. Further, according to the invention, instead of the feed screw mechanism 34 which includes the nut member 44 and nut holder 43, there can also be employed a ball screw mechanism which includes a ball screw shaft and a ball nut fitted with the outer surface of the ball screw shaft, and also which further includes two or more balls rollably interposed between an inside diameter side ball screw groove formed in the outer peripheral surface of the ball screw shaft and an outside diameter side ball screw groove formed in the inner peripheral surface of the ball nut.

[Embodiment 2]

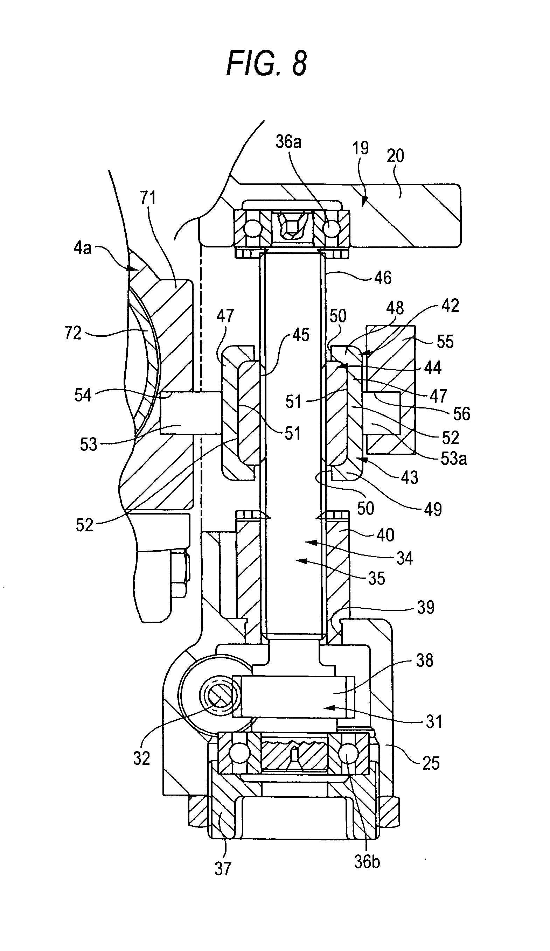

Next, Fig. 8 shows an embodiment 2 which corresponds to the first, second, fourth and fifth aspects of the invention. In the present embodiment, to the outer surfaces of a pair of side wall portions 47 and 47 respectively provided on the width-direction (in Fig. 8, in the right and left direction) two end portions of a nut holder 43, there are fixed the base end portions (in Fig. 8, the right end portions) of a pair of shaft portions 53 and 53a. These two shaft portions 53 and 53a are situated coaxially with each other. The base end portion of an L-shaped arm portion 55 is fixed to the width-direction one side (in Fig. 8, the right side) of the outer peripheral surface of a steering column 4a that is shifted with respect to the nut holder 43 to one side thereof in the longitudinal direction (in Fig. 8, in the front and back direction). The leading end portion of the arm portion 55 is bent toward the nut holder 43 side and, in the inner surface (in Fig. 8, the left side surface) of the present leading end portion, there is formed a support hole 56. Of the above-mentioned pair of shaft portions 53 and 53a, one (in Fig. 8, the right) shaft portion 53a is fitted into and supported on the support hole 56, whereas the near-to-leading-end portion of the other (in Fig. 8, the left) shaft portion 53 is fitted into and supported on a support hole 54 formed in the width-direction one side surface (in Fig. 8, the right side surface) of the outer peripheral surface of the steering column 4a in such a manner that they are free to rotate in their associated support holes 56 and 54 respectively.

According to the structure of the present embodiment, the rotation of the nut holder 43 with respect to the steering column 4a can be carried out more smoothly and more stably. As a result of this, the oscillatory movement of the steering column 4a can be carried out more smoothly and more stably.

The remaining structures and operations of the present embodiment are similar to those of the previously described embodiment 1. Therefore, the equivalent parts thereof are given the same designations and thus the duplicate description thereof is omitted here.

[Embodiment 3]

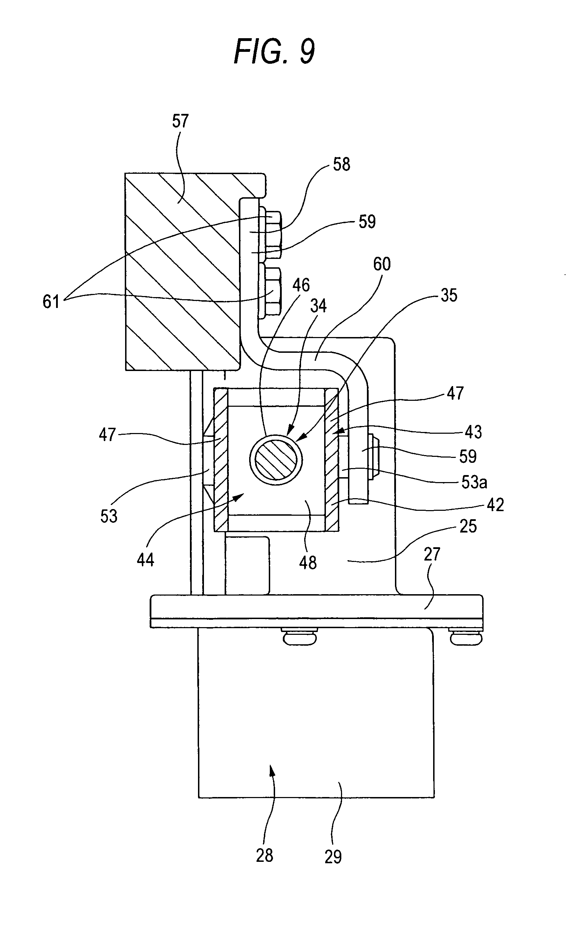

Next, Fig. 9 shows an embodiment 3 which also corresponds to the first, second, fourth and fifth aspects of the invention. According to the present embodiment, in the above-described embodiment 2 shown in Fig. 8, a shaft support bracket 58 is fixed through another column member 57 which is fixed to such portion of the steering column 4a (see Fig. 1 and the like) that not only exists on one side (in Fig. 9, on the right side) in the width direction of the outer peripheral surface of the steering column 4a but also is shifted with respect to the nut holder 43 toward the front side (in Fig. 9, on the upper side) thereof. This shaft support bracket 58 has a crank-like shape and includes a pair of flat plate portions 59, 59 extending parallel to each other, and a connecting portion 60 which connects together these two flat plate portions 59, 59. The two flat plate portions 59 and 59 are respectively bent in the mutually reversed directions with respect to the connecting portion 60. And, of the two flat plate portions 59 and 59, one (in Fig. 9, the upper) flat plate portion 59 is fixed to the column member 57 by bolts 61 and 61, while the inner surface (in Fig. 9, the left side surface) of the other (in Fig. 9, the lower) flat plate portion 59 is disposed opposed to one side surface in the width-direction (in Fig. 9, the right side surface) of the nut holder 43. Also, of the pair of shaft portions 53 and 53a provided in the nut holder 43, one (in Fig. 9, the right) shaft portion 53a is rotatably supported within a support hole (not shown) formed in the other flat plate portion 59.

Alternatively, the column member 57 may also be disposed such that the contact surface of the column member 57 with the flat plate portion 59 and the contact surface of the shaft portion 53a provided in the nut holder 43 with the flat plate portion 59 are flush with each other. According to this structure, instead of the crank-shaped shaft support bracket 58, there may also be used the flat-plate-shaped shaft support bracket 58. This not only can simplify the shape of the shaft support bracket 58 but also can simplify the structure of the whole of the steering column and thus can reduce the cost of the steering column.

The other structures and operations of the embodiment 3 are similar to those of the above-described second embodiment shown in Fig. 8. Therefore, like parts are given the same designations and thus the duplicate description thereof is omitted here.

[Embodiment 4]

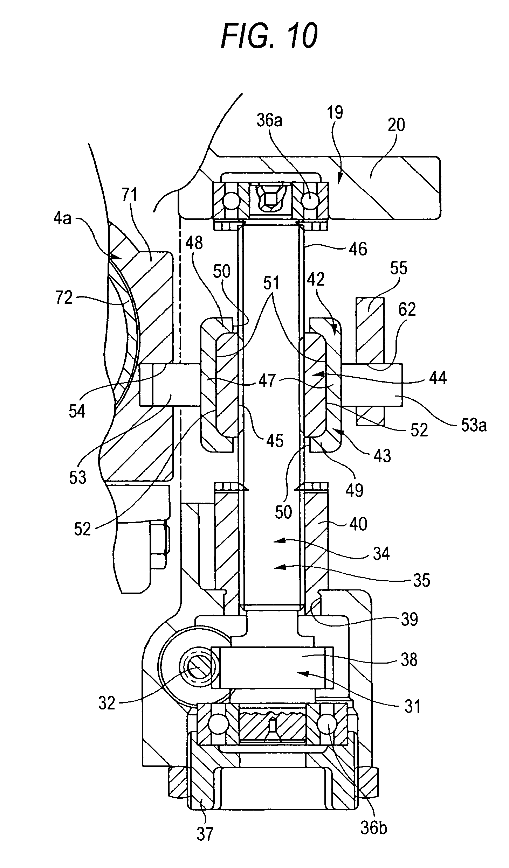

Next, Fig. 10 shows an embodiment 4 which also corresponds to the first, second, fourth and fifth aspects of the invention. According to the present embodiment, in the above-described second embodiment shown in Fig. 8, of the pair of shaft portions 53 and 53a provided in the nut holder 43, one (in Fig. 10, the right) shaft portion 53a is fitted and mounted into a support hole 62, which is formed in the leading end portion of an arm portion 55 fixed to the steering column 4a such that it penetrates through the present leading end portion, in such a manner that one shaft portion 53a can be shifted in the axial direction thereof Also, of the pair of shaft portions 53 and 53a, the other (in Fig. 10, the left) shaft portion 53 is fitted and mounted into a support hole 54 formed in the width-direction one side surface (in Fig. 10, the right side surface) of the outer peripheral surface of the steering column 4a in such a manner that it can be shifted in the axial direction thereof

According to such structure of the present embodiment, even when there exist a manufacturing error and an assembling error between the shaft portions 53, 53a of the nut holder 43 and their associated support holes 54, 62, such errors can be absorbed easily.

The other structures and operations of the present embodiment are similar to those of the above-described second embodiment shown in Fig. 8. Therefore, like parts are given the same designations and thus the duplicate description thereof is omitted here.

[Embodiment 5]

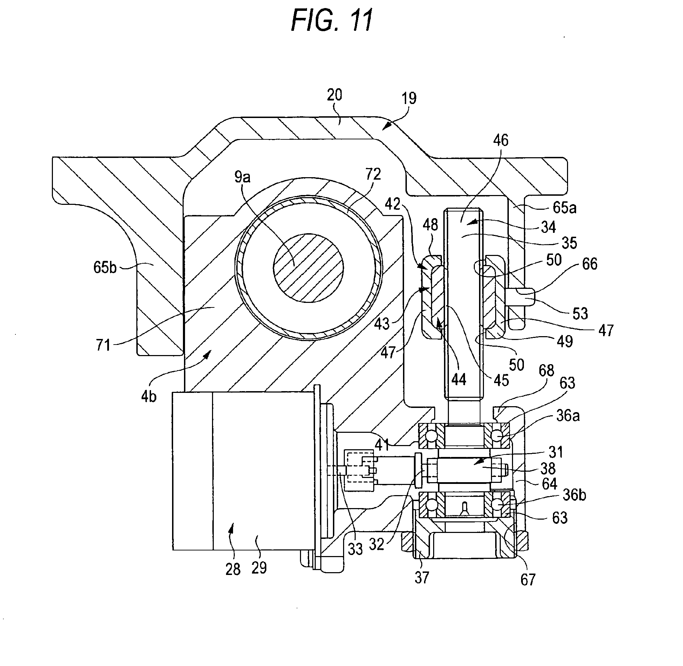

Next, Fig. 11 shows an embodiment 5 which corresponds to the first, second and fifth aspects of the invention. In the present embodiment, differently from the previously described respective embodiments, the electric motor 28, screw shaft 35 and worm reduction gear 31 are mounted, of a vehicle body side bracket 19a and a steering column 4b, on the steering column 4b. That is, to the lower end portion of the steering column 4b, there is connected and fixed a case 29 which constitutes the electric motor 28. Also, to one end portion (in Fig. 11, the right end portion) of the rotation shaft 33 of the electric motor 28, there is connected and fixed one end portion (in Fig. 11, the left end portion) of a worm shaft 32 constituting the worm reduction gear 31 in such a manner that power can be transmitted between them. Also, the worm of the worm shaft 32 is meshingly engaged with a worm wheel 38 which constitutes the worm reduction gear 31. This worm wheel 38 is fitted with and fixed to the outer surface of the near-to-lower-end portion of the screw shaft 35. On the upper and lower portions of the present near-to-lower-end portion of the screw shaft 35 with the worm wheel 38 held between them, there are supported a pair of ball bearings 36a and 36b, while the outer races 63 and 63 of the respective ball bearings 36a and 36b are fixed to a housing portion 64 formed in the steering column 4b respectively. And, the near-to-upper-end portion of the screw shaft 35 is projected outwardly of the housing portion 64, while a moving member 42 composed of a nut member 44 and a nut holder 43 is threadedly engaged with the near-to-upper-end portion of the screw shaft 35 or is fitted with the outer surface thereof.

Also, a hold member 37 is fixed to the open end portion of a recessed hole 67 formed in the inside of the housing portion 64. Of the pair of ball bearings 36a and 36b, the lower end face of the outer race 63 of the lower ball bearing 36b is held by the hold member 37. On the other hand, of the pair of ball bearings 36a and 36b, the upper end face of the outer race 63 of the upper ball bearing 36a is held by a top plate portion 68 that is provided in the upper end portion of the housing portion 64. This structure can prevent the worm shaft 35 from shifting in the axial direction with respect to the steering column 4b.

And, there are formed a pair of support plate portions 65a and 65b which respectively extend downward from the lower surfaces of the width-direction two end portions of a mounting plate portion 20 constituting the vehicle body side bracket 19a. Also, a shaft portion 53 is fixed to the outer surface of a side wall portion 47 formed in the width-direction one end portion (in Fig. 11, the right end portion) of the nut holder 43; and, of the pair of support plate portions 65a and 65b, in one (in Fig. 11, the right) support plate portion 65a, there is formed a support hole 66 which penetrates through the support plate portion 65a in the thickness direction thereof, and the shaft portion 53 is rotatably supported in the support hole 66. According to the present embodiment, a nut member 44 functions as a first element on the steering column 4b side, whereas the nut holder 43 functions as a second element on the vehicle body side bracket 19a side.

The other structures and operations of the present embodiment are similar to those of the above-described first embodiment shown in Figs. 1~7. Therefore, like parts are given the same designations and thus the duplicate description thereof is omitted here.

By the way, in the above-mentioned respective embodiments, there is used an electric actuator which includes the feed screw mechanism 34 or ball screw mechanism and the electric motor 28 for rotating the rotation shaft 33. However, according to the invention, use of such electric actuator is not limitative but there can also be used an electric actuator which includes a linear motor. When the linear motor is used, for example, the fixed element of the linear motor is fixed to one of the vehicle body side brackets 19, 19a and steering column 4a. Also, the moving element of the linear motor is fixed to the other of the steering column 4a and vehicle body side brackets 19, 19a. And, the moving element and fixed member are combined together; and, by electrically energizing the moving member, the polarity of the electromagnet of the moving element is caused to vary, thereby causing the moving member to move in either direction along the fixed member. And, the steering column 4a is oscillated about the tilt pivot shaft 18 (see Fig. 1 and the like). When the invention is applied to such structure using a linear motor, for example, a moving member is composed of a moving element and a hold member for holding the moving element in the inside thereof Also, a shaft portion provided in the hold member and functioning as a connecting element portion is supported in such a manner that it can be rotated with respect to the steering column 4a or vehicle body side bracket 19 about the center axis of the shaft portion functioning as the rotation center axis parallel to the tilt pivot shaft 18. Further, the moving element and hold member are structured such that they can be shifted with respect to each other in a direction perpendicular not only to the shaft portion extending in a direction parallel to the tilt pivot shaft 18 but also to the longitudinal direction of the fixed member.

[Embodiment 6]

According to the previously described respective structures, as described above, there can be provided excellent operations and effects. However, in these structures, there is still room for improvement in the sliding movement between the first and second elements constituting the moving member: that is, the sliding movement should be made smoother. For example, in the first embodiment shown in Figs. 1 to 7, there are provided the nut holder 43 functioning as the first element and the nut member 44 functioning as the second element. And, the nut holder 43 is supported such that it can be rotated with respect to the steering column 4a about the shaft portion 53 of the nut holder 43 extending parallel to the tilt pivot shaft 18; and also, the nut member 44 threadedly engaged with the screw shaft 35 is held inside the nut holder 43 in such a manner that it can be slided in a direction perpendicular to the shaft portion 53 of the nut holder 43.

In this structure, as shown in Fig. 7, the nut holder 43 supported on the steering column 4a, while rotating about the shaft portion 53 (see Figs. 2 to 4) fixed to the nut holder 43, moves along an arc-shaped locus (oscillates) with the tilt pivot shaft 18 as a center thereof. On the other hand, the nut holder 44 held inside the nut holder 43 is allowed to move only in the longitudinal direction of the screw shaft 35. Owing to this, when the steering column 4a oscillates, while the outer surface of the nut member 44 is pressing against the inner surface of the nut holder 43 so as to rotate it about the shaft portion 53, the nut member 44 is shifted with respect to the nut holder 43 in the right and left direction shown in Fig. 7. In this case, the two end portions of the nut member 44 in the right and left direction in Fig. 7 are pressed toward the vertically opposed side end portions thereof by the nut holder 43, whereby the outer surface of the nut member 44 can be in part caught easily by the inner surface of the nut holder 43. This provides a possibility that the sliding resistance between the nut member 44 and nut holder 43 can be increased, thereby leaving still room for improvement in the sliding motion to be smoothed more. Especially, when the nut member 44 and nut holder 43 are different from each other in the material thereof, if the temperature varies, a clearance produced between these two members 44 and 43 is easy to decrease, which raises a possibility that the nut member 44 can be caught by the nut holder 43 more easily.

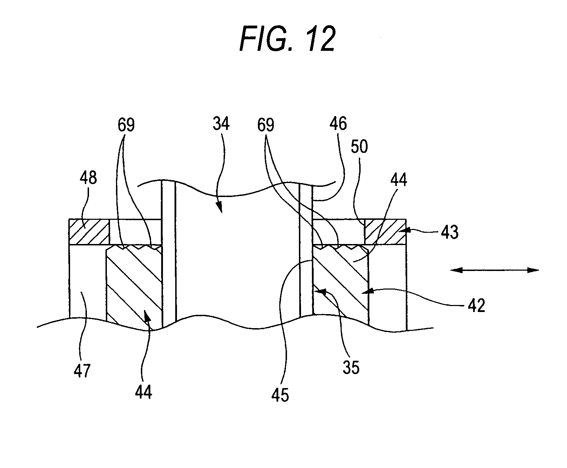

An embodiment 6, which is shown in Fig. 12 and corresponds to the first, second, fifth and sixth aspects of the invention, is invented in view of the above-mentioned circumstances.

According to the present embodiment, in the structure according to the previously described first embodiment shown in Figs. 1 to 7, in the vertical-direction two end faces of the nut member 44, there are formed two or more linear-shaped groove portions 69, 69 which respectively extend along the width-direction (in Fig. 12, the front and back direction) entire lengths of their associated end faces. These groove portions 69, 69 are respectively formed in the front and back direction of Fig. 12 which is perpendicular to the right and left direction shown by an arrow mark in Fig. 12, that is, the sliding direction of the nut member 44 and nut holder 43. And, the upper and lower end faces of the nut member 44, in which the groove portions 69, 69 are formed, can be slidingly contacted with the respective inner surfaces of the top plate portion 48 and bottom plate portion 49 (see Fig. 2 and the like) provided in the nut holder 43. Also, the respective groove portions 69, 69 are capable of holding grease.

According to the present structure, it is easy to hold a large quantity of grease in the groove portions 69, 69 formed in the upper and lower end faces of the nut member 44, the nut holder 43 and nut member 44 can be slided more smoothly, and it is possible to eliminate or reduce more effectively a possibility that the nut holder 43 and nut member 44 can be caught by each other. This not only makes it possible to operate the tilt type electric steering apparatus more smoothly but also, even when the tilt type electric steering apparatus is in operation, occurrence of a strange noise offensive to the ear can be controlled more effectively.

The remaining structures and operations of the present embodiment are the same as those of the first embodiment shown in Figs. 1 to 7. Therefore, like parts are given the same designations and thus the duplicate description thereof is omitted here.

[Embodiment 7]

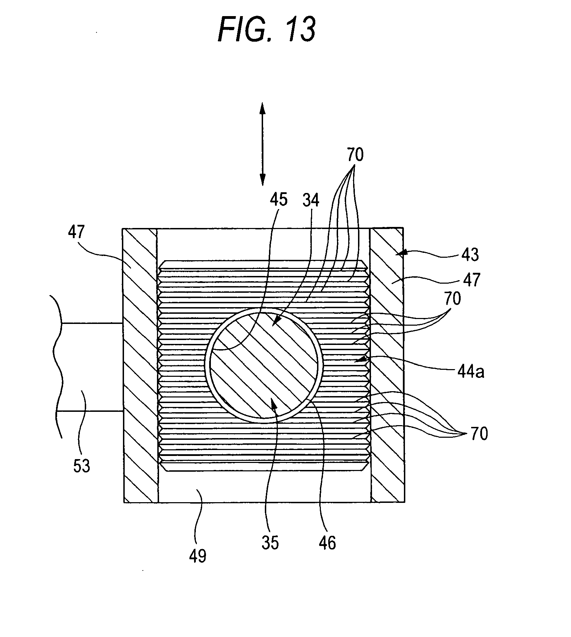

Next, Fig. 13 shows an embodiment 7 which also corresponds to the first, second, fifth and sixth aspects of the invention. In the present embodiment, a nut member 44a has a columnar shape and includes two or more groove portions 70, 70 which are respectively formed in the entire outer peripheral surface of the nut member 44a and extend parallel to each other. And, in the axial direction (in Fig. 13, in the vertical direction) of the nut member 44a, there is formed a screw hole 45 which penetrates through the nut member 44a in a direction perpendicular to the center axis of the nut member 44a. With the screw hole 45, there is threadedly engaged the male screw portion 46 of the screw shaft 35. The nut member 44a is held within the nut holder 43 in such a manner that it can be slided in the longitudinal direction thereof (in Fig. 13, a direction shown by an arrow mark).

According to the present embodiment, the grooves 70, 70 formed in the outer peripheral surface of the nut holder 43 correspond to grease holding groove portions according to the sixth aspect of the invention.

In the present embodiment as well, similarly to the previously described sixth embodiment shown in Fig. 12, a large quantity of grease can be easily held in the groove portions 70, 70 formed in the outer peripheral surface of the nut member 44a, the nut holder 43 and nut member 44a can be slided more smoothly, and it is possible to eliminate or reduce more effectively a possibility that the nut holder 43 and nut member 44a can be caught by each other.

The remaining structures and operations of the present embodiment are the same as those of the sixth embodiment shown in Fig. 12. Therefore, the duplicate description thereof is omitted here.

In the above-mentioned sixth and seventh embodiments respectively shown in Figs. 12 and 13, the groove portions 69, 70 are formed in the outer surfaces of the nut members 44, 44a respectively. Alternatively, however, in the portion of the inner surface of the nut holder 43 that can be slidingly contacted with the nut member 44 or 44a, there can also be formed groove portions which are capable of holding grease therein. For example, in the previously described first embodiment shown in Figs. 1 to 7, in the portions of the inner surfaces of the pair of side wall portions 47 and 47 that can be slidingly contacted with the outer surface of the nut member 44, specifically, in the portion shown by the arrow mark B in Fig. 2, there can also be formed groove portions which are capable of holding grease therein.

Also, of the outer surfaces of the nut member 44 or 44a and the inner surface of the nut holder 43, in both of mutually contactable surfaces thereof, there can also be formed groove portions which are capable of holding grease therein. However, in order to prevent the groove portions in the two surfaces from meshing with each other, the direction and pitch of the grooves in the two surfaces must be regulated. Further, the direction of formation of the groove portions may not be the direction perpendicular to the sliding direction of the nut member 44 or 44a with respect to the nut holder 43 as in the previously described sixth and seventh embodiments, but may be any direction such as a direction parallel to the sliding direction or a direction inclined with respect to the sliding direction. For example, the nut member may also be formed in a columnar shape which includes a male screw portion (a spiral-shaped groove) formed in its outer peripheral surface, while the present male screw portion may also be formed so as to correspond to the groove portion according to the sixth aspect of the invention. Also, in the invention according to the sixth aspect of the invention, the groove portion is not limited to a linear-shaped groove portion or a curved groove portion but, for example, it may also be composed of a large number of small cavities (dimples).

[Embodiment 8]

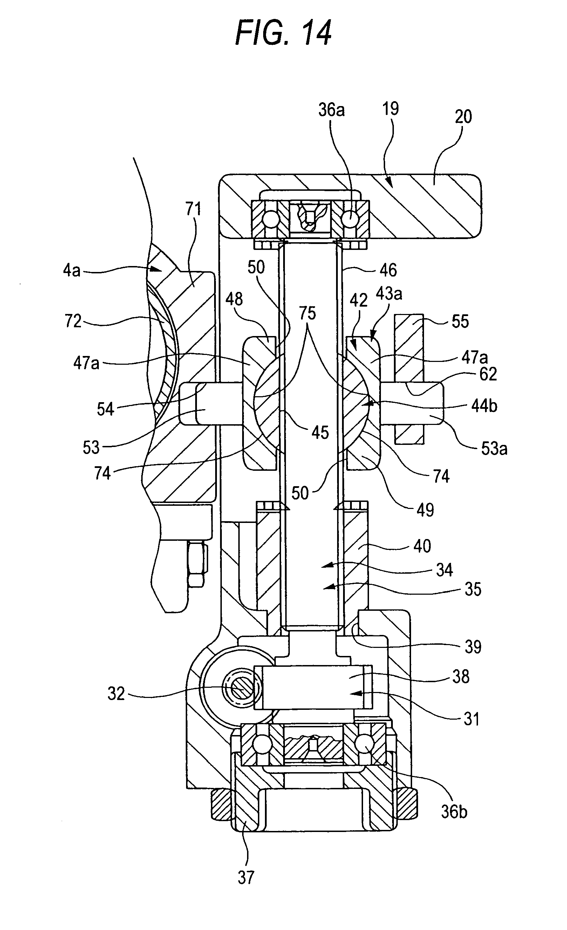

Next, Fig. 14 shows an embodiment 8 which corresponds to the first to fifth aspects of the invention. In the present embodiment, a nut member 44b made of synthetic resin or metal is formed as a columnar-shaped member having an outer peripheral surface 74 the center axis of which is perpendicular not only to the center axes of rotation of shaft portions 53, 53a but also to the longitudinal direction of the screw shaft 35. That is, the nut member 44b is formed as a columnar-shaped member the longitudinal direction of which provides the front and back direction of Fig. 14. Also, in such intermediate portions of the inner surfaces of side wall portions 47a and 47a constituting the nut holder 43 as exist in the longitudinal direction of the screw shaft 35, over the entire longitudinal directions of these two side wall portions 47a and 47a (the entire direction perpendicular not only to the center axes of rotation of the shaft portions 53, 53a but also to the longitudinal direction of the screw shaft 35), there are formed concave-shaped cylindrical surfaces 75, 75 which respectively have the same center axis as the outer peripheral surface 74. And, the outer peripheral surface 74 of the nut member 44b is engaged with the cylindrical surfaces 75, 75 of the nut holder 43 in such a manner that the outer peripheral surface 74 can be slided in its circumferential direction (in the rotation direction of the outer peripheral surface 74 about its center axis).

In the present embodiment, since the cylindrical surfaces 75, 75 are formed over the entire longitudinal direction of the side wall portions 47a, 47a of the nut holder 43a, the nut member 44b can be slided along the cylindrical surfaces 75, 75 in the longitudinal direction of the two side wall portions 47a, 47a as well. In order to smooth the execution of the sliding movement of the nut member 44b in the circumferential direction and in the longitudinal direction, the outer peripheral surface 74 of the nut member 44b or the cylindrical surfaces 75, 75 of the nut holder 43a may also be coated with low friction agent. Alternatively, grease may also be applied between the outer peripheral surface 74 and cylindrical surfaces 75, 75. In this case, as in the structure of the sixth and seventh embodiments shown in Figs. 12 and 13, in one of the outer peripheral surface 74 and cylindrical surfaces 75, 75, there may be formed a groove portion.

In the present embodiment structured in the above-mentioned manner, even when a rotation-direction force is applied from the steering column 4a through the shaft portions 53, 53a to the nut holder 44b, this force can be absorbed due to the relative rotation between the nut member 44b and nut holder 43a. For example, in a structure obtained by combining together the structure according to the present embodiment and an electric power steering apparatus, when the power of the electric power steering apparatus is transmitted directly to a steering shaft rotatably supported in the inside of the steering column 4a, the reactive force of the power transmitted to the steering shaft is applied to the steering column 4a.

That is, the electric power steering apparatus transmits the power of an electric motor through a reduction mechanism such as a worm reduction gear to the steering shaft. Since the housing of the reduction mechanism is fixed to a portion of the steering column 4a, when the power of the electric motor is transmitted through the reduction mechanism to the steering shaft, the reactive force of this power is in part applied through the housing of the reduction mechanism to the steering column 4a. And, based on this reactive force, the steering column 4a tends to rotate. As a result of this, a rotation-direction force is applied to the nut member 44b not only through the shaft portions 53, 53b respectively supported on the steering column 4a and but also through the nut holder 43a. In this case, as in the previously described respective embodiments, in a structure in which the nut member and the inner surface of the nut holder are in contact with each other in their associated plane surfaces, the nut member tends to rotate together with the nut holder. And, the screw hole of the nut member and the male screw portion of the screw shaft are partially butted against each other (and thus the contact pressures of their partial portions increase), thereby raising a possibility that the screw hole and/or male screw portion can wear partially.

On the other hand, according to the present embodiment, the outer peripheral surface 74 of the nut member 44b and the cylindrical surfaces 75, 75 formed in the inner surface of the nut holder 43a are slidable in the circumferential direction of the outer peripheral surface 74. For this reason, even when the nut holder 43a tends to rotate based on the above-mentioned reactive force, the nut holder 43a can be rotated with respect to the nut member 44b to thereby prevent the nut member 44b from rotating together with the nut holder 43a. As a result of this, the screw hole 45 of the nut member 44b and the male screw portion 46 of the screw shaft 35 are prevented from butting against each other, which can prevent both of the screw portions 45 and 46 from wearing partially. The remaining structures and operations of the present embodiment are the same as those of the fourth embodiment shown in Fig. 10. Therefore, equivalent parts are given the same designations and thus the duplicate description thereof is omitted here.

By the way, the structure according to the above-mentioned eighth embodiment can also be applied to the structure according to the fifth embodiment shown in Fig. 11. In this case, as the steering column 4b rotates, the nut member is rotated with respect to the nut holder through the screw shaft 35.

Also, when the structure according to the above-mentioned eighth embodiment is applied to the previously described linear motor structure, of the moving element and hold member cooperating together in constituting the moving member, the moving element is formed similarly to the above-mentioned nut member 44b, while the hold member is formed similarly to the nut holder 43a.

According to the foregoing embodiments 1 to 8, there can be provided the following steering apparatus. That is, the present tilt type electric steering apparatus comprises: a vehicle body side bracket to be fixed to a vehicle body; a steering column which supports a steering shaft in the inside thereof in such a manner that the steering shaft can be rotated, and also which can be oscillated about a tilt pivot shaft perpendicular to a direction parallel to or coincident with the center axis of the steering shaft; and, an electric actuator which includes a screw shaft or a fixed member supported on one of the vehicle body side bracket and steering column, a moving member supported on the other of the vehicle body side bracket and steering column, and an electric motor, and also which, by driving the electric motor, can move the moving member with respect to the screw shaft or fixed member to thereby oscillate the steering column about the tilt pivot shaft. In the present tilt type electric steering apparatus, the moving member is composed of a first element disposed on the steering column side and a second element disposed on the vehicle body side bracket side; a connecting element portion, which is fixed to one of the first and second elements or to one of the steering column and vehicle body side bracket, is supported in such a manner that it can be rotated about a rotation center axis parallel to the tilt pivot shaft with respect to the other of the first and second elements or with respect to the other of the steering column and vehicle body side bracket; and, the first and second elements may also formed such that they can be shifted with respect to each other in a direction perpendicular not only to the rotation center axis of the connecting element portion but also to the longitudinal direction of the screw shaft or fixed member.

Further, the electric actuator may also include a screw shaft which can be rotated when the electric motor is driven; one of the first and second elements may be a nut holder, while the other may be a nut member; the nut holder may be supported in such a manner that it can be rotated about the rotation center axis of the connecting element portion with respect to the steering column or vehicle body side bracket; and, the nut member may be held in the inside of the nut holder in such a manner that it can be slided in a direction perpendicular not only to the rotation center axis of the connecting element portion but also to the longitudinal direction of the screw shaft.

Also, the nut member may also have a cylindrical-shaped outer peripheral surface the center axis of which is an axis perpendicular not only to the rotation center axis of the connecting element portion but also to the longitudinal direction of the screw shaft; a part of the inner surface of the nut holder may be formed as a cylindrical-shaped portion having the same center axis as the outer peripheral surface of the nut member; and, the outer peripheral surface of the nut member may be engaged with the cylindrical-shaped portion of the inner surface of the nut holder in such a manner that it can be slided in its circumferential direction.

The two end portions of the nut holder may also be supported in such a manner that they can be rotated with respect to the steering column.

Also, the screw shaft may also include, in the outer peripheral surface thereof, a male screw portion which is formed by rolling.

Of a pair of mutually slidingly contactable surfaces of the first and second elements which are disposed respectively on the steering column side and on the vehicle body bracket side and cooperate together in constituting the moving member, at least in one slidingly contactable surface, there may also be formed a groove portion for holding grease.

[Embodiment 9]

Now, in the following embodiments 9 and 10, description will be given of an example in which the invention is applied to a tilt/telescopic type electric steering apparatus for adjusting both of the vertical direction position and back-and-forth direction position of a steering wheel.

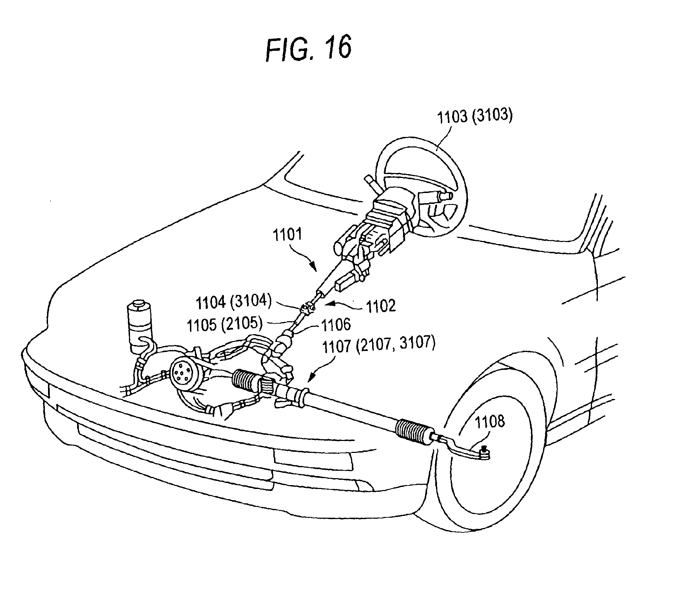

Fig. 16 is a perspective view of the whole of an electric steering apparatus 1101 according to the invention, showing a state in which the electric steering apparatus 1101 is mounted on a vehicle. The electric steering apparatus 1101 includes a steering shaft 1102, while the steering shaft 1102 is supported in such a manner that it can be rotated. On the upper end (vehicle body rear side end) of the steering shaft 1102, there is mounted a steering wheel 1103; and, to the lower end (vehicle body front side end) of the steering shaft 1102, there is connected an intermediate shaft 1105 through a universal joint 1104.

To the lower end of the intermediate shaft 1105, there is connected a universal joint 1106; and, to the universal joint 1106, there is connected a steering gear 1107 which is composed of a rack-and-pinion mechanism and the like.

When a driver operates and rotates the steering wheel 1103, the rotation force of the steering wheel 1103 is transmitted through the steering shaft 1102, universal joint 1104, intermediate shaft 1105 and universal joint 1106 to the steering gear 1107, so that a tie rod 1108 is caused to move through the rack-and-pinion mechanism to thereby be able to change the steering angle of a wheel.

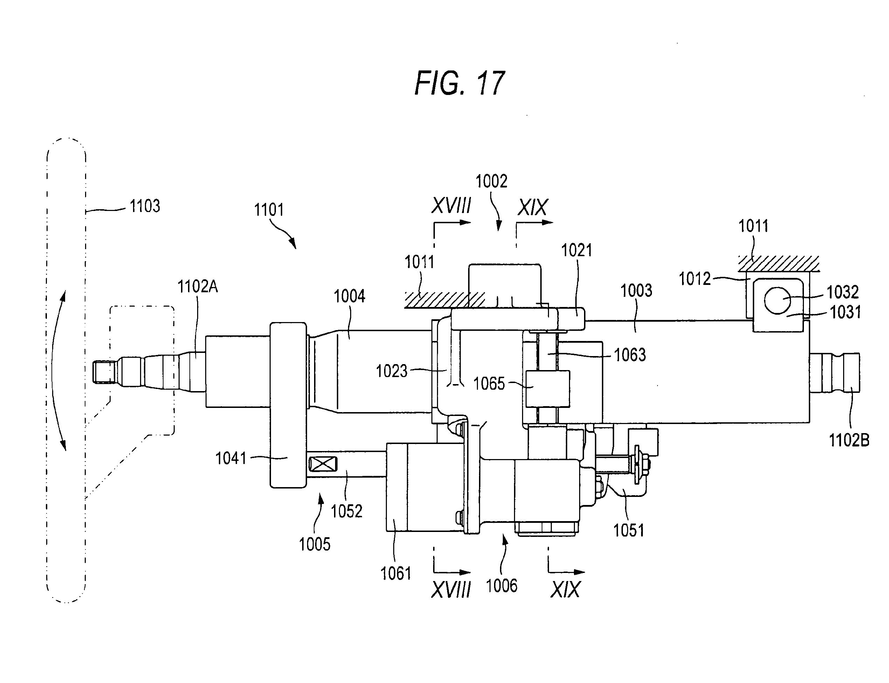

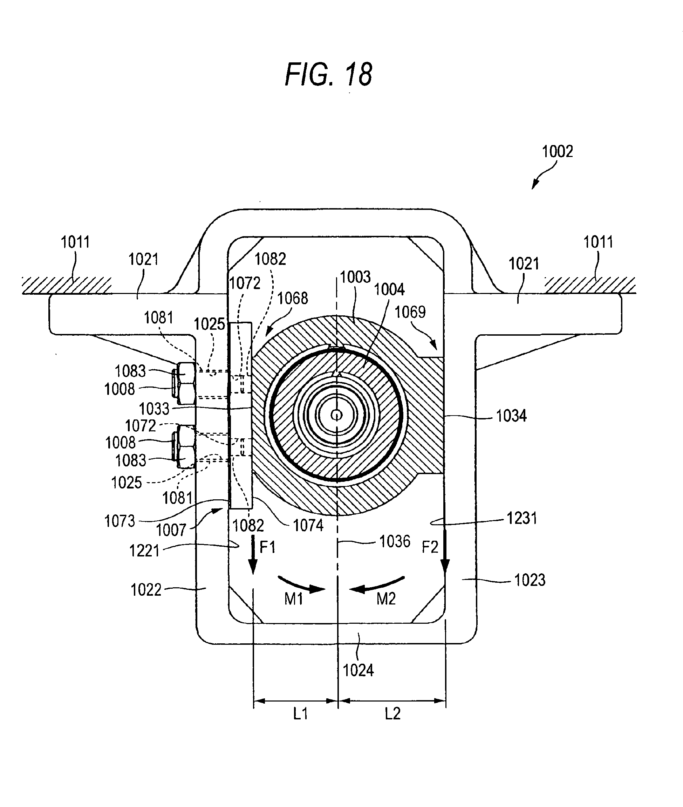

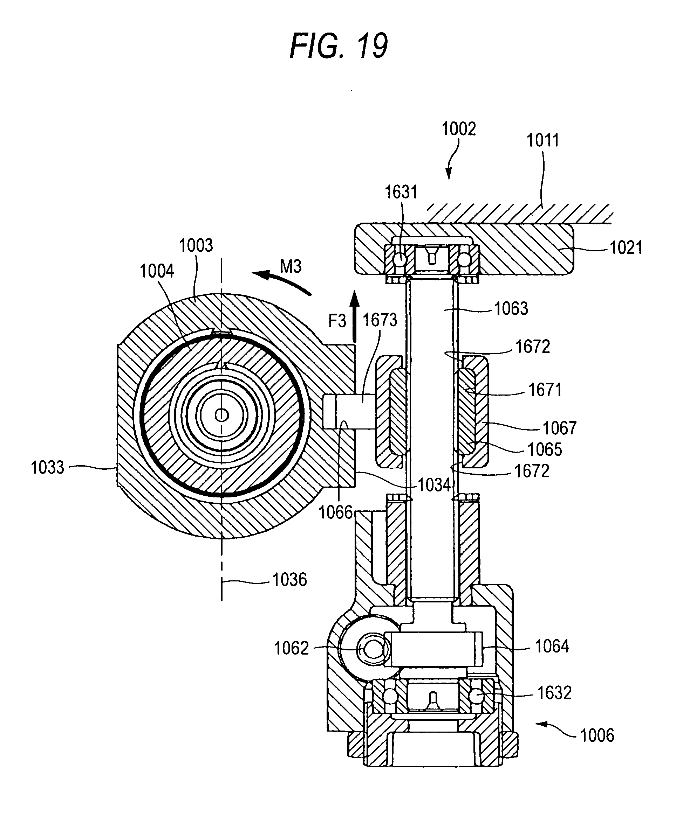

Fig. 17 is a front view of the main portions of the electric steering apparatus 1101 according to the embodiment 9 of the invention. Fig. 18 is a section view taken along the XVIII-XVIII line shown in Fig. 17, showing a tilt sliding portion which is interposed between a vehicle body mounting upper bracket and a column. Fig. 19 is a section view taken along the XIX-XIX shown in Fig. 17, showing the main portions of a tilt drive mechanism.

As shown in Figs. 17 to 19, the electric steering apparatus 1101 according to the invention includes a vehicle body mounting upper bracket 1002, a lower column (outer column) 1003, an upper column (inner column) 1004 and the like.

The vehicle body mounting upper bracket 1002, which is disposed on the rear side of a vehicle body 1011, includes an upper plate 1021 which is fixed to the vehicle body 1011. A bracket 1031 is provided on the vehicle body front side end portion of the lower column 1003 integrally therewith, while the bracket 1031 is connected to a vehicle body mounting lower bracket 1012 by a tilt center shaft 1032. The vehicle body mounting lower bracket 1012 is fixed to the vehicle body 1011.

With the tilt center shaft 1032 as a fulcrum thereof, the vehicle body front side end portion of the hollow cylindrical-shaped lower column 1003 is rotatably supported on the vehicle body 1011 in such a manner that it is capable of tilt position adjustment (capable of oscillating in a plane parallel to the sheet surface of Fig. 17). That is, in the present embodiment according to the invention, the vehicle body mounting upper bracket 1002 and vehicle body mounting lower bracket 1012 are structured by separate members respectively. However, the vehicle body mounting upper bracket 1002 and vehicle body mounting lower bracket 1012 may also be made of a single vehicle body mounting bracket as a unified body.

With the inner periphery of the lower column 1003, there is fitted the upper column 1004 in such a manner that it is capable of telescopic position adjustment (capable of oscillating parallel to the center axis of the lower column 1003). On the upper column 1004, there is rotatably supported an upper steering shaft 1102A; and, to the vehicle body rear side (in Fig. 17, the left side) end portion of the upper steering shaft 1102A, there is fixed the steering wheel 1103.

On the lower column 1003, there is rotatably supported a lower steering shaft 1102B, while the lower steering shaft 1102B is spline fitted with the upper steering shaft 1102A. Therefore, regardless of the telescopic position of the upper column 1004, the rotation of the upper steering shaft 1102A can be transmitted to the lower steering shaft 1102B.

The vehicle body front side (in Fig. 17, the right side) of the lower steering shaft 1102B is connected through the universal joint 1104 (see Fig. 16) to the steering gear 1107 (see Fig. 16). Thus, when the driver turns the steering wheel 1103 by hands, the lower steering shaft 1102B is rotated through the upper steering shaft 1102A to thereby be able to change the steering angle of the wheel.

On the upper plate 1021 of the vehicle body mounting upper bracket 1002, there are provided a left side plate 1022 and a right side plate 1023 which are parallel to each other and extend downward from the upper plate 1021 respectively. The left side surface 1033 and right side surface 1034 of the lower column 1003 are held by and between the inner surfaces 1221 and 1231 of the left side plate 1022 and right side plate 1023 in such a manner that they are capable of tilt sliding.

Between the left side surface 1033 of the lower column 1003 and the inner surface 1221 of the left side plate 1022 of the vehicle body mounting upper bracket 1002, there is inserted a spacer 1007. Also, the lower ends of the left side plate 1022 and right side plate 1023 are connected together by a lower plate 1024. The upper plate 1021, left side plate 1022, right side plate 1023 and lower plate 1024 cooperate together in forming a closed rectangular shape, thereby enhancing the rigidity of the vehicle body mounting upper bracket 1002.

On the outer periphery of the lower surface of the lower column 1003, there is mounted a telescopic drive mechanism 1005 which carries out a telescopic position adjustment. Also, on the lower portions of the left side plate 1022 and right side plate 1023 of the vehicle body mounting upper bracket 1002, there is mounted a tilt drive mechanism 1006 which executes a tilt position adjustment.

A worm 1062, which is mounted on the output shaft (not shown) of a tilting motor 1061 for the tilt drive mechanism 1006, is meshingly engaged with a worm wheel 1064 mounted on the lower portion of a feed screw shaft 1063 (see Figs. 17 and 18) to thereby transmit the rotation of the tilting motor 1061 to the feed screw shaft 1063.

The feed screw shaft 1063 extends perpendicularly (in Figs. 17 and 19, in the vertical direction) to the center axis of the tilting motor 1061, while the upper and lower ends of the feed screw shaft 1063 are rotatably supported on the vehicle body mounting upper bracket 1002 by bearings 1631, 1632.

The feed screw shaft 1063 includes a male screw formed in its outer periphery; and, with this male screw, there is threadedly engaged a prism-shaped feed nut 1065. The feed screw shaft 1063 and feed nut 1065 cooperate together in constituting a feed screw mechanism for tilt driving. As the feed screw shaft 1063 rotates, the feed nut 1065 moves linearly in the vertical direction.

With the outer surface of the prism-shaped outer periphery of the feed nut 1065, there is fitted a rectangular hole 1671 which is formed in a prism-shaped nut holder 1067. As a result of this, the nut holder 1067 is connected to the feed nut 1065 in such a manner that it can be slided with respect to the feed nut 1065 substantially parallel to the center axis of the lower column 1003 (parallel to the center axis of the tilting motor 1061).

Also, in the nut holder 1067, specifically, in the right-and-left-direction (when viewed in Fig. 19) central portions of the upper and lower surfaces of the nut holder 1067, there are formed elongated holes 1672, 1672 which are long in a direction parallel to the center axis of the lower column 1003 (in Fig. 19, a direction perpendicular to the sheet surface of Fig. 19; in Fig. 17, in the right and left direction). The feed screw shaft 1063 is inserted through these elongated holes 1672, 1672 into the nut holder 1067. Further, with the male screw portion of the feed screw shaft 1063 inserted through the elongated holes 1672, 1672 into the nut holder 1067, there is threadedly engaged a female screw portion formed in the feed nut 1065.

Also, as shown in Fig. 19, in the right side surface 1034 of the lower column 1003, there is formed an engaging hole 1066 having a circular-shaped section. Into this engaging hole 1066, there is fitted a columnar-shaped tilt drive force transmission projection 1673 which is provided on and projected from the left side surface of the nut holder 1067 in such a manner that the tilt drive force transmission projection 1673 can be rotated with respect to the engaging hole 1066.

Therefore, when the feed nut 1065 is connected to the lower column 1003 through this nut holder 1067, a position, where the feed nut 1065 is connected to the lower column 1003, the center position of the feed nut 1065 (the center position of the feed screw shaft 1063) are allowed to shift in the axial direction of the lower column 1003, thereby being able to absorb a shift difference between the movements of the feed nut 1065 and lower column 1003 in the axial direction of the lower column 1003.

Also, in order that the feed nut 1065 and nut holder 1067 can be smoothly slided with respect to each other parallel to the axial direction of the lower column 1003, there is formed a slight clearance between the outer periphery of the feed nut 1065 and the rectangular hole 1671 of the nut holder 67.

On the outer periphery of the lower surface of the lower column 1003, there is mounted a telescoping motor 1051 which is shown in part in Fig. 17. To the outer periphery of the lower surface of the lower column 1003, there is fixed a feed screw shaft 1052 which extends parallel to the center axis of the lower column 1003, while the vehicle body rear end (in Fig. 17, the left end) of the feed screw shaft 1052 is connected to the lower end of a flange 1041 which is fixed to the vehicle body rear end of the upper column 1004.

The rotation of a worm mounted on the output shaft (not shown) of the telescoping motor 1051 is transmitted to a worm wheel (not shown) to thereby rotate a feed nut (not shown) which is threadedly engaged with the feed screw shaft 1052. The rotation of the feed nut causes the feed screw shaft 1052 to reciprocate (in Fig. 17, to move back and forth in the right and left direction), thereby adjusting the telescopic position of the upper column 1004.

In the present electric steering apparatus 1101, when there arises the need to adjust the tilt position of the steering wheel 1103, the driver operates a switch (not shown) to rotate the tilting motor 1061 in either forward or reverse direction. As a result of this, owing to the rotation of the tilting motor 1061, the feed screw shaft 1063 is rotated, while the feed nut 1065 is moved linearly.

In response to this, the tilt drive force transmission projection 1673 of the nut holder 1067 fitted with the outer surface of the feed nut 1065 moves linearly. Since the tilt drive force transmission projection 1673 is engaged with the engaging hole 1066 formed in the right side surface 1034 of the lower column 1003, at the position of engagement between the tilt drive force transmission projection 1673 and engaging hole 1066, a thrust force going in the vertical direction in Fig. 19 is applied to the lower column 1003. As a result of this, the lower column 1003 is tiltingly moved upward or downward with the tilt center shaft 1032 as a fulcrum thereof.

Also, in the present electric steering apparatus 1101, when there arises the need to adjust the telescopic position of the steering wheel 1103, the driver operates a switch (not shown) to rotate the telescoping motor 1051 in either forward or reverse direction. As a result of this, owing to the rotation of the telescoping motor 1051, the feed screw shaft 1052 is moved parallel to the center axis of the lower column 1003, whereby the upper column 1004 is moved in a telescopic manner.

In the left side plate 1022 of the vehicle body mounting upper bracket 1002, there are provided two female screws 1025, 1025 which are spaced from each other in the vertical direction in Fig. 18 (in the tilt position adjusting direction), while the female screws 1025, 1025 penetrate through the left side plate 1022 respectively. Into the female screws 1025, 1025, there are screwed the male screws 1081, 1081 of adjusting screws 1008, 1008, respectively. In the right end portions of the adjusting screws 1008, 1008, there are formed shaft portions 1082, 1082 the diameters of which are respectively smaller than the outside diameters of the male screws 1081, 1081.

In the spacer 1007, there are formed two through holes 1072, 1072 which are spaced from each other, while the spacing between them is the same as the spacing between the female screws 1025, 1025 in the vertical direction. The inside diameters of these through holes 1072, 1072 are set slightly larger than the outside diameters of the shaft portions 1082, 1082 respectively. Therefore, when the male screws 1081, 1081 of the adjusting screws 1008, 1008 are screwed into the female screws 1025, 1025 at a position where the shaft portions 1082, 1082 are in phase with the through holes 1072, 1072, the shaft portions 1082, 1082 are fitted into the through holes 1072, 1072, respectively. As a result of this, the spacer 1007 can be held at a given position between the inner surface 1221 of the vehicle body mounting upper bracket 1002 and the left side surface 1033 of the lower column 1003.

When the male screws 1081, 1081 of the adjusting screws 1008, 1008 are screwed in further, step surfaces between the male screws 1081, 1081 and shaft portions 1082, 1082 are contacted with the outer surface 1073 of the spacer 1007 to thereby be able to press the spacer 1007 against the left side surface 1033 of the lower column 1003. As a result of this, even when a clearance between the inner surface 1221 of the vehicle body mounting upper bracket 1002 and the left side surface 1033 of the lower column 1003 is inclined, by adjusting properly the amount of screwing of the male screws 1081, 1081 of the adjusting screws 1008, 1008, the inner surface 1074 of the spacer 1007 can be uniformly contacted with the left side surface 1033 of the lower column 1003.

Therefore, the tilt sliding resistance between the lower column 1003 and right side plate 1023 as well as the tilt sliding resistance between the lower column 1003 and spacer 1007 can be set for desired sliding resistance and, regardless of the tilt angles, the tilt sliding resistance during the tilting operation can be maintained constant. After the adjustments of the adjusting screws are completed, lock nuts 1083, 1083 are screwed into the male screws 1081, 1081 of the adjusting screws 1008, 1008 to thereby prevent the adjusting screws 1008, 1008 from loosening.

As shown in Fig. 18, where the distance from the center axis 1036 of the lower column 1003 to the left side surface 1033 of the lower column 1003 is expressed as L1 and the distance from the center axis 1036 of the lower column 1003 to the right side surface 1034 of the lower column 1003 is expressed as L2, L2 is set longer than L1.

Accordingly, description will be given here of a case in which, in the present electric steering apparatus 1101, as there arises the need to adjust the tilt position of the steering wheel 1103 to the upward direction, the tilting motor 1061 is rotated to thereby move, for example, the feed nut 1065 linearly in the upward direction in Fig. 19.

In this case, the lower column 1003 tilt-moves in the upward direction with the tilt center shaft 1032 as a fulcrum thereof and thus, to the lower column 1003, as shown in Fig. 19, there is applied a thrust force F3 going upward in Fig. 19 at the engaging position between the tilt drive force transmission projection 1673 and engaging hole 1066. Owing to this thrust force F3, onto the lower column 1003, there is applied counter-clockwise rotation moment M3 with the center axis 1036 of the lower column 1003 as a center thereof.

When the lower column 1003 moves upwardly with the tilt center shaft 1032 as a fulcrum thereof, to the contact surface (left side tilt sliding surface 1068) between the left side surface 1033 of the lower column 1003 and the inner surface 1074 of the spacer 1007 as well as to the contact surface (right side tilt sliding surface 1069) between the right side surface 1034 of the lower column 1003 and the inner surface 1231 of the right side plate 1023, due to the frictional force thereof, there are applied reactive forces F1 and F2 which go downward in Fig. 18, respectively.

Here, a load to be applied to the left side tilt sliding surface 1068 in a direction perpendicular to the left side tilt sliding surface 1068 due to the pressing forces of the adjusting screws 1008, 1008 is expressed as N1, and a load to be applied to the right side tilt sliding surface 1069 in a direction perpendicular to the right side tilt sliding surface 1069 due to the pressing forces of the adjusting screws 1008, 1008 is expressed as N2. Also, where the frictional coefficient of the left side tilt sliding surface 1068 is expressed as $\mu$l and the frictional coef-

ficient of the right side tilt sliding surface 1069 is expressed as $\mu$2, there are obtained the reactive forces F1 and F2 in the following manner: that is, F1 = N1 x $\mu$l and F2 = N2 x $\mu$2.

Also, owing to these reactive forces F1 and F2, to the lower column 1003, there are applied the counter-clockwise rotation moment M1 and the clockwise rotation moment M2 respectively with the center axis 1036 of the lower column 1003 as the center thereof. Specifically, the counter-clockwise rotation moment M1 and the clockwise rotation moment M2 can be expressed in the following manner respectively: that is, M1 = N1 x $\mu$l x L1, and M2 = N2 x $\mu$2 x L2.

When the loads N1 and N2 are almost the same and the coefficients of friction $\mu$1 and $\mu$2 are the same, since the distance L2 is set longer than the distance L1, the clockwise rotation moment M2 is larger than the counter-clockwise rotation moment M1, whereby the clockwise rotation moment M4 = M2 - M1 is applied onto the lower column 1003.

As a result of this, the counter-clockwise rotation moment M3, which is applied to the lower column 1003 due to the thrust force F3, is cancelled by the clockwise rotation moment M4 to thereby reduce the counter-clockwise rotation moment M3.

That is, of the left and right side surface of the lower column 1003, since the feed screw shaft 1063 for applying the tilt driving thrust force is disposed on the side of the right side surface 1034 which is more distant from the center axis 1036 of the lower column 1003 than the left side surface 1033,

there is applied the rotation moment going in a direction to cancel the rotation moment that is applied to the lower column 1003 due to the thrust force.

This can reduce the partial wear of the tilt sliding surface between the lower column 1003 and vehicle body mounting upper bracket 1002 as well as the partial wear of the feed nut 1065, whereby not only the tilt position adjustment can be carried out smoothly but also the durability of the tilt drive portion can be enhanced.

In the embodiment 9, the feed screw shaft 1063 for applying the tilt driving thrust force is disposed on the side of the right side surface 1034 which is more distant from the center axis 1036 of the lower column 1003 than the left side surface 1033. Alternatively, however, the distance from the center axis 1036 of the lower column 1003 to the left side surface 1033 of the lower column 1003 may be set longer than the distance from the center axis 1036 of the lower column 1003 to the right side surface 1034 of the lower column 1003, and the feed screw shaft 1063 for applying the tilt driving thrust force may be disposed on the side of the left side surface 1033.

[Embodiment 10]

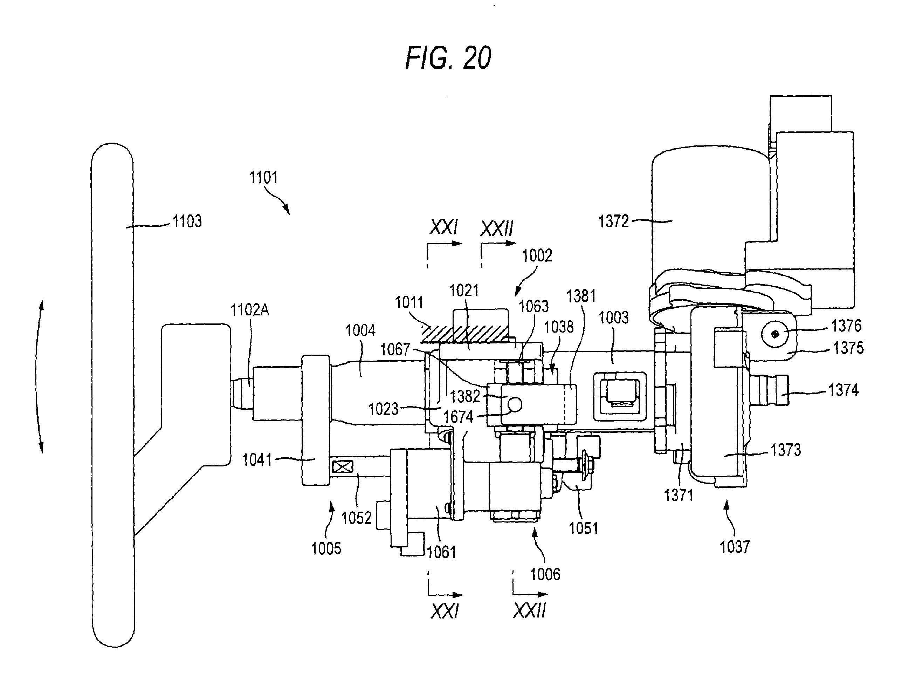

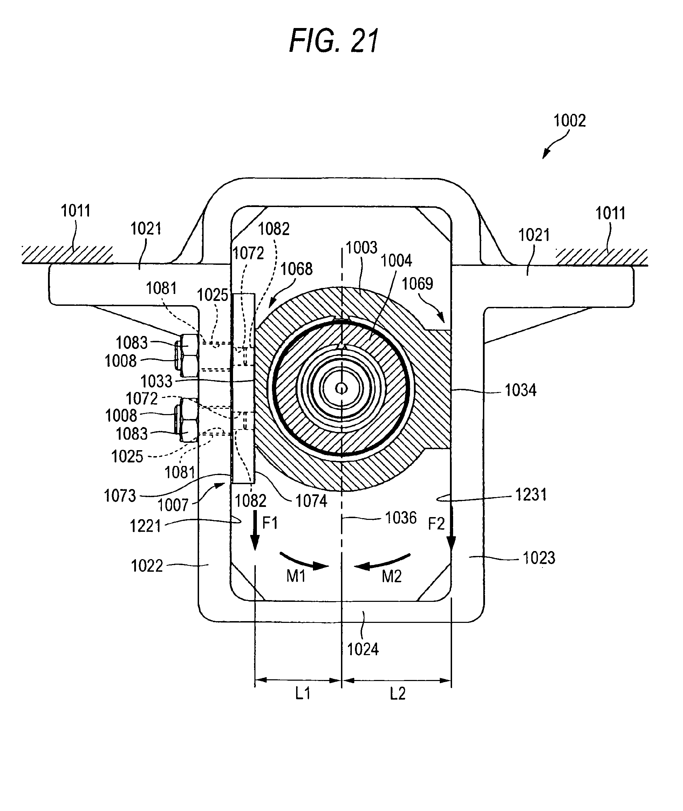

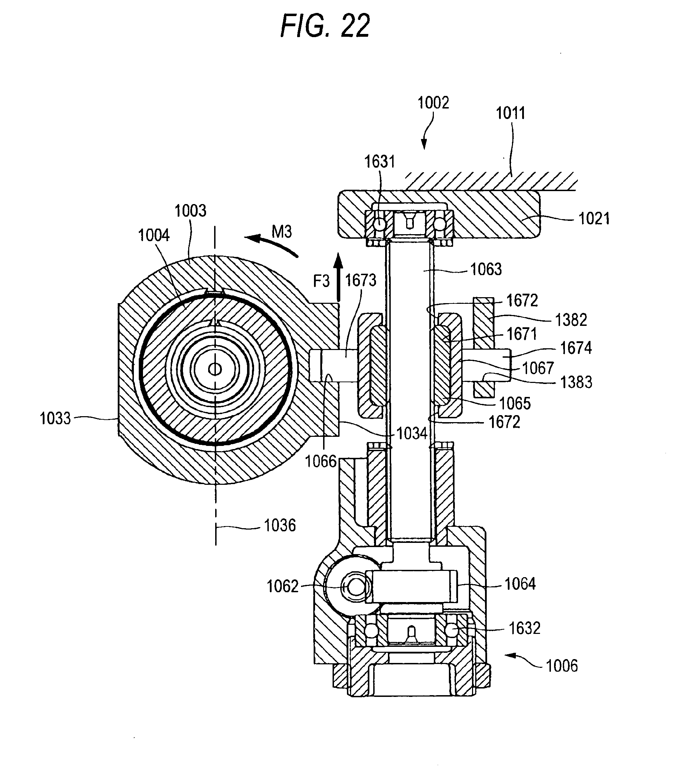

Next, description will be given below of an embodiment 10 according to the invention. Fig. 20 is a front view of the main portions of an electric steering apparatus 1101 according to the embodiment 10 of the invention. Fig. 21 is a section view taken along the XXI-XXI line shown in Fig. 20, showing a tilt sliding portion between a vehicle mounting upper bracket and a column. Fig. 22 is a section view taken along the -D line shown in Fig. 20, showing the main portions of a tilt drive mechanism. In the following description, only the parts different in structure from the previously described embodiment will be discussed and the duplicate description is omitted here. Also, description will be given of the same parts while the same reference numerals are given to them.

In the embodiment 10, there is shown an example in which the invention is applied to a steering apparatus including a steering auxiliary mechanism for applying a given steering auxiliary force through a reduction mechanism using the drive force of a steering auxiliary motor. Also, the frictional coefficient of a tilt slide surface that is less distant from the center axis 1036 of the lower column 1003 is set smaller than the frictional coefficient of a tilt slide surface that is more distant from the center axis 1036 of the lower column 1003, thereby increasing the rotation moment which is applied in a direction to cancel the rotation moment applied to the lower column 1003 due to the thrust force.

As shown in Figs. 20 to 22, the electric steering apparatus 1101 according to the embodiment 10 of the invention includes a vehicle body mounting upper bracket 1002, a lower column (outer column) 1003, a steering auxiliary portion 1037 (electric assist mechanism), an upper column (inner column) 1004 and the like.

The vehicle body mounting upper bracket 1002 includes an upper plate 1021 which is fixed to a vehicle body 1011. To the vehicle body front side (right side) of the lower column 1003, there is fixed the left end of a housing 1371 for the steering auxiliary portion (electric assist mechanism) 1037. The steering auxiliary portion 1037 includes an electric motor 1372, a reduction gear box portion 1373, an output shaft 1374 and the like. The steering auxiliary portion 1037 is supported on the vehicle body 1011 by a lower vehicle body mounting bracket 1375 through a tilt center shaft 1373 in such a manner that it is capable of tilt position adjustment (it can be oscillated within a plane parallel to the sheet surface of Fig. 20).

With the inner periphery of the lower column 1003, there is fitted the upper column 1004 in such a manner that it is capable of telescopic position adjustment (it can be slided parallel to the center axis of the lower column 1003). On the upper column 1004, there is supported an upper steering shaft 11 02A in such a manner that it can be rotated. To the vehicle body rear side (in Fig. 20, the left side) end portion of the upper steering shaft 1102A, there is fixed a steering wheel 1103.

On the lower column 1003, there is rotatably supported a lower steering shaft (not shown), while this lower steering shaft is spline fitted with the upper steering shaft 1102A. Therefore, regardless of the telescopic position of the upper column 1004, the rotation of the upper steering shaft 1102A can be transmitted to the lower steering shaft.

The steering auxiliary portion 1037 detects the torque that acts on the lower steering shaft, drives the electric motor 1372, rotates the output shaft 1374 with a desired steering auxiliary force, and connects the rotation of the output shaft 1374 to a steering gear 1107 through an intermediate shaft 1105 shown in Fig. 16 to be connected to the vehicle body front side, thereby being able to change the steering angle of the wheel of the vehicle.

On the upper plate 1021 of the vehicle body mounting upper bracket 1002, there are provided a left side plate 1022 and a right side plate 1023 which are parallel to each other and respectively extend downwardly from the upper plate 1021. The left side surface 1033 and right side surface 1034 of the lower column 1003 are slidably held by and between the inner surfaces 1221 and 231 of the left and right side plates 1022 and 1023. That is, the right side surface 1034 of the lower column 1003 is in direct contact with the inner surface 1231 of the right side plate 1023 of the vehicle body mounting upper bracket 1002.

Also, the lower ends of the left and right side plates 1022 and 1023 are connected together by a lower plate 1024; and, the upper plate 1021, left side plate 1022, right side plate 1023 and lower plate 1024 cooperate together in defining a closed rectangular shape, thereby enhancing the rigidity of the vehicle body mounting upper bracket 1002.

On the outer periphery of the lower surface of the lower column 1003, there is mounted a telescopic drive mechanism 1005 which is used to carry out a telescopic position adjustment. Also, downwardly of the left side plate 1022 and right side plate 1023 of the vehicle body mounting upper bracket 1002, there is mounted a tilt drive mechanism 1006 which is used to execute a tilt position adjustment.

A worm 1062, which is mounted on the output shaft of a tilting motor 1061 for the tilt drive mechanism 1006, is meshingly engaged with a worm wheel 1064 mounted downwardly of a feed screw shaft 1063 to thereby be able to transmit the rotation of the tilting motor 1061 to the feed screw shaft 1063.

The feed screw shaft 1063 extends perpendicularly (in Figs. 20 and 22, in the vertical direction) to the center axis of the tilting motor 1061, while the upper and lower ends of the feed screw shaft 1063 are rotatably supported on the vehicle body mounting upper bracket 1002 by bearings 1631 and 1632 respectively.

With a male screw formed in the outer periphery of the feed screw shaft 1063, there is threadedly engaged a prism-shaped feed nut 1065; and, the feed screw shaft 1063 and feed nut 1065 cooperate together in constituting a feed screw mechanism for tilt driving. As the feed screw shaft 1063 rotates, the feed nut 1065 moves linearly in the vertical direction.

With the outer surface of the prism-shaped outer periphery of the feed nut 1065, there is fitted a rectangular hole 1671 formed in a prism-shaped nut holder 1067. As a result of this, the nut holder 1067 is connected to the feed nut 1065 in such a manner that it can be slided with respect to the feed nut 1065 substantially parallel to the axial direction of the lower column 1003 (parallel to the center axis of the tilting motor 1061).

Also, the nut holder 1067 includes, in the central portions of the upper and lower surfaces thereof in the right and left direction (in Fig. 22), elongated holes 1672, 1672 which respectively extend parallel to the center axis direction of the lower column 1003 (in Fig. 22, in a direction perpendicular to the sheet surface of Fig. 22; in Fig. 20, in the right and left direction); and, the feed screw shaft 1063 are inserted through these elongated holes 1672, 1672 into the nut holder 1067. Also, the female screw of the feed nut 1065 is threadedly engaged with the male screw portion of the feed screw shaft 1063 that is inserted through these elongated holes 1672, 1672 into the nut holder 1067.

Also, as shown in Fig. 22, in the right side surface 1034 of the lower column 1003, there is formed an engaging hole 1066 having a circular section. Into this engaging hole 1066, there is fitted a cylindrical-shaped tilt drive force transmission projection 1673, which is provided on and projected from the left side surface of the nut holder 1067, in such a manner that it can be rotated with respect to the engaging hole 1066.

Therefore, when the feed nut 1065 is connected through the nut holder 1067 to the lower column 1003, not only the position, where the feed nut 1065 is connected to the lower column 1003, but also the center position of the feed nut 1065 (the center position of the feed screw shaft 1063) are allowed to shift in the axial direction of the lower column 1003, thereby being able to absorb a shift difference between the movements of the feed nut 1065 and lower column 1003 in the axial direction of the lower column 1003. Also, in order that the feed nut 1065 and nut holder 1067 can be smoothly slided with respect to each other in a direction parallel to the axial direction of the lower column 1003, there is formed a slight clearance between the outer periphery of the feed nut 1065 and the rectangular hole 1671 of the nut holder 1067.

Also, in the embodiment 10, differently from the embodiment 9, on the right side surface of the nut holder 1067, there is provided a cylindrical-shaped tilt drive force transmission projection 1674 which projects rightwards from the nut holder 1067. These tilt drive force transmission projections 1673 and 1674, when they are viewed in Fig. 22, are arranged on the same horizontal line and are coaxial with each other.

Further, in the embodiment 10, differently from the embodiment 9, to the right side surface 1034 of the lower column 1003, on the vehicle body front side (in Fig. 20, on the right side) of the nut holder 1067, there is fixed the base end portion 1381 of an L-shaped (when viewed from above in Figs. 20 and 22) arm portion 1038. A rear extension portion 1382 bent in an L-shaped manner in the vehicle body rear side direction from the base end portion 1381 and extends parallel to the right side surface 1034 of the lower column 1003 in the vehicle body rear side direction. An engaging hole 1383 is formed on the rear extension portion 1382.

And, the tilt drive force transmission projection 1674 is fitted into the engaging hole 1383 in such a manner that it can be rotated with respect to the engaging hole 1383. According to this structure, when adjusting the tilt position of the steering wheel 1103, the rotation of the nut holder 1067 with respect to the lower column 1003 can be carried out more smoothly and more stably. As a result of this, the arc-shaped motion of the lower column 1003 with the tilt center shaft 1376 as a fulcrum thereof can be carried out more smoothly and more stably.

As the feed screw shaft 1063 rotates, the lower column 1003, in the tilt position adjusting operation, oscillates along an arc-shaped locus (oscillates in a plane parallel to the sheet surface of Fig. 20) with the tilt center shaft 1376 as a fulcrum thereof

On the outer periphery of the lower surface of the lower column 1003, there is mounted a telescoping motor 1051. To the outer periphery of the lower surface of the lower column 1003, there is fixed a feed screw shaft 1052 which extends parallel to the center axis of the lower column 1003, while the vehicle body rear side end (in Fig. 20, the left end) of the feed screw shaft 1052 is connected to the lower end of a flange 1041 which is fixed to the vehicle body rear side end of the upper column 1004.

The rotation of a worm mounted on the output shaft (not shown) of the telescoping motor 1051 is transmitted to a worm wheel (not shown) to thereby rotate a feed nut (not shown) which is threadedly engaged with the feed screw shaft 1052. The rotation of this feed nut causes the feed screw shaft 1052 to reciprocates (causes the feed screw shaft 1052 to move back and forth in the right and left direction in Fig. 20), thereby adjusting the telescopic position of the upper column 1004.

In the left side plate 1022 of the vehicle body mounting upper bracket 1002, there are formed two female screws 1025 and 1025 which are spaced from each other in the vertical direction in Fig. 21 (in the tilt position adjusting direction), while these two female screws 1025 and 1025 respectively penetrate through the left side plate 1022. Into the female screws 1025 and 1025, there are screwed the male screws 1081 and 1081 of adjusting screws 1008 and 1008 respectively. In the right end portions of the adjusting screws 1008 and 1008, there are formed shaft portions 1082 and 1082 the diameters of which are smaller than the outside diameters of the male screws 1081 and 1081 respectively.

In a spacer 1007, there are opened up two through holes 1072 and 1072 which are spaced from each other by the same distance between the female screws 1025 and 1025 in the vertical direction, while the inside diameters of these through holes 1072 and 1072 are set slightly larger than the outside diameters of the shaft portions 1082 and 1082. Therefore, when the male screws 1081 and 1081 of the adjusting screws 1008 are screwed in at the position where the shaft portion 1082 and 1082 are in phase with the through holes 1072 and 1072, the shaft portions 1082 and 1082 can be fitted into the through holes 1072 and 1072 respectively. As a result of this, the spacer 1007 can be held at a given position at the inner surface 1221 of the vehicle body mounting upper bracket 1002 and the left side surface 1033 of the lower column 1003.

As shown in Fig. 21, where the distance from the center axis 1036 of the lower column 1003 to the left side surface 1033 of the lower column 1003 is expressed as L1 and the distance from the center axis 1036 of the lower column 1003 to the right side surface 1034 of the lower column 1003 is expressed as L2, in the embodiment 10 as well, similarly to the embodiment 9, L2 is set longer than L1.

Further, according to the embodiment 10 of the invention, in order to reduce the frictional coefficient of the contact surface (the left side tilt sliding surface 1068) between the left side surface 1033 of the lower column 1003 and the inner surface 1074 of the spacer 1007 in the tilt sliding operation, the left side tilt sliding surface 1068 is coated with a solid lubricant. That is, at least one of the inner surface 1074 of the spacer 1007 and the left side surface 1033 of the lower column 1003 is coated with a solid lubricant.

As the solid lubricant, there can be used various lubricants. Preferably, the solid lubricant may be made of molybdenum disulfide (MoS2), tetrafluoro-ethylene (PTFE), graphite, graphite fluoride, boron nitride (BN), tungsten disulfide (WS2), melamine cyanurate (MCA), or the like.

Therefore, according to present electric steering apparatus 1101, when there arises the need to adjust the tilt position of the steering wheel 1103 upwardly, the tilting motor 1061 may be rotated to thereby move the feed nut 1065 linearly in the upward direction in Fig. 22. In response to this, the lower column 1003 is tilt-moved upwardly with the tilt center shaft 1376 as a fulcrum thereof and, to the lower column 1003, as shown in Fig. 22, there is applied a thrust force F3 which goes in the upward direction in Fig. 22. Owing to this thrust force F3, to the lower column 1003, there is applied the counter-clockwise rotation moment M3 with the center axis 1036 of the lower column 1003 as a center thereof

As the lower column 1003 tilt-moves upwardly with the tilt center shaft 1376 as a fulcrum thereof, to the contact surface (the left tilt sliding surface 1068) between the left side surface 1033 of the lower column 1003 and the inner surface 1074 of the spacer 1007 as well as to the contact surface (the right side tilt sliding surface 1069) between the right side surface 1034 of the lower column 1003 and the inner surface 1231 of the right side plate 1023, due to the frictional force, there are respectively applied reactive forces F1 and F2 which go in the downward direction in Fig. 21.

Here, a load to be applied to the left side tilt sliding surface 1068 in a direction perpendicular to the left side tilt sliding surface 1068 due to the pressing forces of the adjusting screws 1008 is expressed as N1, and a load to be applied to the right side tilt sliding surface 1069 in a direction perpendicular to the right side tilt sliding surface 1069 due to the pressing forces of the adjusting screws 1008 is expressed as N2. Also, where the frictional coefficient of the left side tilt sliding surface 1068 is expressed as $\mu$1 and the frictional coefficient of the right side tilt sliding surface 1069 is expressed as $\mu$2, there are obtained the reactive forces F1 and F2 such that F1 =N1 x $\mu$1 and F2 = N2 x $\mu$2.

Also, owing to these reactive forces F1 and F2, to the lower column 1003, there are applied the counter-clockwise rotation moment M1 and the clockwise rotation moment M2 respectively with the center axis 1036 of the lower column 1003 as the center thereof Specifically, the counter-clockwise rotation moment M1 and clockwise rotation moment M2 can be expressed such that M1 = N1 x $\mu$1 x L1 and M2 =N2x$\mu$2xL2.

The loads N1 and N2 are substantially the same, the frictional coefficient $\mu$1 is smaller than the frictional coefficient $\mu$2 due the action of the solid lubricant, and the distance L2 is set longer than the distance L1. Therefore, the clockwise rotation moment M2 is larger than the counter-clockwise rotation moment M1, with the result that the clockwise rotation moment M4 (M4 = M2 - M1) is applied to the lower column 1003. Accordingly, the clockwise rotation moment M4 is larger than in the embodiment 9.

As a result of this, the counter-clockwise rotation moment M3 applied to the lower column 1003 due to the thrust force F3 in Fig. 22 is cancelled by the clockwise rotation moment M4. Thus, the counter-clockwise rotation moment M3 is smaller than in the embodiment 9.

That is, of the left and right side surfaces of the lower column 1003, since the feed screw shaft 1063 for applying the tilt driving thrust force is disposed on the side of the right side surface 1034 which is more distant from the center axis 1036 of the lower column 1003 than the left side surface 1033, and also since the frictional coefficient $\mu$1 is set smaller than the frictional coefficient $\mu$2, the rotation moment applied in a direction to cancel the rotation moment acting onto the lower column 1003 due to the thrust force is larger than in the embodiment 9.

This can reduce the partial wear of the tilt sliding surface between the lower column 1003 and vehicle body mounting upper bracket 1002 as well as the partial wear of the feed nut 1065, whereby not only the tilt position adjustment can be carried out smoothly but also the durability of the tilt drive portion can be enhanced.

As a modification of the embodiment 10, the distance from the center axis 1036 of the lower column 1003 to the left side surface 1033 of the lower column 1003 may be set longer than the distance from the center axis 1036 of the lower column 1003 to the right side surface 1034 of the lower column 1003, the feed screw shaft 1063 for applying the tilt driving thrust force may be disposed on the left side surface 1033 side, and the frictional coefficient of the right side tilt sliding surface 1069 may be set smaller than that of the left side tilt sliding surface 1068.

In the above-mentioned coating method for coating the tilt sliding surface of the lower column 1003 and spacer 1007 with the solid lubricant, because the solid lubricant can be applied onto the tilt sliding surface while the shapes of the lower column 1003 and spacer 1007 remain as they are, neither the number of parts nor the weight of the parts can be increased, and the assembling procedure thereof remains unchanged.

Further, in the embodiments 9 and 10, the lower column 1003 is made of an outer column and the upper column 1004 is made of an inner column. However, alternatively, the lower column 1003 may also be made of an inner column and the upper column 1004 may also be made of an outer column.

Also, in the embodiments 9 and 10, description has been given of a case in which the invention is applied to the tilt/telescopic type electric steering apparatus capable of both of tilt position adjustment and telescopic position adjustment. However, the invention can also be applied to a tilt type electric steering apparatus capable of only the tilt position adjustment.

In view of the above, according to the embodiments 11 and 12 of the invention, there is provided the following steering apparatus.
That is, the steering apparatus includes: a steering shaft for mounting a steering wheel on the vehicle body rear side thereof; and, a column which includes right and left side surfaces tilt-slidably held by and between the right and left side plates of a vehicle body mounting bracket mountable on a vehicle body, also holds the steering shaft in a rotatable manner, and is further capable of tilt position adjustment with a tilt center shaft as a fulcrum thereof, or is capable of both of tilt position adjustment with a tilt center shaft as a fulcrum thereof and telescopic position adjustment along the center axis of the steering shaft. In the present steering apparatus, one of the distance from the center axis of the column to the left side tilt sliding surface and the distance from the center axis of the column to the right side tilt sliding surface is set longer than the other, and there is provided a tilt drive mechanism which can be engaged with the column side surface more distant from the center axis of the column to apply a tilt driving thrust force to the column.
Also, in the present steering apparatus, the frictional coeffcient of the tilt sliding surface less distant from the center axis of the column may be set smaller than the frictional coefficient of the tilt sliding surface more distant from the center axis of the column.

Further, in the present steering apparatus, the tilt sliding surface less distant from the center axis of the column is coated with a solid lubricant.

Also, in the present steering apparatus, the solid lubricant may be made of one of molybdenum disulfide, tetrafluoro-ethylene, graphite, graphite fluoride, boron nitride, tungsten disulfide, and melamine cyanurate.

Further, in the present steering apparatus, there may be inserted a spacer between the column side surface less distant from the center axis of the column and the side plate of the vehicle body mounting bracket, and at least one of the inner surface of the spacer and the column side surface may be coated with the solid lubricant.

Further, in the present steering apparatus, the solid lubricant may be made of at least one of molybdenum disulfide, tetrafluoro-ethylene, graphite, graphite fluoride, boron nitride, tungsten disulfide, and melamine cyanurate.

Still further, in the present steering apparatus, there may also be included a steering auxiliary mechanism which applies a given steering auxiliary force to the steering shaft through a reduction mechanism using the drive force of a steering auxiliary motor.

Also, in the present steering apparatus, the tilt drive mechanism may also be a feed screw mechanism which can be driven by a tilting motor and can apply a thrust force to the column due to the relative movement of a feed screw shaft and a feed nut threadedly engaged with each other.

[Embodiment 11]

In the following embodiments 11 and 12, description will be given of a case in which the invention is applied to a tilt/telescopic type electric steering apparatus which adjusts both of the vertical-direction position and back-and-forth-direction position of a steering wheel. Of course, the invention may also be applied to a tilt type electric steering apparatus which can adjust only the vertical-direction position of the steering wheel.

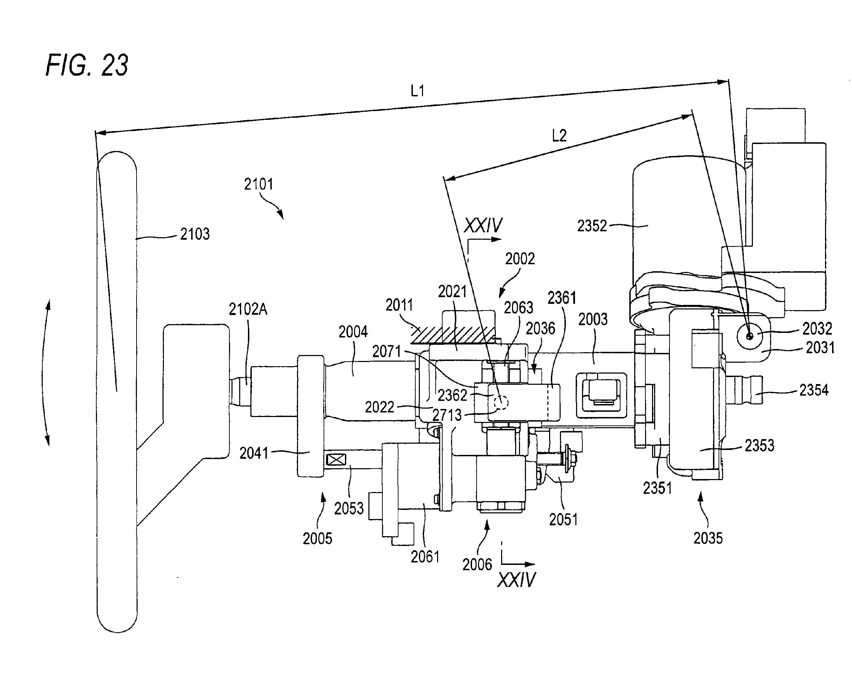

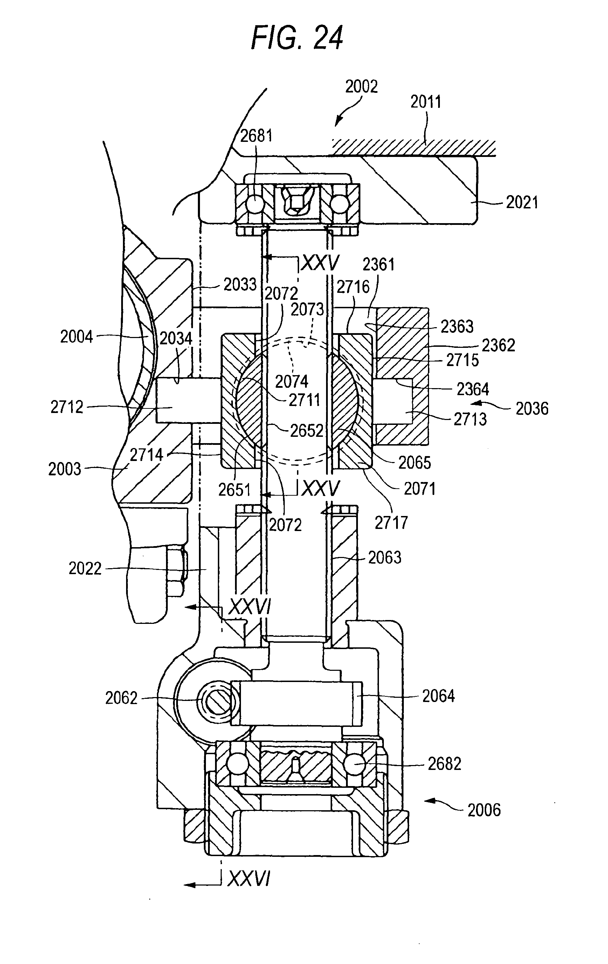

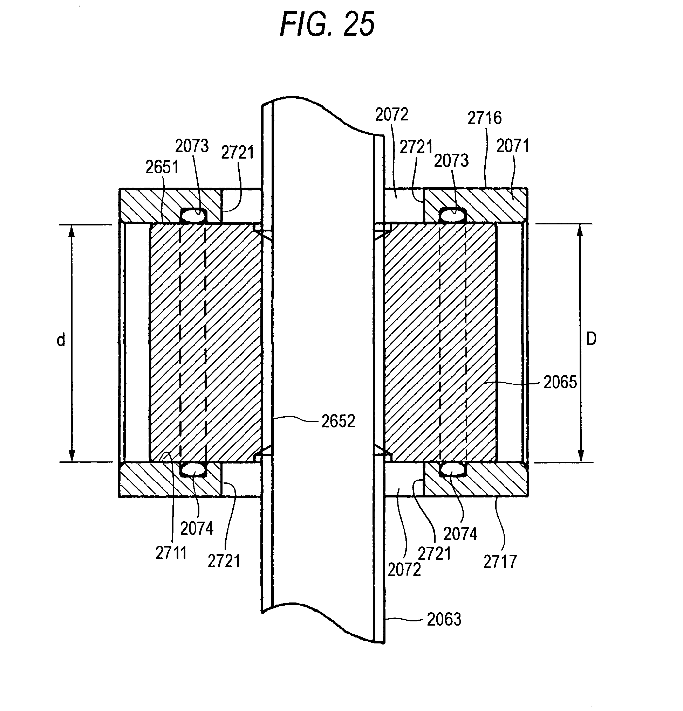

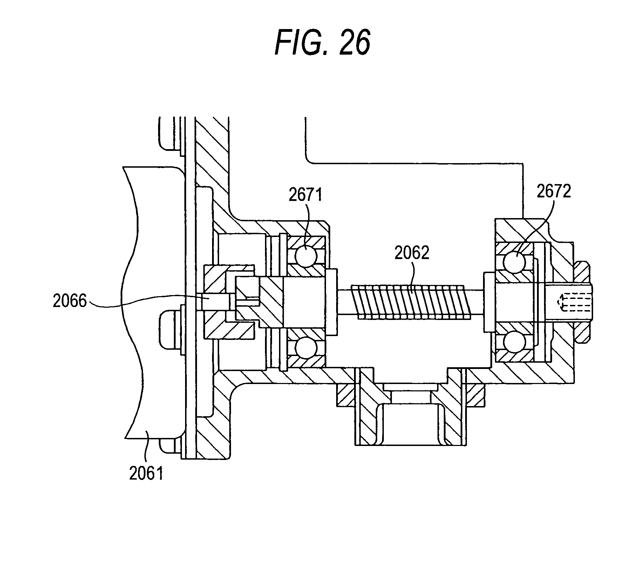

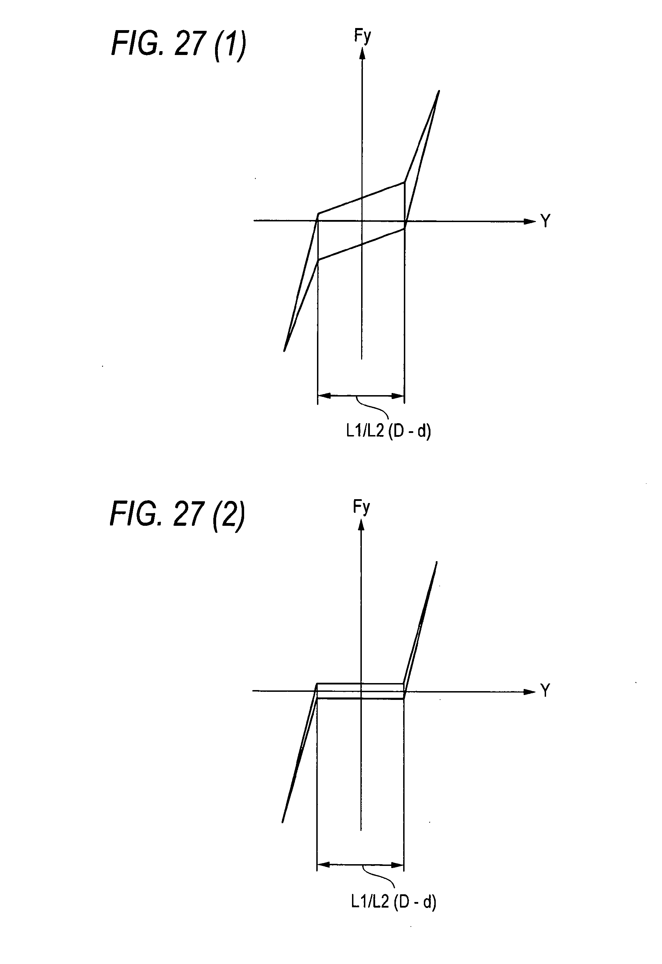

Fig. 23 is a front view of the main portions of a tilt/telescopic type electric steering apparatus according to the embodiment 11 of the invention. Fig. 24 is a section view taken along the XXIV-XXIV line shown in Fig. 23, showing the main portions of a tilt drive mechanism. Fig. 25 is a section view taken along the XXV-XXV line shown in Fig. 24, showing the main portions of a feed nut and a nut holder of the tilt drive mechanism. Fig. 26 is a section view taken along the XXVI-XXVI line shown in Fig. 24. Fig. 27 is a diagram of the rigidity of a fitting portion between the feed nut and nut holder shown in Fig. 25.

As shown in Figs. 23 to 25, a tilt/telescopic type electric steering apparatus 2101 according to the invention includes a vehicle body mounting bracket 2002, a lower column (outer column) 2003, an upper column (inner column) 2004, and the like.

The vehicle body mounting bracket 2002 is disposed on the rear side of a vehicle body and includes an upper plate 2021, while the upper plate 2021 is fixed to a vehicle body 2011. The left end portion of the housing 2351 of a steering auxiliary portion (electric assist mechanism) 2035 is pressed into and fixed to the vehicle body front side (in Fig. 23, the right side) of the lower column 2003. The steering auxiliary portion 2035 includes an electric motor 2352, a reduction gear box portion 2353, an output shaft 2354 and the like. The steering auxiliary portion 2035 is supported through a tilt center shaft 2032 on the vehicle body 2011 in such a manner that it is capable of a tilt position adjustment (it can oscillate in a plane parallel to the sheet surface of Fig. 23).

With the inner periphery of the lower column 2003, there is fitted the upper column 2004 in such a manner that it is capable of a telescopic position adjustment (it can slide parallel to the center axis of the lower column 2003). On the upper column 2004, there is rotatably supported an upper steering shaft 2102A and, to the vehicle body rear side (in Fig. 23, the left side) end portion of the upper steering shaft 2102A, there is fixed a steering wheel 2103.

On the lower column 2003, there is rotatably supported a lower steering shaft (not shown), while the lower steering shaft is spline fitted with the upper steering shaft 2102A. Therefore, regardless of the telescopic position of the upper column 2004, the rotation of the upper steering shaft 2102A can be transmitted to the lower steering shaft.

The steering auxiliary portion 2035 detects a torque acting on the lower steering shaft, drives the electric motor 2352, rotates the output shaft 2354 with a required steering auxiliary force, and connects the rotation of the output shaft 2354 to a steering gear 2107 through an intermediate shaft 2105 to be connected to the vehicle body front side, thereby being able to change the steering angle of a wheel.

In the upper plate 2021 of the vehicle body mounting bracket 2002, there are formed right and left side plates 2022, 2022 which are parallel to each other and extend downwardly from the upper plate 2021 respectively, while the lower column 2003 is held by and between the inner surfaces of the right and left side plates 2022, 2022 in such a manner that it can be tiltingly slided.

On the outer periphery of the lower surface of the lower column 2003, there is mounted a telescopic drive mechanism 2005 which is used to carry out a telescopic position adjustment. Also, downwardly of the vehicle body mounting bracket 2002, there is mounted a tilt drive mechanism 2006 which is used to carry out a tilt position adjustment.

On the outer periphery of the lower surface of the lower column 2003, there is mounted a telescoping motor 2051. On the lower surface of the lower column 2003, there is mounted a feed screw shaft 2053 which extends parallel to the center axis of the lower column 2003, while the vehicle body rear end (in Fig. 23, the left end) of the feed screw shaft 2053 is connected to the lower end of a flange 2041 which is fixed to the vehicle body rear end of the upper column 2004.

The rotation of the telescoping motor 2051 is transmitted to a worm wheel (not shown) to thereby rotate a feed nut (not shown) which is threadedly engaged with the feed screw shaft 2053. The rotation of the feed nut causes the feed screw shaft 2053 to reciprocate (in Fig. 23, move back and forth in the right and left direction), thereby adjusting the telescopic position of the upper column 2004.

A worm 2062, which is mounted on the output shaft 66 (see Fig. 26) of the tilting motor 2061 for the tilt drive mechanism 2006, is meshingly engaged with a worm wheel 2064 which is mounted downwardly of a feed screw shaft 2063 (see Fig. 24), thereby transmitting the rotation of the tilting motor 2061 to the feed screw shaft 2063. The worm 2062 is rotatably supported on the lower end of the vehicle body mounting bracket 2002 by bearings 2671, 2672.

The feed screw shaft 2063 extends perpendicularly to the center axis of the tilting motor 2061 (in Figs. 23 and 24, in the vertical direction), while the upper and lower ends of the feed screw shaft 2063 are rotatably supported on the vehicle body mounting bracket 2002 by bearings 2681, 2682, respectively. With a male screw formed in the outer periphery of the feed screw shaft 2063, there is threadedly engaged the female screw 2652 of a columnar-shaped feed nut 2065; and, the feed screw shaft 2063 and feed nut 2065 cooperate together in constituting a feed screw mechanism for tilt driving. When the feed screw shaft 2063 rotates, the feed nut 2065 moves linearly in a direction perpendicular to the feed screw shaft 2063.

With the outer surface of the columnar-shaped outer periphery 2651 of the feed nut 2065, there is fitted a cylindrical hole 2711 which is formed in a nut holder 2071 the outside diameter of which has a prism-like shape. Owing to this, the nut holder 2071 is connected to the feed nut 2065 in such a manner that it can be slided with respect to the feed nut 2065 substantially parallel to the center axis of the lower column 2003 (parallel to the center axis of the tilting motor 2061).

Also, the nut holder 2071 includes, in the right and left direction (in Fig. 24) central portions of the upper surface 2716 and lower surface 2717 thereof, elongated holes 2072 and 2072 which are long in the axial direction of the lower column 2003 (in Fig. 24, in a direction perpendicular to the sheet surface of Fig. 24; in Fig. 25, in the right and left direction) and extend parallel to such axial direction. And, the feed screw shaft 2063 is inserted through these elongated holes 2072, 2072 into the nut holder 2071.

The feed nut 2065 is inserted into the nut holder 2071 from either side in the longitudinal direction of the nut holder 2071 (in Fig. 24, in a direction perpendicular to the sheet surface of Fig. 24; in Fig. 25, in the right and left direction). Also, the female screw 2652 of the feed nut 2065 is threadedly engaged with the male screw of the feed screw shaft 2063 that has been inserted through the elongated holes 2072, 2072 into the nut holder 2071.

Also, as shown in Fig. 24, in the right side surface (in Fig. 24, the right side surface) 2033 of the lower column 2003, there is formed a circular hole 2034. And, into this circular hole 2034, there is fitted a columnar-shaped connecting pin 2712, which is provided on and projected from the left side surface 2714 of the nut holder 2071, in such a manner that it can be rotated with respect to the circular hole 2034.

Therefore, when the feed nut 2065 is connected to the lower column 2003 through the nut holder 71, the position, where the feed nut 2065 is connected to the lower column 2003, and the center position of the feed nut 2065 (the center position of the feed screw shaft 2063) are allowed to move in a direction parallel to the center axis of the lower column 2003, thereby being able to absorb a shift difference between the movements of the feed nut 2065 and lower column 2003 in the axial direction of the lower column 2003. Also, in order that the feed nut 2065 and nut holder 2071 can be smoothly slided with respect to each other in the axial direction of the lower column 2003, there is formed a slight clearance between the outer periphery 2651 of the feed nut 2065 and the cylindrical hole 2711 of the nut holder 2071.

Also, on the right side surface 2715 of the nut holder 2071, there is provided a columnar-shaped connecting pin 2713 which projects rightward of the nut holder 2071. And, the two connecting pins 2712 and 2713 are arranged on the same horizontal line and are coaxial with each other.

And, to the right side surface 2033 of the lower column 2003, on the vehicle body front side (in Fig. 23, on the right side) of the nut holder 2071, there is fixed the base end portion 2361 of an arm portion 2036 which has an L-like shape (when viewed from above in Figs. 23 and 24). A rear extension portion 2362 is bent in an L shape toward the vehicle body rear side from the base end portion 2361 and extends toward the vehicle body rear side parallel to the right side surface 2033 of the lower column 2003. In the inner surface 2363 (in Fig. 24, the left side surface) of the rear extension portion 2362, a circular hole 2364 is formed.

And, the connecting pin 2713 is inserted into the circular hole 2364 in such a manner that it can be rotated with respect to the circular hole 2364. With use of this structure, when adjusting the tilt position of the steering wheel 2103, the rotational movement of the nut holder 2071 with respect to the lower column 2003 can be carried out more smoothly and more stably. As a result of this, the arc-shaped movement of the lower column 2003 with the tilt center shaft 2032 as a fulcrum thereof can be carried out more smoothly and more stably.

As shown in Figs. 24 and 25, in the cylindrical hole 2711 of the nut holder 2071, outside the closed ends 2721, 2721 of the elongated holes 2072, 2072, there are formed ring grooves 2073, 2073 respectively having a rectangular section. Into the ring grooves 2073, 2073, there are inserted ring-shaped elastic members 2074, 2074 respectively having a circular section. As regards the material of the elastic members 2074, 2074, they are made of synthetic resin such as synthetic rubber. The elastic members 2074, 2074 may also be formed as, for example, O rings.

When the feed nut 2065 is inserted into the nut holder 2071 from one side in the longitudinal direction of the nut holder 2071, the elastic members 2074, 2074 are compressed and thus are elastically deformed into a substantially elliptic shape, respectively. As a result of this, the elastic members 2074, 2074 tighten the columnar-shaped outer periphery 2651 of the feed nut 2065 with their respective elastic forces.

As described above, there is formed a slight clearance between the outer periphery 2651 of the feed nut 2065 and the cylindrical hole 2711 of the nut holder 2071. However, since the elastic members 2074, 2074 tighten the columnar-shaped outer periphery 2651 of the feed nut 2065 with their respective elastic forces, it is possible to remove a backlash which could otherwise occur when the nut holder 2071 is slided with respect to the feed nut 2065 in the axial direction of the lower column 2003.

Fig. 27 shows a diagram of the rigidity of the fitting portion between the feed nut 2065 and nut holder 2071 respectively shown in Fig. 25. Specifically, Fig. 27 (1) is a rigidity diagram of the electric steering apparatus 2101 according to the embodiment 11 of the invention, and Fig. 27 (2) is a rigidity diagram of a conventional electric steering apparatus.

That is, in Fig. 25, the inside diameter dimension of the cylindrical hole 2711 of the nut holder 2071 is expressed as D, and the outside diameter dimension of the columnar-shaped outer periphery 2651 of the feed nut 2065 is expressed as d. In Fig. 27, the horizontal axis Y expresses an amount of shift of the steering wheel 2103 in the tilt adjusting direction, while the vertical axis Fy expresses the intensity of a force necessary to shift the steering wheel 2103 in the tilt adjusting direction. In Fig. 27, L1 (see Fig. 23) expresses the distance between the tilt center shaft 2032 and steering wheel 2103, while L2 (see Fig. 23) expresses the distance between the tilt center shaft 2032 and connecting pins 2712, 2713.

In the conventional electric steering apparatus, there is formed a slight clearance between the outer periphery 2651 of the feed nut 2065 and the cylindrical hole 2711 of the nut holder 2071. Therefore, as shown in Fig. 27 (2), the shift amount of the steering wheel 2103 in the tilt adjusting direction is in the range of L1/L2 (D-d), the intensity of a force necessary to shift the steering wheel 2103 in the tilt adjusting direction is constant and small.

That is, even when a force to be applied to the steering wheel 2103 is not increased, the steering wheel 2103 can be shifted in the tilt adjusting direction. Therefore, when a driver grips and operates the steering wheel 2103 of the steering apparatus, the driver feels a backlash in the steering apparatus, which lowers the rigidity feeling of the steering apparatus and thus worsens the steering feeling.

On the other hand, in the electric steering apparatus 2101 according to the embodiment 11 of the invention, the elastic members 2074, 2074 tighten the columnar-shaped outer periphery 2651 of the feed nut 2065 with their respective elastic forces. This can remove a backlash which could otherwise occur when the nut holder 2071 is slided with respect to the feed nut 2065 in the axial direction of the lower column 2003. As a result of this, as shown in Fig. 27 (1), even when the shift amount of the steering wheel 2103 in the tilt adjusting direction is in the range of L1/L2 (D-d), the intensity of a force necessary to shift the steering wheel 2103 in the tilt adjusting direction increases in proportion to the shift amount of the steering wheel 2103 in the tilt adjusting direction.

That is, the driver does not feel a backlash in the steering apparatus, but the rigidity feeling of the steering apparatus is enhanced, thereby being able to prevent the steering feeling from worsening.

In the electric steering apparatus 2101, when there arises the need to adjust the tilt position of the steering wheel 2103, the driver operates a switch (not shown) to rotate the tilting motor 2061. Then, the rotation of the tilting motor 2061 causes the feed screw shaft 2063 to rotate, and the feed nut 2065 is caused to move linearly, whereby the tilt position of the upper column 2004 is adjusted in the upward direction.

The feed nut 2065 moves linearly in the vertical direction in Figs. 23, 24 and 25, whereas the lower column 2003 moves along an arc-shaped locus with the tilt center shaft 2032 as a fulcrum thereof. Therefore, between these two movements, there is caused a shift difference in the right and left direction in Figs. 23 and 25. However, this shift difference can be absorbed by the relative smooth sliding movement of the feed nut 2065 and nut holder 2071 with respect to each other parallel to the axial direction of the lower column 2003.

[Embodiment 12]

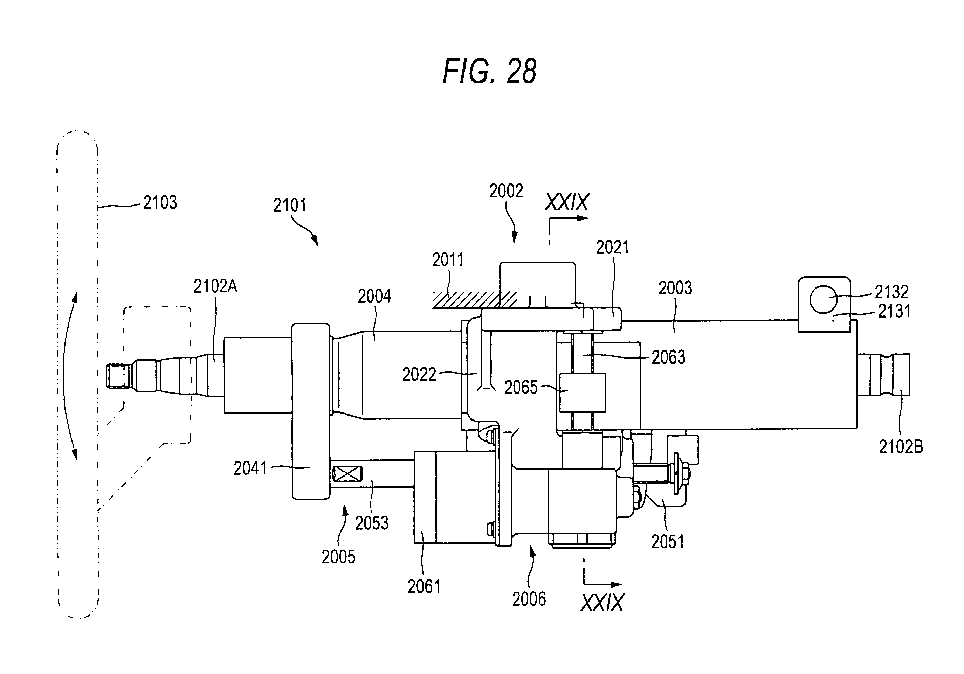

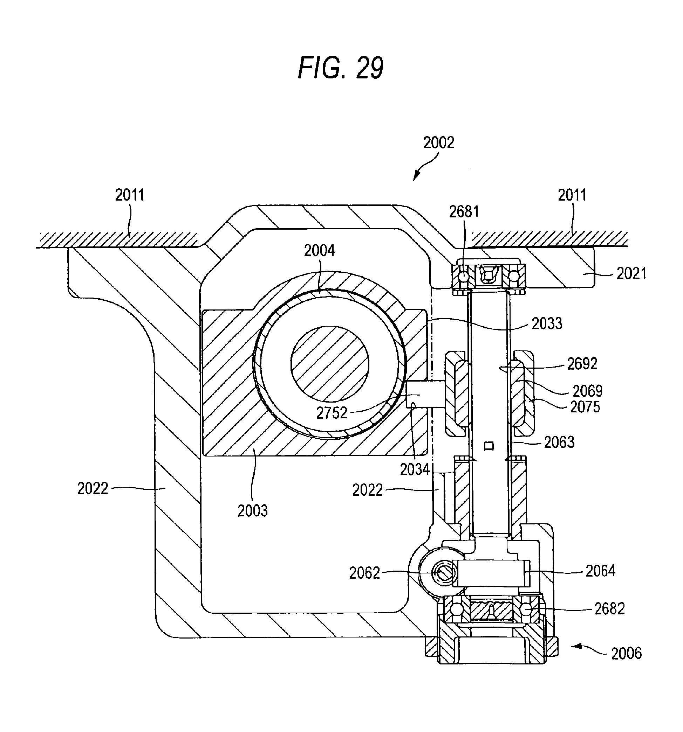

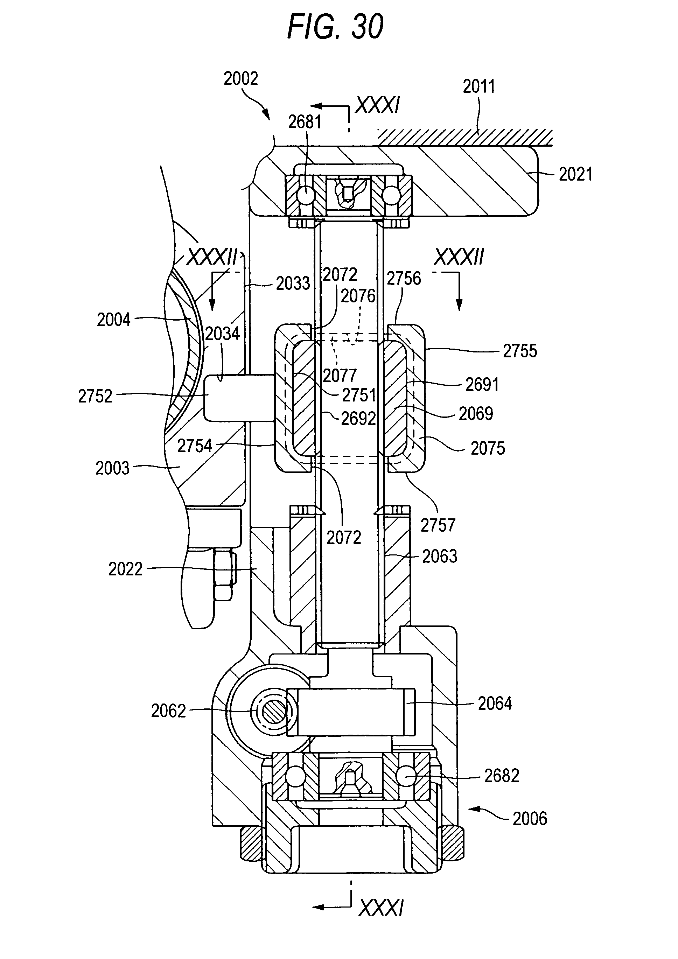

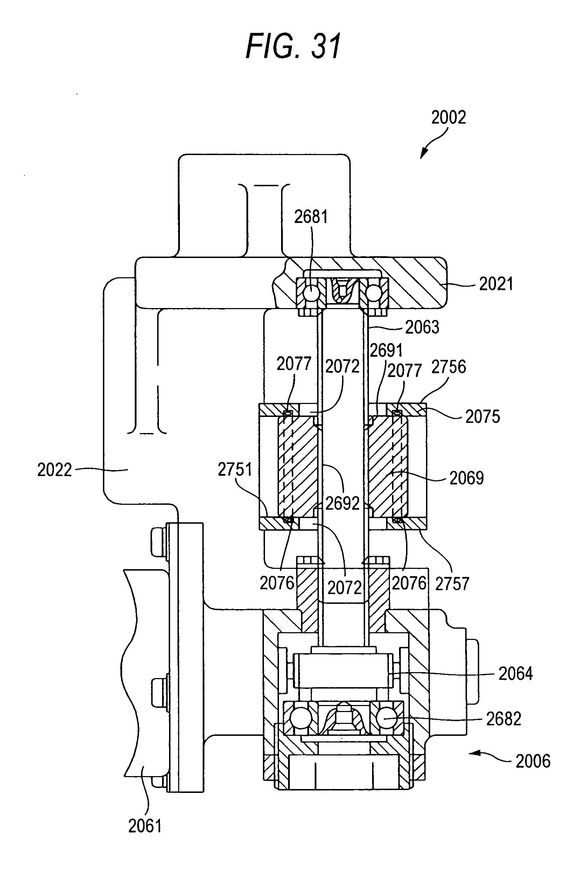

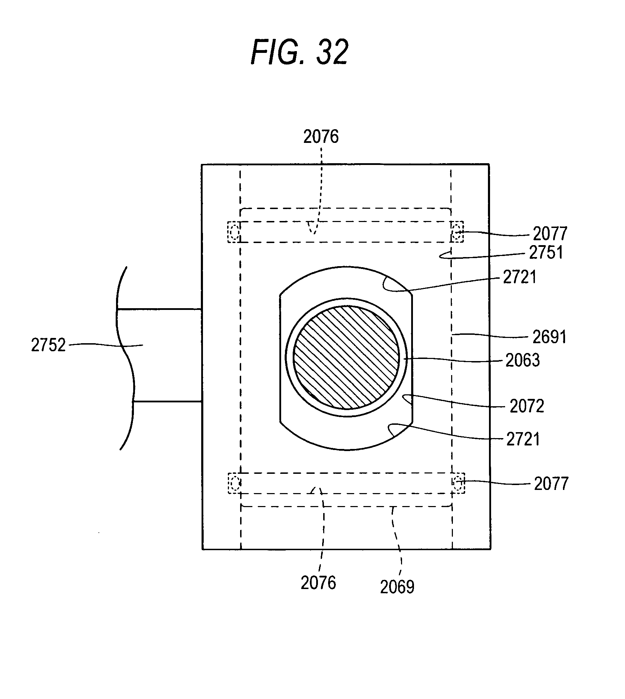

Now, Fig. 28 is a front view of the main portions of a tilt/telescopic type electric steering apparatus according to the embodiment 12 of the invention. Fig. 29 is a section view taken along the XXIX-XXIX line shown in Fig. 28, showing a tilt drive mechanism. Fig. 30 is an enlarged section view of the main portions of the tilt drive mechanism. Fig. 31 is a section view taken along the XXXI-XXXI line shown in Fig. 30, showing the fitting portions of a feed nut and a nut holder included in the tilt drive mechanism. Fig. 32 is a partially omitted section view taken along the XXXII-XXXII line shown in Fig. 30, showing the fitting portions of the feed nut and nut holder of the tilt drive mechanism.

In the following description, only the parts different in structure from the previously described embodiment 11 will be discussed and the duplicate description is omitted here. Also, description will be given of the same parts while the same reference numerals are given to them. The embodiment 12 is an example in which a prism-shaped feed nut is used.

As shown in Figs. 28 to 32, a tilt/telescopic type electric steering apparatus 2101 according to the embodiment 12 of the invention, similarly to the embodiment 11, includes a vehicle body mounting bracket 2002, a lower column (outer column) 2003, an upper column (inner column) 2004 and the like.

The vehicle body mounting bracket 2002, which is mounted on the rear side of a vehicle body 2011, includes an upper plate 2021, while the upper plate 2021 is fixed to the vehicle body 2011. On the vehicle body front side (in Fig. 28, on the right side) of the lower column 2003, there is not provided the steering auxiliary portion (electric assist mechanism) 2035 but there is provided a bracket 2031 which is formed integrally the lower column 2003. This bracket 2031 is supported on the vehicle body 2011 through a tilt center shaft 2032 in such a manner that it is capable of adjusting a tilt position (it can oscillate in a plane parallel to the sheet surface of Fig. 28).

With the inner periphery of the lower column 2003, there is fitted the upper column 2004 in such a manner that it is capable of adjusting a telescopic position (it can slide parallel to the center axis of the lower column 2003). On the upper column 2004, there is rotatably supported an upper steering shaft 2102A and, to the vehicle body rear side (in Fig. 28, the left side) end portion of the upper steering shaft 2102A, there is fixed a steering wheel 2103.

On the lower column 2003, there is rotatably supported a lower steering shaft 2102B, while the lower steering shaft 2102B is spline fitted with the upper steering shaft 2102A. Therefore, regardless of the telescopic position of the upper column 2004, the rotation of the upper steering shaft 2102A can be transmitted to the lower steering shaft 2102B.

When the steering wheel 2103 is rotated, the lower steering shaft 2102B is rotated due to the rotation of the steering wheel 2103 and is accordingly connected to a steering gear 2107 (see Fig. 16) through an intermediate shaft 2105 (see Fig. 16) which is to be connected to the vehicle front side, thereby being able to steering angle of a wheel.

On the upper plate 2021 of the vehicle body mounting bracket 2002, there are provided right and left side plates 2022, 2022 which are parallel to each other and respectively extend downwardly from the upper plate 2021, while the lower column 2003 is tilt-slidably held by and between the respective inner surfaces of the right and left side plates 2022, 2022.

On the tilt/telescopic type electric steering apparatus 2101 according to the embodiment 12, similarly to the embodiment 11, there are mounted a telescopic drive mechanism 2005 for adjusting a telescopic position and a tilt drive mechanism 2006 for adjusting a tilt position.

The telescopic drive mechanism 2005 has a similar structure to the embodiment 11. Also, a worm 2062 mounted on the output shaft of a tilting motor 2061 for the tilt drive mechanism 2006 is meshingly engaged with a worm wheel 2064 mounted downwardly of a feed screw shaft 2063 to transmit the rotation of the tilting motor 2061 to the feed screw shaft 2063.

The feed screw shaft 2063 extends perpendicularly to the center axis of the tilting motor 2061 (in Figs. 28 to 31, in the vertical direction), while the upper and lower ends of the feed screw shaft 2063 are rotatably supported on the vehicle body mounted bracket 2002 by their associated bearings 2681, 2682. With a male screw formed on the outer periphery of the feed screw shaft 2063, there is threadedly engaged a female screw 2692 formed in a prism-shaped feed nut 2069; and, the feed screw shaft 2063 and feed nut 2069 cooperate together in constituting a feed screw mechanism for tilt driving. Specifically, as the feed screw shaft 2063 rotates, the feed nut 2069 moves linearly in a direction perpendicular to the feed screw shaft 2063.

With the outer surface of the prism-shaped outer periphery 2691 of the feed nut 2069, there is fitted a rectangular hole 2751 which is formed in a prism-shaped nut holder 2075. As a result of this, the nut holder 2075 is connected to the feed nut 2069 in such a manner that it can be slided with respect to the feed nut 2069 substantially parallel to the axial direction of the lower column 2003 (parallel to the axial direction of the tilting motor 2061).

Also, the nut holder 2075 includes, in the right and left direction (when viewed in Figs. 29 and 30) center portions of upper surface 2756 and lower surface 2757 thereof, elongated holes 2072, 2072 which are long in the axial direction of the lower column 2003 (in Figs. 29 and 30, in a direction perpendicular to the sheet surface of Figs. 29 and 30; in Fig. 31, in the right and left direction) and respectively extend parallel to such axial direction; and, the feed screw shaft 2063 is inserted into the nut holder 2075 through these elongated holes 2072, 2072. Also, the female screw 2692 of the feed nut 2069 is threadedly engaged with the male screw of the feed screw shaft 2063 that has been inserted into the nut holder 2075 through the elongated holes 2072, 2072.

Also, as shown in Figs. 29 and 30, in the right side surface 2033 of the lower column 2003, there is formed a circular hole 2034; and, into this circular hole 2034, there is fitted a columnar-shaped connecting pin 2752 provided on and projected from the left side surface 2754 of the nut holder 2075 in such a manner that it can be rotated with respect to the circular hole 2034.

Therefore, when the feed nut 2069 is connected to the lower column 2003 through the nut holder 2075, the position, where the feed nut 2069 is connected to the lower column 2003, and the center position of the feed nut 2069 (the center position of the feed screw shaft 2063) are allowed to move in a direction parallel to the center axis of the lower column 2003, thereby being able to absorb a shift difference between the movements of the feed nut 2069 and lower column 2003 in the axial direction of the columns. Also, in order that the feed nut 2069 and nut holder 2075 can be smoothly slided with respect to each other in the axial direction of the lower column 2003, there is formed a slight clearance between the outer periphery 2651 of the feed nut 2069 and the rectangular hole 2751 of the nut holder 2075.

Also, on the right side surface 2755 of the nut holder 2075, there are provided neither such rightward projecting columnar-shaped connecting pin as in the embodiment 11 nor the L-shaped arm portion into which the connecting pin is fitted in such a manner that it can be rotated with respect to the arm portion.

As shown in Figs. 30 to 32, in the rectangular hole 2751 of the nut holder 2075, outside the closed ends 2721, 2721 of the elongated holes 2072, 2072, there are formed ring grooves (when viewed in Fig. 30, rectangular ring grooves each having a rectangular section) 2076, 2076 each having a rectangular section (when viewed in Fig. 31). Into these ring grooves 2076, 2076, there are inserted ring-shaped elastic members 2077, 2077 each having a circular section. As regards the material of the elastic members 2077, 2077, they are made of synthetic resin such as synthetic rubber.

When the feed nut 2069 is inserted into the nut holder 2075 from one side in the longitudinal direction of the nut holder 2075, the elastic members 2077, 2077 are compressed and thus are elastically deformed into a substantially elliptic shape, respectively. As a result of this, the elastic members 2077, 2077 tighten the prism-shaped outer periphery 2691 of the feed nut 2069 with their respective elastic forces.

As described above, there is formed a slight clearance between the outer periphery 2691 of the feed nut 2069 and the rectangular hole 2751 of the nut holder 2075. However, since the elastic members 2077, 2077 tighten the prism-shaped outer periphery 2691 of the feed nut 2069 with their respective elastic forces, it is possible to remove a backlash which could otherwise occur when the nut holder 2075 is slided with respect to the feed nut 2069 in the axial direction of the lower column 2003.

Therefore, in the electric steering apparatus 2101 according to the embodiment 12 of the invention as well, the driver does not feel a backlash in the electric steering apparatus, but the rigidity feeling of the electric steering apparatus is enhanced, thereby being able to prevent the steering feeling from worsening. In the embodiment 12, the outer periphery 2691 of the feed nut 2069 is formed in a prism shape. However, alternatively, the outer periphery 2691 may also be formed in a polygonal prism shape which has an arbitrary number of sides. In this case, in the nut holder 2075, there may be formed a polygonal prism hole which can be fitted with the outer surface of such polygonal prism outer periphery.

In the above embodiment, description has been given of a case in which the invention is applied to a tilt/telescopic type electric steering apparatus. However, the invention may also be applied to the feed screw mechanism of a tilt type electric steering apparatus which carries out only the tilt position adjustment. Also, in the above embodiment, the lower column 2003 is made of an outer column and the upper column 2004 is made of an inner column. However, the lower column 2003 may also be made of an inner column and the upper column 2004 may also be made of an outer column.

According to the above embodiments 11 and 12, there can be provided the following steering apparatus.

That is, a steering apparatus which comprises: a steering shaft for mounting a steering wheel on the vehicle body rear side thereof; a column mounted on a vehicle body through a vehicle body mounting bracket, supporting the steering shaft rotatably, and capable of a tilt position adjustment with a tilt center shaft as a fulcrum thereof, or capable of both of a tilt position adjustment with a tilt center shaft as a fulcrum thereof and a telescopic position adjustment along the center axis of the steering shaft; an electric actuator mounted on the column or vehicle body mounting bracket; a tilt drive mechanism, when driven by the electric actuator, for carrying out the tilt movement of the column using the relative movement between a feed screw shaft and a feed nut threadedly engaged with each other; a nut holder which not only is fitted with the outer surface of the outer periphery of the feed nut in such a manner that it can be slided substantially parallel to the center axis of the column but also is connected to the column; and, an elastic member mounted in a clearance formed between the mutually fitted feed nut and nut holder.

In the present steering apparatus, the outer periphery of the feed nut may be formed in a columnar shape and, in the inner periphery of the nut holder, there may also be formed a cylindrical hole which can be fitted with the outer surface of the columnar-shaped outer periphery of the feed nut.

In the present steering apparatus, the outer periphery of the feed nut may be formed in a prism shape and, in the inner periphery of the nut holder, there may also be formed a rectangular hole which can be fitted with the outer surface of the prism-shaped outer periphery of the feed nut.

In the present steering apparatus, the outer periphery of the feed nut may be formed in a polygonal prism shape and, in the inner periphery of the nut holder, there may also be formed a polygonal prism hole which can be fitted with the outer surface of the polygonal-prism-shaped outer periphery of the feed nut.

In the present steering apparatus, the elastic member may also be formed as a ring-shaped member having a circular section.

In the present steering apparatus, the material of the elastic member may also be synthetic rubber.

In the present steering apparatus, the material of the elastic member may also be synthetic resin.

In the present steering apparatus, the elastic member may also be inserted into a ring groove formed in the inner periphery of the nut holder.

In the present steering apparatus, the elastic member may include two or more elastic members.

In the present steering apparatus, the elastic member may include two or more elastic members, and they may be respectively inserted into their associated ring grooves formed in the inner periphery of the nut holder.

[Embodiment 13]

In the following embodiments 13 and 14, description will be given of a case in which the invention is applied to a tilt/telescopic type electric steering apparatus which adjusts both of the vertical-direction position and back-and-forth-direction position of a steering wheel.

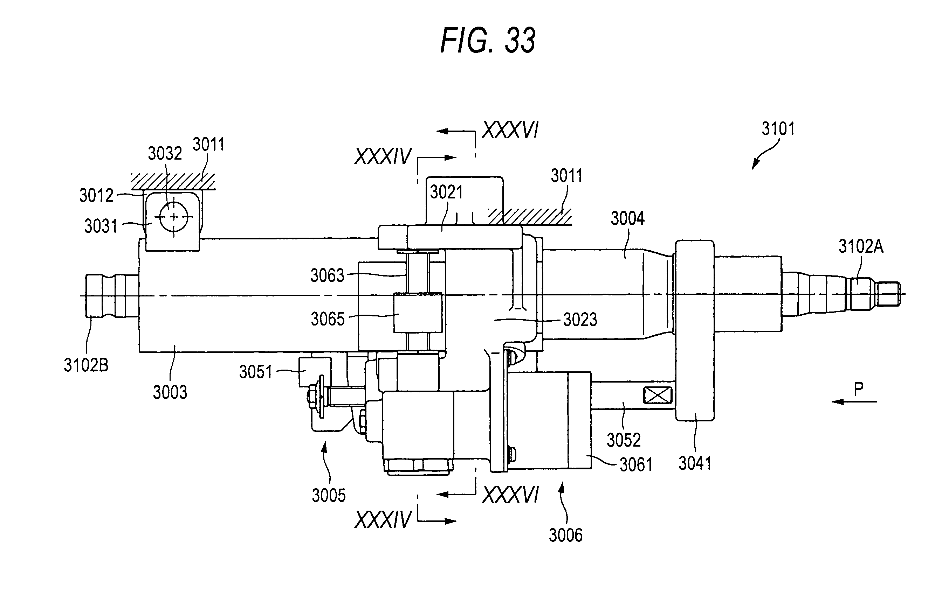

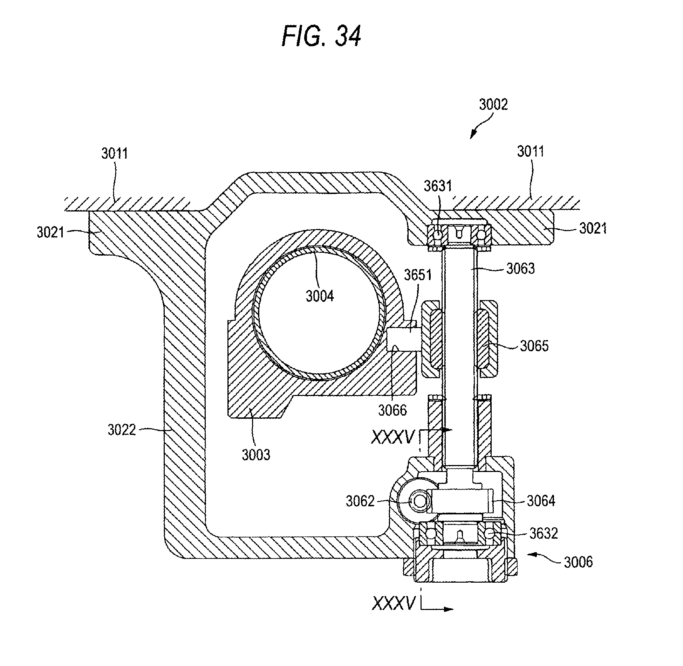

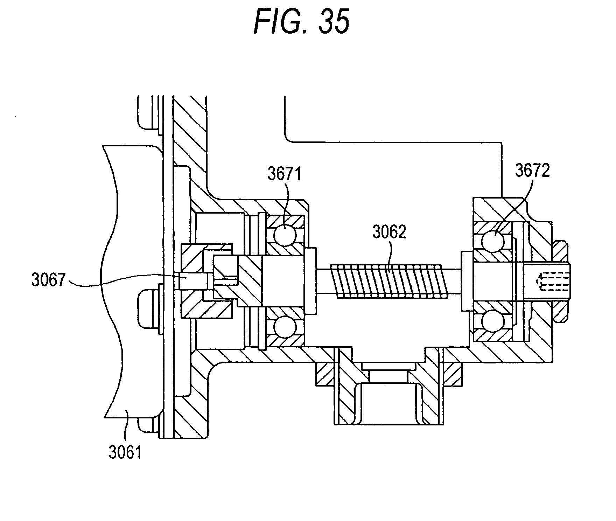

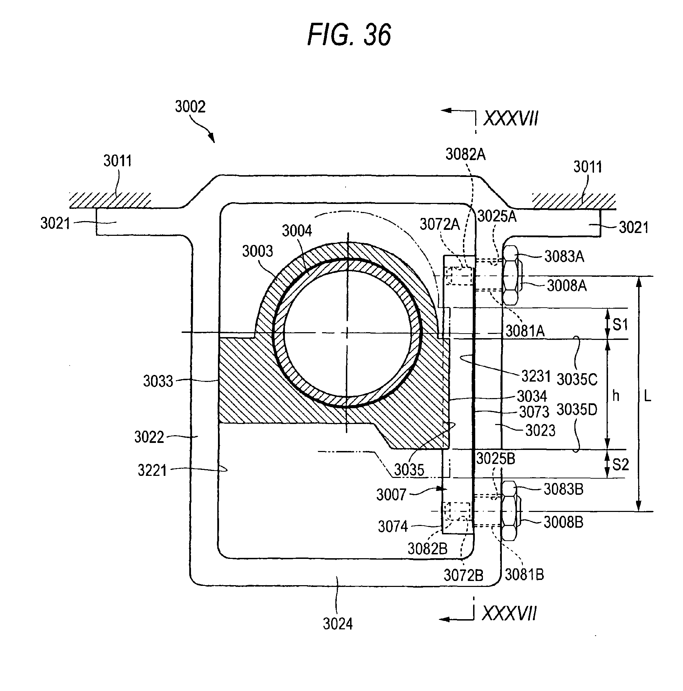

Fig. 33 is a front view of the main portions of an electric steering apparatus according to the embodiment 13 of the invention. Fig. 34 is a section view taken along the XXXIV-XXXIV line shown in Fig. 33, showing the main portions of a tilt drive mechanism. Fig. 35 is a section view taken along the XXXV-XXXV line shown in Fig. 34, showing a tilting motor and a worm included in the tilt drive mechanism. Fig. 36 is a section view taken along the XXXVI-XXXVI line shown in Fig. 33, showing a tilt sliding portion between a vehicle body mounting upper bracket and a column according to the embodiment 13 of the invention.

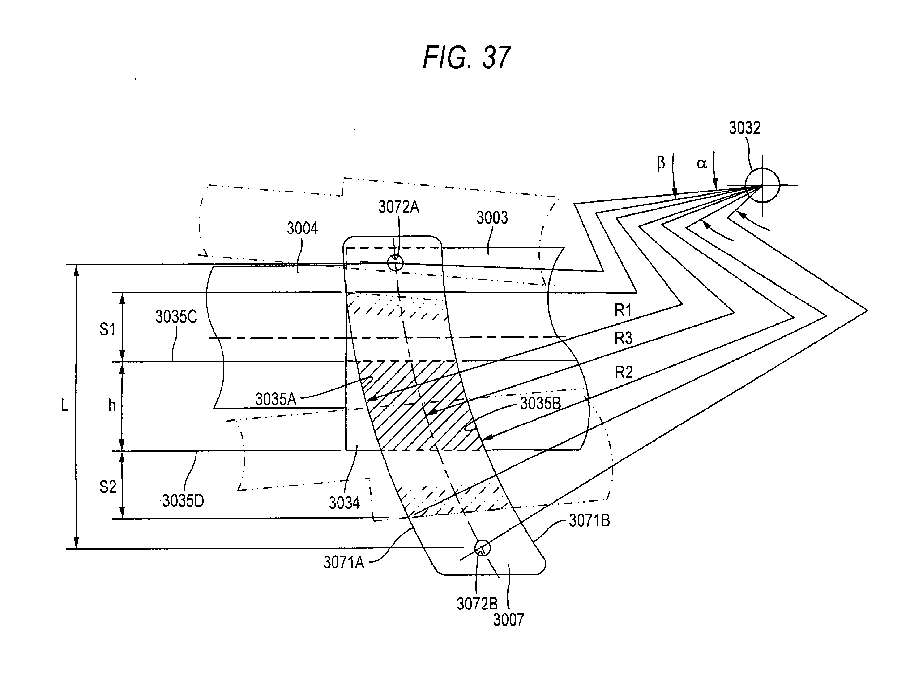

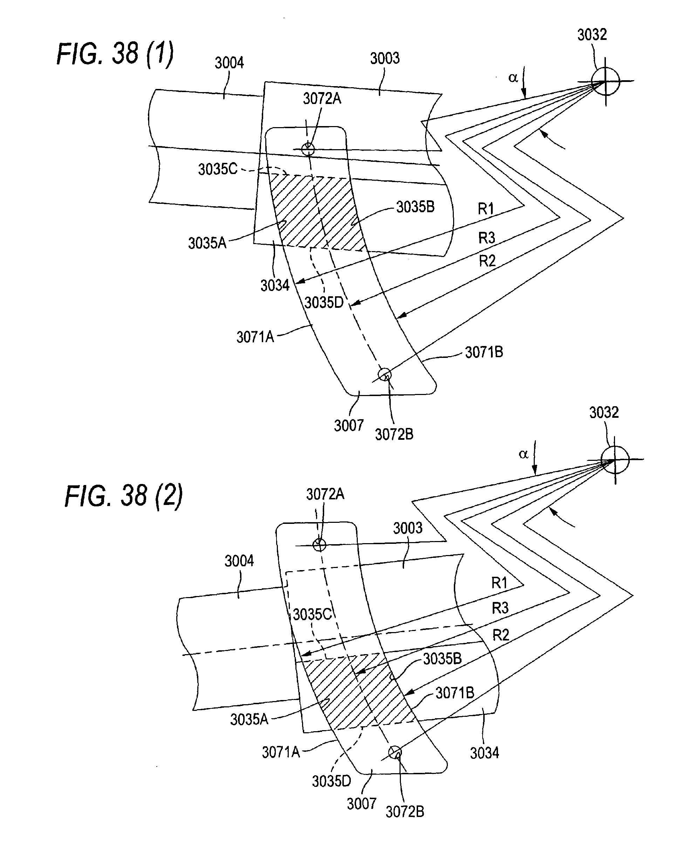

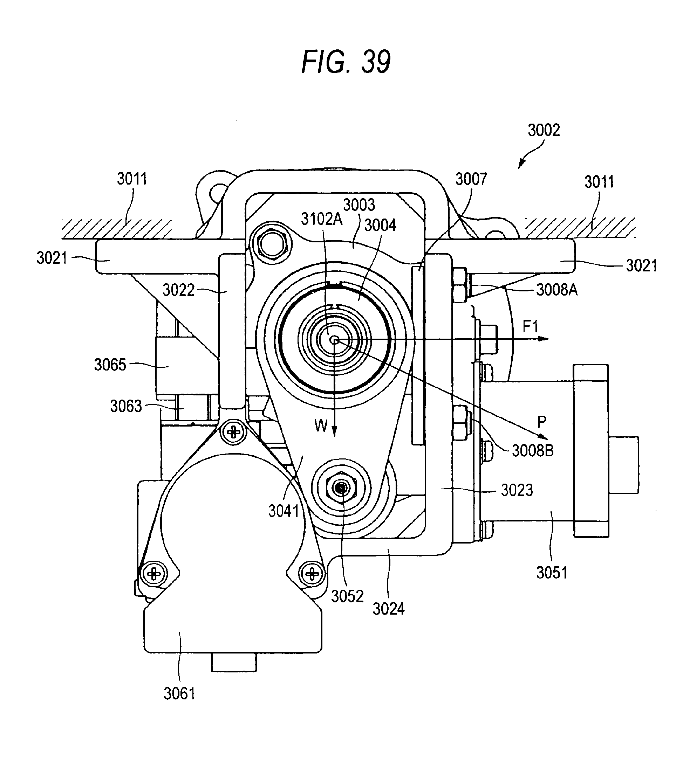

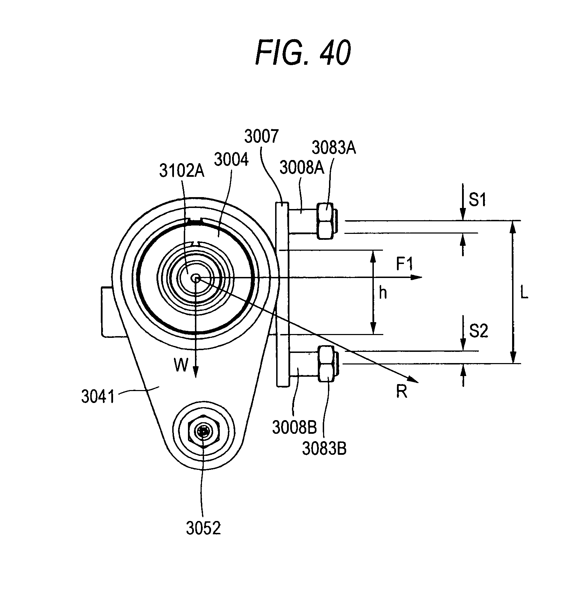

Fig. 37 a section view taken along the XXXVII-XXXVII line shown in Fig. 36. Fig. 38 is an operation explanatory view of a tilt position adjusting operation to be executed according to the embodiment 13 of the invention. Specifically, Fig. 38 (1) shows a tilt upper end position, whereas Fig. 38 (2) shows a tilt lower end position. Fig. 39 is a view taken along the arrow mark P shown in Fig. 33 and is a right side view of the electric steering apparatus 3101. Fig. 40 is an explanatory view of a column, a spacer and an adjusting screw respectively taken out from Fig. 39.

As shown in Figs. 33 to 35, the electric steering apparatus 3101 according to the invention includes a vehicle body mounting upper bracket 3002, a lower column (outer column) 3003, an upper column (inner column) 3004 and the like.

The vehicle body mounting upper bracket 3002 disposed on the rear side of a vehicle body 3011 includes an upper plate 3021, while the upper plate 3021 is fixed to the vehicle body 3011. On the vehicle body front side end portion of the lower column 3003, there is provided a bracket 3031 which is formed integrally with the lower column 3003. This bracket 3031 is connected to a vehicle body mounting lower bracket 3012 by a tilt center shaft 3032. The vehicle body mounting lower bracket 3012 is fixed to the vehicle body 3011. The vehicle body front side end portion of the hollow cylindrical-shaped lower column 3003 is supported on the vehicle body 3011 in such a manner that it is capable of tilt position adjustment (it can be oscillated in a plane parallel to the sheet surface of Fig. 33) with the tilt center shaft 3032 as a fulcrum thereof

With the inner periphery of the lower column 3003, there is fitted the upper column 3004 in such a manner that it is capable of telescopic position adjustment (it can be slided parallel to the center axis of the lower column 3003). On the upper column 3004, there is rotatably supported an upper steering shaft 3102A and, to the vehicle body rear side (in Fig. 33, the right side) end portion of the upper steering shaft 3102A, there is fixed a steering wheel 3103 (see Fig. 16).

On the lower column 3003, there is rotatably supported a lower steering shaft 3102B, while the lower steering shaft 3102B is spline fitted with the upper steering shaft 3102A. Therefore, regardless of the telescopic position of the upper column 3004, the rotation of the upper steering shaft 3102A can be transmitted to the lower steering shaft 3102B.

The vehicle body front side (in Fig. 33, the left side) of the lower steering shaft 3102B is connected through a universal joint 3104 (see Fig. 16) to a steering gear 3107 (see Fig. 16). Thus, when the driver turns the steering wheel 3103 by hands, the lower steering shaft 3102B is rotated through the upper steering shaft 3102A to thereby be able to change the steering angle of the wheel.

As shown in Figs. 33 to 36, in the upper plate 3021 of the vehicle body mounting upper bracket 3002, there are formed a left side plate 3022 and a right side plate 3023 which are parallel to each other and extend downward from the upper plate 3021 respectively. The left side surface 3033 and right side surface 3034 of the lower column 3003 are held by and between the inner surfaces 3221 and 3231 of the left side plate 3022 and right side plate 3023 in such a manner that they are capable of tilt sliding.

Between the right side surface 3034 of the lower column 3003 and the inner surface 3221 of the right side plate 3023 of the vehicle body mounting upper bracket 3002, there is inserted a flat-plate-shaped spacer 3007. Also, the lower ends of the left side plate 3022 and right side plate 3023 are connected together by a lower plate 3024. The upper plate 3021, left side plate 3022, right side plate 3023 and lower plate 3024 cooperate together in forming a closed rectangular shape, thereby enhancing the rigidity of the vehicle body mounting upper bracket 3002.

On the outer periphery of the lower surface of the lower column 3003, there is mounted a telescopic drive mechanism 3005 (see Fig. 33) which carries out a telescopic position adjustment. Also, on the lower portions of the left side plate 3022 and right side plate 3023 of the vehicle body mounting upper bracket 3002, there is mounted a tilt drive mechanism 3006 (see Figs. 33 and 34) which executes a tilt position adjustment.

As shown in Fig. 35, a worm 3062, which is connected to the output shaft 3067 of a tilting motor 3061 for the tilt drive mechanism 3006, is meshingly engaged with a worm wheel 3064 mounted on the lower portion of a feed screw shaft 3063 (see Fig. 34) to thereby transmit the rotation of the tilting motor 3061 to the feed screw shaft 3063. The worm 3062 is rotatably supported on the lower portion of the vehicle body mounting upper bracket 3002 by bearings 3671, 3672.

The feed screw shaft 3063 extends perpendicularly (in Figs. 33 and 34, in the vertical direction) to the center axis of the tilting motor 3061, while the upper and lower ends of the feed screw shaft 3063 are rotatably supported on the vehicle body mounting upper bracket 3002 by bearings 3631, 3632. The feed screw shaft 3063 includes a male screw formed on the outer periphery thereof and, with this male screw, there is threadedly engaged a feed nut 3065.

The feed nut 3065 includes a tilt drive force transmission projection 3651 formed integrally therewith. This tilt drive force transmission projection 3651 projects toward the center axis of the lower column 3003, while the leading end of the tilt drive force transmission projection 3651 is fitted into an engaging hole 3066 formed in the lower column 3003.

As the feed screw shaft 3063 rotates, the feed nut 3065 and tilt drive force transmission projection 3651 move linearly in a vertical direction. The lower column 3003, in the tilt position adjusting operation, oscillates along an arc-shaped locus with the tilt center shaft 3032 as a fulcrum thereof. However, since the engaging hole 3066 is formed in an elongated hole extending perpendicularly to the sheet surface of Fig. 34, the engaging hole 3066 can absorb an error in position between the perpendicular linear movement of the feed nut 3065 and the arc-shaped oscillation of the lower column 3003.

On the outer periphery of the lower surface of the lower column 3003, there is mounted a telescoping motor 3051 which is shown in part in Fig. 33. To the outer periphery of the lower surface of the lower column 3003, there is fixed a feed screw shaft 3052 in such a manner that it extends parallel to the center axis of the lower column 3003, while the vehicle body rear end (in Fig. 33, the right end) of the feed screw shaft 3052 is connected to the lower end of a flange 3041. The flange 3041 is fixed to the vehicle body rear end of the upper column 3004.

The rotation of a worm mounted on the output shaft (not shown) of the telescoping motor 3051 is transmitted to a worm wheel (not shown) to thereby rotate a feed nut (not shown) which is threadedly engaged with the feed screw shaft 3052. The rotation of this feed nut causes the feed screw shaft 3052 to reciprocate (in Fig. 33, move back and forth in the right and left direction), thereby adjusting the telescopic position of the upper column 3004.

In the electric steering apparatus 3101, when there arises the need to adjust the tilt position of the steering wheel 3103, the driver operates a switch (not shown) to rotate the tilting motor 3061 in either forward or reverse direction. As a result of this, owing to the rotation of the tilting motor 3061, the feed screw shaft 3063 is rotated and the feed nut 3065 is moved linearly.

In response to this, the tilt drive force transmission projection 3651 formed integral with the feed nut 3065 is moved linearly. Because the tilt drive force transmission projection 3651 is engaged with the engaging hole 3066 of the lower column 3003, the lower column 3003 is caused to tilt move upward or downward with the tilt center shaft 3032 as a fulcrum thereof

Also, in the electric steering apparatus 3101, when there arises the need to adjust the telescopic position of the steering wheel 3103, the driver operates a switch (not shown) to rotate the telescoping motor 3051 in either forward or reverse direction. As a result of this, owing to the rotation of the telescoping motor 3051, the feed screw shaft 3052 is moved telescopic to the center axis of the lower column 3003, thereby allowing the upper column 3004 to move and adjust the telescopic position of the steering wheel 3103.

As shown in Figs. 36 and 37, in the right side surface 3034 of the lower column 3003, there is formed an arc-shaped recessed portion 3035 which is enclosed by an arc-shaped stepped portion 3035A having a radius R1 with the tilt center shaft 3032 of the lower column 3003 as a center thereof and an arc-shaped stepped portion 3035B having a radius R2 with the tilt center shaft 3032 of the lower column 3003 as a center thereof

Also, in the flat-plate-shaped spacer 3007 inserted between the inner surface 3221 of the vehicle body mounting upper bracket 3002 and the right side surface 3034 of the lower column 3003, there are formed an arc-shaped projecting portion 3071A having a radius R1 with the tilt center shaft 3032 of the lower column 3003 as a center thereof and an arc-shaped projecting portion 3071B having a radius R2 with the tilt center shaft 3032 of the lower column 3003 as a center thereof And, the arc-shaped projecting portions 3071A, 3071B of the spacer 3007 are closely fitted into the arc-shaped recessed portion 3035 of the lower column 3003 respectively.

In the right side plate 3023 of the vehicle body mounting upper bracket 3002, there are formed two female screws 3025A and 3025B spaced from each other in the vertical direction in Figs. 36 and 37 (in the tilt position adjusting direction), while the two female screws 3 025 A and 3025B respectively penetrate through the right side plate 3023 in the right and left direction. The two female screws 3025A and 3025B are arranged on an arc having a radius R3 with the tilt center shaft 3032 of the lower column 3003 as a center thereof Into the female screws 3025A and 3025B, there are screwed the male screws 3081A and 3081B of adjusting screws 3008A and 3008B, respectively. In the left end portions of the adjusting screws 3008A and 3008B, there are formed shaft portions 3082A and 3082B respectively having diameters smaller than the outside diameters of the male screws 3081A and 3081B.

In the spacer 3007, there are opened up two through holes 3072A and 3072B on an arc having a radius R3 at the same spacing as a spacing L between the upper and lower female screws 3025A and 3025B in the vertical direction (in the tilt position adjusting direction). The inside diameters of the through holes 3072A and 3072B are set slightly larger than the outside diameters of the shaft portions 3082A and 3082B. Therefore, when the male screws 3081A and 3081B of the adjusting screws 3008A and 3008B are screwed in at a position where the shaft portions 3082A, 3082B are in phase with the through holes 3072A, 3072B, the shaft portions 3082A, 3082B can be fitted into the through holes 3072A, 3072B, respectively. As a result of this, the spacer 3007 can be held at a given position between the inner surface 3231 of the vehicle body mounting upper bracket 3002 and the arc-shaped recessed portion 35 of the lower column 3003.

When the male screws 3081A and 3081B of the adjusting screws 3008A and 3008B are screwed in further, the stepped surfaces between the male screws 3081A, 3081B and shaft portions 3082A, 3082B are contacted with the outer surface 3073 of the spacer 3007 to thereby press the spacer 3007 toward the arc-shaped recessed portion 3035 of the lower column 3003. As a result of this, even when a clearance between the inner surface 3231 of the vehicle body mounting upper bracket 3002 and the arc-shaped recessed portion 35 of the lower column 3003 is inclined due to a manufacturing error or the like, by properly adjusting the screw-in amounts of the male screws 3081A and 3081B of the adjusting screws 3008A and 3008B, the inner surface 3074 of the spacer 3007 can be uniformly contacted with the arc-shaped recessed portion 3035 of the lower column 3003.

Therefore, not only the tilt sliding resistance between the lower column 3003 and left side plate 3022 but also the tilt sliding resistance between the lower column 3003 and spacer 3007 can be set for the desired sliding resistance. Also, regardless of the tilt angles, the tilt sliding resistance during the tilting operation can be maintained constant. After completion of the adjustment of the adjusting screws 3008A and 3008B, lock nuts 3083A and 3083B are screwed into the male screws 3081A and 3081B to thereby prevent the adjusting screws 3008A and 3008B from loosening.

As described above, the arc-shaped projecting portions 3071A, 3071B of the spacer 3007 and the arc-shaped stepped portions 3035A, 3035B of the lower column 3003 are fitted with each other in an arc shape having the same radius with the tilt center shaft 3032 of the lower column 3003 as a center thereof. Therefore, even when the steering apparatus is vibrated during in transit, because the relative position between the lower column 3003 and vehicle body mounting upper bracket 3002 remains unchanged, there is raised no obstacle to the operation to mount the vehicle body mounting upper bracket 3002 onto the vehicle body 3011.

In the present electric steering apparatus 3101, in order to adjust the tilt position of the steering wheel 3103, the tilting motor 3061 is rotated in either forward or reverse direction. As a result of this, owing to the rotation of the tilting motor 3061, the feed screw shaft 3063 is rotated and the feed nut 3065 is moved linearly.

In linking with this, the tilt drive force transmission projection 3651 formed integral with the feed nut 3065 moves linearly. Because the tilt drive force transmission projection 3651 is engaged with the engaging hole 3066 of the lower column 3003, the lower column 3003, as shown in Figs. 38 (1) and 38 (2), tiltingly moves upward or downward with the tilt center shaft 3032 as a fulcrum thereof At the then time, the arc-shaped stepped portions 3035A and 3035B of the lower column 3003 are oscillated while they are guided by the arc-shaped projecting portions 3071A and 3071B of the spacer 3007, whereby the tilt position adjustment of the lower column 3003 can be carried out smoothly.

According to the embodiment 13 of the invention, as shown in Figs. 36 to 40, where the vertical direction (tilt position adjusting direction) height of the arc-shaped recessed portion 3035 of the lower column 3003 (the height of the contact surface where the inner surface 3074 of the spacer 3007 is contacted with the right side surface 3034 of the lower column 3003) is expressed as h, the stroke of the lower column 3003 on the tilt rising side thereof is expressed as S1, the stroke of the lower column 3003 on the tilt lowering side thereof is expressed as S2, and the distance between the adjusting screws 3008A and 3008B in the vertical direction (tilt position adjusting direction) is expressed as L, there is obtained the following relationship. That is, L > h+S1+S2.

That is, in the tilt rising end of the lower column 3003, the upper adjusting screw 3008A is disposed at a higher position than the upper end 3035C of the contact surface between the inner surface 3074 of the spacer 3007 and the right side surface 3034 of the lower column 3003. Also, in the tilt lowering end of the lower column 3003, the lower adjusting screw 3008B is disposed at a lower position than the lower end 3035D of the contact surface between the inner surface 3074 of the spacer 3007 and the right side surface 3034 of the lower column 3003.

In other words, in Fig. 37, an angle range α, which is defined by connecting together the tilt center shaft 3032 and the centers of the adjusting screws 3008A, 3008B, contains therein an angle range β which is defined by connecting together the upper end 3035C of the contact surface between the spacer 3007 and lower column 3003 in the tilt rising end of the lower column 3003 and the lower end 3035D of the contact surface between the spacer 3007 and lower column 3003 in the tilt lowering end of the lower column 3003.

As shown in Figs. 39 and 40, gravity W due to the mass of the electric steering apparatus 3101 acts downward in the sheet surfaces of Figs. 39 and 40. Also, while a driver is driving a vehicle, when the vehicle takes a curve, as shown in Figs. 39 and 40, centrifugal force F1 acting on the driver is applied in the horizontal direction in the sheet surfaces of Figs. 39 and 40 through the hands of the driver holding the steering wheel 3103; and, the resultant force P of the gravity W and centrifugal force F1 is applied obliquely downward in the present sheet surfaces.

Since the resultant force P always acts between the upper and lower adjusting screws 3008A and 3008B, the shift of the lower column 3003 can be controlled to a small amount, which not only can maintain the steering feeling well but also can minimize the height h of the contact surface of the lower column 3003. This makes it possible to reduce the weight and size of the lower column 3003.

[Embodiment 14]

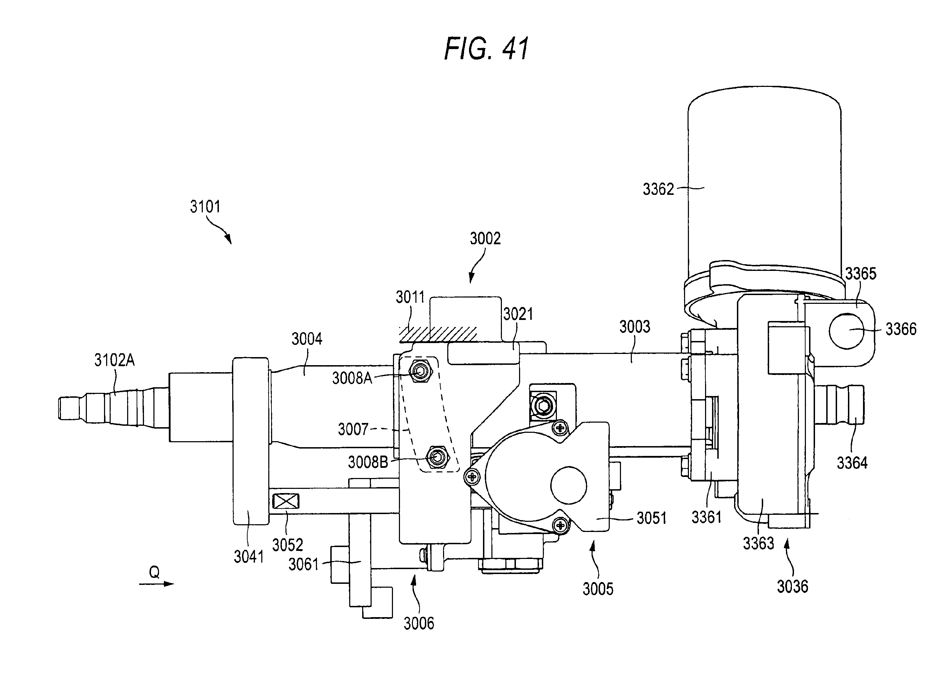

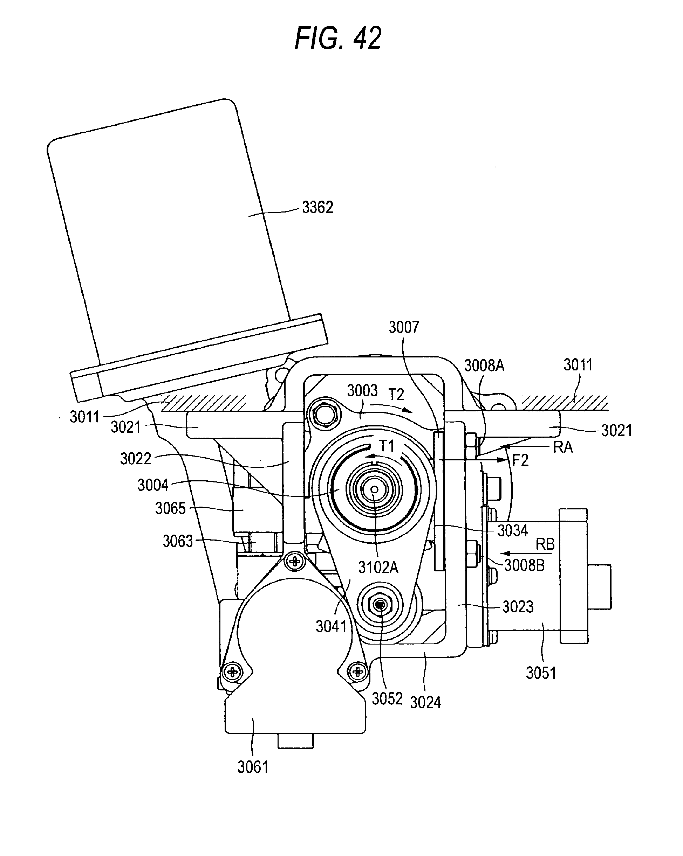

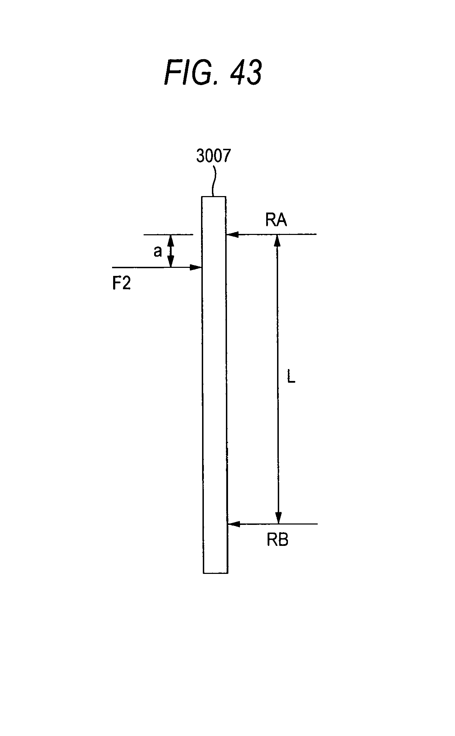

Next, description will be given below of an embodiment 14 according to the invention. Fig. 41 is a front view of the main portions of an electric steering apparatus 3101 according to the embodiment 14 of the invention. Fig. 42 is a view taken along the arrow mark Q shown in Fig. 41. Fig. 43 is an explanatory view of a load to be applied to a spacer according to the embodiment 14 of the invention. In the following description, only the parts different in structure from the above-mentioned embodiment 13 will be described and the duplicate description will be omitted. Also, the same parts will be described while they are given the same designations.

The embodiment 14 shows a case where the invention is applied to a steering apparatus including a steering auxiliary mechanism for applying a given steering auxiliary force to a steering shaft through a reduction mechanism using the drive force of a steering auxiliary motor.

As shown in Figs. 41 to 43, the electric steering apparatus 3101 according to the embodiment 14 of the invention includes a vehicle body mounting upper bracket 3002, a lower column (outer column) 3003, a steering auxiliary portion (an electric assist mechanism) 3036, an upper column (inner column) 3004 and the like.

The vehicle body mounting upper bracket 3002 disposed on the rear side of a vehicle body 3011 includes an upper plate 3021, while the upper plate 3021 is fixed to the vehicle body 3011. To the vehicle body front side (the right side) of the lower column 3003, there is fixed the left end of a housing 3361 for the steering auxiliary portion (the electric assist mechanism) 3036 by pressure insertion. The steering auxiliary portion 3036 includes an electric motor 3362, a reduction gear box portion 3363, an output shaft 3364 and the like. The steering auxiliary portion 3036 is supported on the vehicle body 3011 through a tilt center shaft 3366 by a lower vehicle body mounting bracket 3365 in such a manner that it is capable of tilt position adjustment (can oscillate in a plane parallel to the sheet surface of Fig. 41).

With the inner periphery of the lower column 3003, there is fitted the upper column 3004 in such a manner that it is capable of telescopic position adjustment (it can be slided parallel to the center axis of the lower column 3003). On the upper column 3004, there is rotatably supported an upper steering shaft 3102A and, to the vehicle body rear side (in Fig. 41, the left side) end portion of the upper steering shaft 3102A, there is fixed a steering wheel 3103 (see Fig. 16).

On the lower column 3003, there is rotatably supported a lower steering shaft (not shown), while the lower steering shaft is spline fitted with the upper steering shaft 3102A. Therefore, regardless of the telescopic position of the upper column 3004, the rotation of the upper steering shaft 3102A can be transmitted to the lower steering shaft.

The steering auxiliary portion 3036 can detect torque acting on the lower steering shaft, can drive the electric motor 3362 and rotate the output shaft 3364 with a desired steering auxiliary force, and can connect the rotation of the output shaft 3364 to a steering gear through an intermediate shaft (not shown) connected to the vehicle body front side, thereby being able to change the steering angle of a wheel.

On the upper plate 3021 of the vehicle body mounting upper bracket 3002, there are provided a left side plate 3022 and a right side plate 3023 which are parallel to each other and respectively extend downward from the upper plate 3021. The right and left side surfaces of the lower column 3003 are slidably held by and between the respective inner surfaces of the left and right side plates 3022 and 3023.

Between the right side surface 3034 of the lower column 3003 and the inner surface of the right side plate 3023 of the vehicle body mounting upper bracket 3002, there is inserted a spacer 3007 which has the same structure as in the embodiment 13. Also, the respective lower ends of the left and right side plates 3022 and 3023 are connected together by a lower plate 3024. The upper plate 3021, left side plate 3022, right side plate 3023 and lower plate 3024 cooperate together in forming a rectangular shape, thereby enhancing the rigidity of the vehicle body mounting upper bracket 3002.

On the outer periphery of the lower surface of the lower column 3003, there is mounted a telescopic drive mechanism 3005 which is used to carry out a telescopic position adjustment. Also, downwardly of the left side plate 3022 and right side plate 3023 of the vehicle body mounting upper bracket 3002, there is mounted a tilt drive mechanism 3006 used to carry out a tilt position adjustment.

A worm mounted on the output shaft of a tilting motor 3061 for the tilt drive mechanism 3006 is meshingly engaged with a worm wheel mounted on the lower portion of a feed screw shaft 3063, thereby transmitting the rotation of the tilting motor 3061 to the feed screw shaft 3063.

With a male screw formed on the outer periphery of the feed screw shaft 3063, there is threadedly engaged a feed nut 3065. On the feed nut 3065, there is provided a tilt drive force transmission projection which is formed integrally with the feed nut 3065, while the leading end of the tilt drive force transmission is fitted into an engaging hole formed in the lower column 3003.

As the feed screw shaft 3063 rotates, the feed nut 3065 and tilt drive force transmission projection respectively move linearly in the vertical direction in Figs. 41 and 42. With the tilt center shaft 3366 as a fulcrum, the lower column 3003, in the tilt position adjusting operation, oscillates along an arc-shaped locus (oscillates in a plane parallel of the sheet surface of Fig. 41).

On the outer periphery of the lower surface of the lower column 3003, there is mounted a telescoping motor 3051. To the outer periphery of the lower surface of the lower column 3003, there is fixed a feed screw shaft 3052 parallel to the center axis of the lower column 3003, while the vehicle body rear end (in Fig. 41, the left end) of the feed screw shaft 3052 is coupled to the lower end of a flange 3041 fixed to the vehicle body rear end of the upper column 3004.

The rotation of a worm mounted on the output shaft (not shown) of the telescoping motor 3051 is transmitted to a worm wheel (not shown) to thereby rotate a feed nut (not shown) which is threadedly engaged with the feed screw shaft 3052. With the rotation of the feed nut, the feed screw shaft 3052 reciprocates (moves back and forth in the right and left direction in Fig. 41), thereby adjusting the telescopic position of the upper column 3004.

In the embodiment 14 as well, similarly to the embodiment 13, into the right side plate 3023 of the vehicle body mounting upper bracket 3022, there are screwed two adjusting screws 3008A and 3008B in such a manner that they are spaced from each other in the vertical direction (in the tilt position adjusting direction) in Figs. 41 and 42.

Further, similarly to the embodiment 13, the height of a contact surface, where the inner surface of the spacer 3007 is contacted with the right side surface 3034 of the lower column 3003, is expressed as h, the stroke of the lower column 3003 on the tilt rising side thereof is expressed as S1, the stroke of the lower column 3003 on the tilt lowering side thereof is expressed as S2, and the distance between the adjusting screws 3008A and 3008B in the vertical direction (tilt position adjusting direction) is expressed as L, there is obtained the following relationship.

That is,

$$L > h + S1 + S2.$$

In the electric steering apparatus 3101 according to the embodiment 14, when the electric motor 3362 is driven to apply steering auxiliary torque T1 to the output shaft 3364, torque T2 as the reactive force thereof is applied to the lower column 3003, with the result that a load F2 is applied from the lower column 3003 to the spacer 3007.

As shown in Fig. 43, where the distance between the adjusting screws 3008A and 3008B in the vertical direction (in the tilt position adjusting direction) is expressed as L, the distance between the upper adjusting screw 3008A and load F2 is expressed as a, a reactive force to be applied to the upper adjusting screw 3008A is expressed RA, and a reactive force to be applied to the lower adjusting screw 3008B is expressed as RB, there are obtained the following equation:

$$RA = F2 \cdot (L\text{-}a)/L$$

$$RB = F2 \cdot a/L$$

Thus, the reactive forces RA and RB are both positive.

Therefore, because no clearance is generated between the lower column 3003 and spacer 3007, it is possible to maintain a good steering feeling. Also, because the reactive forces RA and RB are both positive, it is not necessary to apply a large pre-load to the adjusting screws 3008A and 3008B. This not only can reduce the sliding resistance of the tilt sliding portion but also can reduce the weight and size of the reduction gear and tilt drive motor of the tilt drive mechanism.

In the above embodiment, the arc-shaped recessed portion 3035 is formed in the lower column 3003, while the arc-shaped projecting portions 3071A and 3071B are provided on the spacer 3007. However, alternatively, the arc-shaped projecting portions may be provided on the lower column 3003, while the arc-shaped recessed portion may be formed in the spacer 3007. Also, the recessed portion of the lower column 3003 may be omitted; and, only the right side surface 3034 of the lower column 3003 and the inner surface of the spacer 3007 may be contacted with each other, that is, only the flat surfaces may be contacted. Further, the spacer 3007 may not be formed in an arc shape but may be formed in a rectangular shape.

Also, in the above embodiment, the lower column 3003 is formed as an outer column and the upper column 3004 is formed as an inner column. However, the lower column 3003 may also be formed as an inner column and the upper column 3004 may also be formed as an outer column.

Also, in the above embodiment, description has been given of a case in which the invention is applied to a tilt/telescopic type electric steering apparatus which is capable of both tilt position adjustment and telescopic position adjustment. However, the invention may also be applied to a tilt type electric steering apparatus which is capable of only the tilt position adjustment.

Further, in the above embodiment, description has been given of a case where the invention is applied to a structure in which the spacer 3007 is inserted between the right side plate 3023 of the vehicle body mounting upper bracket 3002 and the right side surface 3034 of the lower column 3003. However, the invention is not limited to this structure. For example, the invention may also be applied to a structure in which a spacer is inserted between the left side plate 3022 of the vehicle body mounting upper bracket 3002 and the left side surface 3033 of the lower column 3003; or, a structure in which a spacer is inserted between the right side plate 3023 of the vehicle body mounting upper bracket 3002 and the right side surface 3034 of the lower column 3003 as well as a spacer is inserted between the left side plate 3022 of the vehicle body mounting upper bracket 3002 and the left side surface 3033 of the lower column 3003.

Also, an elastic member such as a disc spring may be inserted between the stepped surfaces, which are formed between the male screws 3081A, 3081B of the adjusting screws 3008A, 3008B, and the outer surface 3073 of the spacer 3007 to thereby press the spacer 3007 against the lower column 3003 elastically. Further, the structure of the embodiment 13 may also be applied to a steering apparatus including the steering auxiliary mechanism according to the embodiment 14.

According to the above embodiments, there can be provided the following steering apparatus.

That is, a steering apparatus comprises: a column; a steering shaft rotatably supported on the column for mounting a steering wheel on the vehicle rear side thereof; a vehicle body mounting lower bracket which supports the lower side of the column on a vehicle body in such a manner that the column lower side can be rotated with a tilt center shaft as a fulcrum thereof; a vehicle body mounting upper bracket which holds the column side surface of the upper side of the column by and between the right and left side plates thereof in such a manner that the column side surface can be tilt slided; a tilting motor; a tilt drive mechanism for adjusting the tilt position of the column using the drive force of the tilting motor; a spacer inserted between one of the right and left side plates and the column side surface; and, adjusting screws respectively provided on the right and left side plates for pressing the spacer toward the column side surface at a position higher than the upper end of a contact surface between the spacer and column side surface in the tilt rising end and at a position lower than the upper end of a contact surface between the spacer and column side surface in the tilt lowering end.

Also, a steering apparatus comprises: a column; a steering shaft rotatably supported on the column for mounting a steering wheel on the vehicle rear side thereof; a vehicle body mounting lower bracket which supports the lower side of the column on a vehicle body in such a manner that the column lower side can be rotated with a tilt center shaft as a fulcrum thereof; a vehicle body mounting upper bracket which holds the column side surface of the upper side of the column by and between the right and left side plates thereof in such a manner that the column side surface can be tilting slided; a tilting motor; a tilt drive mechanism for adjusting the tilt position of the column using the drive force of the tilting motor; a spacer inserted between one of the right and left side plates and the column side surface; and, adjusting screws respectively provided on the tilt rising side and tilt lowering side of the side plate for pressing the spacer toward the column side surface, wherein a range, which is defined by connecting the tilt center shaft and the respective centers of the two adjusting screws, contains therein the upper end of a contact surface between the spacer and column side surface in the tilt rising end and the lower end of a contact surface between the spacer and column side surface in the tilt lowering end.

Also, in the present steering apparatus, the spacer and column side surface respectively may also include a recessed portion and a projecting portion which are respectively formed in an arc-like shape having the same radius with the tilt center shaft of the column as a center thereof and also which can be fitted with each other.

Also, in the present steering apparatus, the spacer may include an arc-shaped projecting portion with the tilt center shaft of the column as a center thereof, and the column side surface may include an arc-shaped recessed portion which can be fitted with the arc-shaped projecting portion.

Also, the present steering apparatus may further include a steering auxiliary motor; and, a steering auxiliary mechanism which applies a given steering auxiliary force to the steering shaft through a reduction mechanism using the drive force of the steering auxiliary motor.

Also, the present steering apparatus may further include a steering auxiliary motor; and, a steering auxiliary mechanism which applies a given steering auxiliary force to the steering shaft through a reduction mechanism using the drive force of the steering auxiliary motor.

Also, the present steering apparatus may further include a steering auxiliary motor; and, a steering auxiliary mechanism which applies a given steering auxiliary force to the steering shaft through a reduction mechanism using the drive force of the steering auxiliary motor.

Also, the present steering apparatus may also be structured such that, in the leading end of the adjusting screw, there is formed a shaft portion having a diameter smaller than the diameter of a male screw formed in the outer periphery of the adjusting screw; and, the shaft portion is fitted into a through hole formed in the spacer, and the spacer can be pressed by a stepped surface formed between the shaft portion and male screw.

Also, the present steering apparatus may also be structured such that, in the leading end of the adjusting screw, there is formed a shaft portion having a diameter smaller than the diameter of a male screw formed in the outer periphery of the adjusting screw; and, the shaft portion is fitted into a through hole formed in the spacer, and the spacer can be pressed by a stepped surface formed between the shaft portion and male screw.

Also, the present steering apparatus may also be structured such that, in the leading end of the adjusting screw, there is formed a shaft portion having a diameter smaller than the diameter of a male screw formed in the outer periphery of the adjusting screw; and, the shaft portion is fitted into a through hole formed in the spacer, and the spacer can be pressed by a stepped surface formed between the shaft portion and male screw.

Although description has been given heretofore in detail with reference to the specific embodiments thereof, it is obvious to a person skilled in the art that various changes and modification are also possible without departing from the spirit and scope of the invention. The present application is based on the following Japanese patent applications and thus the contents thereof are incorporated into the present application as reference.

Japanese Patent Application filed on March 3rd, 2006 (Patent Application 2006-058385)
Japanese Patent Application filed on July 13th, 2006 (Patent Application 2006-193412)
Japanese Patent Application filed on Sept. 21 st, 2006 (Patent Application 2006-255515)
Japanese Patent Application filed on Sept. 29th, 2006 (Patent Application 2006-266467)
Japanese Patent Application filed on Nov. 20th, 2006 (Patent Application 2006-312348)

Industrial Applicability

According to the tilt type electric steering apparatus of the invention, the number of parts and the weight thereof can be reduced, the rigidity of the composing members of a mechanism for oscillating and shifting the steering column thereof can be enhanced sufficiently, and the generation of a strange noise offensive to the ear can be prevented sufficiently.

**Claims**

**1.** A steering apparatus, comprising:

a vehicle body side bracket to be fixed to a vehicle body;
a steering column which rotatably supports a steering shaft on an inside thereof, and is capable of oscillating and shifting about a tilt pivot shaft extending perpendicularly to a direction parallel to or coincident with a center axis of the steering shaft; and
an electric actuator comprising:

a screw shaft or a fixed member supported on one of the vehicle body side bracket and steering column;
a moving member supported on the other of the vehicle body side bracket and steering column; and
an electric motor, wherein
the electric actuator being capable of moving the moving member with respect to the screw shaft or the fixed member by driving the electric motor to thereby oscillate the steering column about the tilt pivot shaft,

wherein the moving member is composed of:

a first element disposed on the steering column side; and
a second element disposed on the vehicle body side bracket side,

a connecting element portion is fixed to one of the first or second element and the steering column or vehicle body side bracket,
the connecting element portion is supported to be rotatable about a rotation center axis, which is parallel to the tilt pivot shaft, with respect to the other of the first or second element and the steering column or vehicle body side bracket, and
the first and second element is capable of being shifted with respect to each other in a direction perpendicular to both of a rotation center axis of the connecting element portion and a longitudinal direction of the screw shaft or fixed member.

2. The steering apparatus as set forth in Claim 1, wherein
the electric actuator comprises:

a screw shaft rotatable by driving the electric motor;
one of the first and second elements is a nut holder;
the other of the first and second elements is a nut member;
the nut holder is supported to be rotatable about the rotation center axis of the connecting element portion with respect to the steering column or vehicle body side bracket and,
the nut member is held in an inside of the nut holder in such a manner that the nut member is allowed to be slid in a direction perpendicular to both of the rotation center axis of the connecting element portion and the longitudinal direction of the screw shaft.

3. The steering apparatus as set forth in Claim 2, wherein
the nut member comprises a cylindrical-shaped outer peripheral surface of which center axis perpendicular to both of the rotation center axis of the connecting element portion and the longitudinal direction of the screw shaft,
a part of the inner surface of the nut holder is formed as a cylindrical-shaped portion having the same center axis as the outer peripheral surface of the nut member, and
the outer peripheral surface of the nut member is slidably engaged with the part of the inner surface of the nut holder in a circumferential direction of the outer peripheral surface.

4. The steering apparatus as set forth in Claim 2, wherein
both end portions of the nut holder are rotatably supported with respect to the steering column.

5. The steering apparatus as set forth in Claim 1, wherein,
a male screw portion is formed on the outer peripheral surface of the screw shaft by rolling process.

6. The steering apparatus as set forth in Claim 1, wherein,
among a pair of surfaces of the first element of the moving member disposed on the steering column side and the second element of the moving member disposed on the vehicle body side bracket side, the pair of the surfaces slidingly contacted with each other, a groove portion for holding grease is formed on at least in one of the surfaces.

7. The steering apparatus as set forth in Claim 1, wherein
right and left side surfaces tilt-slidably held between right and left side plates of the vehicle body mounting bracket mountable on the vehicle body,
the right and left side surfaces are formed such that one of a distance from the center axis of the steering column to the left side tilt sliding surface and the distance from the center axis of the steering column to the right side tilt sliding surface is set longer than the other, and
the steering apparatus comprises a tilt drive mechanism which is engaged with side surface of the steering column more distant from the center axis of the steering column to apply a tilt driving thrust force to the steering column.

8. The steering apparatus as set forth in Claim 1, wherein
a frictional coefficient of the tilt sliding surface less distant from the center axis of the steering column is set smaller than a frictional coefficient of the tilt sliding surface more distant from the center axis of the steering column.

9. The steering apparatus as set forth in Claim 8, wherein,
a spacer is disposed between the side surface of the steering column less distant from the center axis of the steering column and the side plate of the vehicle body mounting bracket, and
at least one of the inner surface of the spacer and the column side surface is coated with a solid lubricant.

10. The steering apparatus as set forth in Claim 9, wherein
the solid lubricant is one of molybdenum disulfide, tetrafluoro-ethylene, graphite, graphite fluoride, boron nitride, tungsten disulfide, and melamine cyanurate.

11. The steering apparatus as set forth in Claim 2, further comprising
an elastic member mounted in a fitting clearance between the nut and nut holder for tightening the outer periphery of the nut with elastic force thereof

12. The steering apparatus as set forth in Claim 11, wherein the elastic member is formed in a ring-like shape having a circular section.

13. The steering apparatus as set forth in Claim 12, wherein the elastic member is made of synthetic rubber or synthetic resin.

14. The steering apparatus as set forth in Claim 1, further comprising:

a vehicle body mounting lower bracket which supports a lower side of the steering column on the vehicle body so as to be pivotable about a tilt center shaft as a fulcrum thereof;
a vehicle body mounting upper bracket which holds an upper side column side surface of the steering column between right and left side plates thereof in a tilt-slidable manner;
a spacer inserted between one of the right and left side plates and the column side surface; and,
adjusting screws respectively provided on the side plates of the upper bracket for pressing the spacer toward the column side surface at a position higher than an upper end of a contact surface between the spacer and column side surface in a tilt rising end of the steering column and at a position lower than a lower end of the contact surface between the spacer and column side surface in a tilt lowering end of the steering column.

15. The steering apparatus as set forth in Claim 1, further comprising:

a vehicle body mounting lower bracket mountable which supports a lower side of the steering column on the vehicle body so as to be pivotable around a tilt center shaft as a fulcrum thereof;
a vehicle body mounting upper bracket which holds
an upper side column side surface of the steering column between right and left side plates thereof in a tilt-slidable manner;
a spacer inserted between one of the right and left side plates and the column side surface; and
adjusting screws respectively provided on a tilt rising end side of the side plates and on a tilt lowering end of the side plates for pressing the spacer toward the column side surface,
wherein a range defined by connecting together the tilt center shaft and the centers of the respective adjusting screws contains therein the upper end of a contact surface between the spacer and column side surface in the tilt rising end of the steering column and the lower end of the contact surface between the spacer and column side surface in the tilt lowering end of the steering column.

16. The steering apparatus as set forth in Claim 14, wherein
the spacer and column side surface respectively comprises a recessed portion and a projecting portion respectively formed in an arc-like shape having the same radius with the tilt center shaft of the column as a center thereof, and
the recessed portion and projecting portion is allowed to engage with each other.

17. The steering apparatus as set forth in Claim 15, wherein
the spacer and column side surface respectively comprises a recessed portion and a projecting portion respectively formed in an arc-like shape having the same radius with the tilt center shaft of the column as a center thereof, and
the recessed portion and projecting portion is allowed to engage with each other.

18. The steering apparatus as set forth in Claim 14, wherein
the adjusting screw comprises a shaft portion, of which diameter is smaller than a male screw formed on an outer periphery of the adjusting screw, in a leading end portion thereof
the shaft portion is fitted into a through hole formed in the spacer and the spacer is pressed by a stepped surface formed between the shaft portion and the male screw.

19. The steering apparatus as set forth in Claim 15, wherein
the adjusting screw comprises a shaft portion, of which diameter is smaller than a male screw formed on an outer periphery of the adjusting screw, in a leading end portion thereof
the shaft portion is fitted into a through hole formed in the spacer and the spacer is pressed by a stepped surface formed between the shaft portion and the

male screw.

FIG. 1

# FIG. 2

# FIG. 3

# FIG. 4

## FIG. 5

# FIG. 6

FIG. 7

EP 1 880 917 A1

# FIG. 8

## FIG. 9

## FIG. 10

# FIG. 11

# FIG. 12

# FIG. 13

# FIG. 14

# FIG. 15

## FIG. 16

EP 1 880 917 A1

## FIG. 17

# FIG. 18

## FIG. 19

FIG. 20

# FIG. 21

# FIG. 22

FIG. 23

# FIG. 24

# FIG. 25

## FIG. 26

FIG. 27 (1)

L1/L2 (D - d)

FIG. 27 (2)

L1/L2 (D - d)

FIG. 28

# FIG. 29

# FIG. 30

## FIG. 31

## FIG. 32

FIG. 33

## FIG. 34

# FIG. 35

## FIG. 36

FIG. 37

FIG. 38 (1)

FIG. 38 (2)

# FIG. 39

## FIG. 40

*FIG. 41*

# FIG. 42

# FIG. 43

## FIG. 44

# FIG. 45

## FIG. 46

## FIG. 47

## FIG. 48

# FIG. 49

# FIG. 50

| **INTERNATIONAL SEARCH REPORT** | International application No. |
| --- | --- |
| | PCT/JP2007/053687 |

A. CLASSIFICATION OF SUBJECT MATTER
*B62D1/18*(2006.01)i

According to International Patent Classification (IPC) or to both national classification and IPC

B. FIELDS SEARCHED

Minimum documentation searched (classification system followed by classification symbols)
B62D1/18

Documentation searched other than minimum documentation to the extent that such documents are included in the fields searched
Jitsuyo Shinan Koho        1922-1996    Jitsuyo Shinan Toroku Koho   1996-2007
Kokai Jitsuyo Shinan Koho   1971-2007    Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | Microfilm of the specification and drawings annexed to the request of Japanese Utility Model Application No. 148549/1988(Laid-open No. 68265/1990) (Koyo Seiko Co., Ltd.), 23 May, 1990 (23.05.90), Page 7, line 7 to page 13, line 15; igs. 1, 2, 7, 8 (Family: none) | 1,2,4,5, 11-13 |
| A | JP 2002-2503 A  (NSK Ltd.), 09 January, 2002 (09.01.02), Par. No. [0025]; Fig. 4 (Family: none) | 1,7 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 May, 2007 (21.05.07) | 29 May, 2007 (29.05.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 880 917 A1**

<table>
<tr><td colspan="2"><b>INTERNATIONAL SEARCH REPORT</b></td><td>International application No.<br>PCT/JP2007/053687</td></tr>
<tr><td colspan="3">C (Continuation).    DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>A</td><td>JP 2006-36043 A  (NSK Ltd.),<br>09 February, 2006 (09.02.06),<br>(Family: none)</td><td>1</td></tr>
<tr><td>A</td><td>JP 2006-36047 A  (NSK Ltd.),<br>09 February, 2006 (09.02.06),<br>(Family: none)</td><td>1</td></tr>
<tr><td>A</td><td>JP 2005-247020 A  (Koyo Seiko Co., Ltd.),<br>15 September, 2005 (15.09.05),<br>(Family: none)</td><td>1</td></tr>
</table>

Form PCT/ISA/210 (continuation of second sheet) (April 2005)

94

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000238647 A
- JP 2002002503 A
- JP 6037172 A